# EUROPEAN PATENT SPECIFICATION

(11) **EP 3 311 669 B1**
(45) Date of publication and mention of the grant of the patent: **10.06.2020**
(21) Application number: 16195145.4
(22) Date of filing: 21.10.2016
(51) Int. Cl.: A01N 63/00, A01P 21/00

(54) **NOVEL PLANT-GROWTH PROMOTING BACTERIA AND THE USE THEREOF**
NEUARTIGE BAKTERIEN ZUR FÖRDERUNG DES PFLANZENWACHSTUMS UND VERWENDUNG DAVON
NOUVELLES BACTÉRIES FAVORISANT LA CROISSANCE VÉGÉTALE ET SON UTILISATION

(43) Date of publication of application: 25.04.2018
(73) Proprietor: DCM De Ceuster Meststoffen NV, 2860 Sint-Katelijne-Waver (BE); Nederlands Instituut voor Ecologie van de Koninklijke Nederlandse Akademie van Wetenschappen (NIOO-KNAW), 6708 PB Wageningen (NL)
(72) Inventor: Cordovez da Cunha, Viviane, 6651 EZ DRUTEN (NL); Hanssen, Inge, 2440 GEEL (BE); De Ceuster, Tom Jozef Justine, 2500 LIER (BE); Carrion-Bravo, Victor Jose, 6701 DK WAGENINGEN (NL); Raaijmakers, Josephus Maria, 3911 GD RHENEN (NL)
(74) Representative: Nollen, Maarten Dirk-Johan

(56) References cited:
- WO-A1-2014/210372
- WO-A1-2016/135700
- WO-A2-2013/016361
- DATABASE WPI 12 August 2015 (2015-08-12) Thomson Scientific, London, GB; AN 2015-59141X XP002768998, "New Microbacterium arborescens LG2 strain used for ptomoting contents of salvianolic acid B and rosmarinic acid in hairy roots of Salvia, is preserved in China center for type culture collection", & CN 104 830 716 A (UNIV ZHEJIANG SCI TECH) 12 August 2015 (2015-08-12)
- MUNUSAMY MADHAIYAN ET AL: "Microbacterium azadirachtae sp.nov., plant-growth-promoting actinobacterium isolated from the rhizoplane of neem seedlings", INTERNATIONAL JOURNAL OF SYSTEMATIC AND EVOLUTIONARY MICROBIOLOGY, vol. 60, 2010, pages 1687-92, XP002768999,
- SANG HYE JI ET AL: "Isolation and chracterization of plat growth promoting endophytic diazotropic bacteria from Korean rice cultivars", MICROBIOLOGICAL RESEARCH, vol. 169, 2014, pages 83-98, XP002769000,

## Description

### FIELD OF THE INVENTION

The present invention relates to bacterial compositions, more specifically to bacteriologically pure bacterial cultures of novel strains of plant growth-promoting bacteria, and inocula comprising the same.

The present invention further relates to the use of certain plant-growth promoting bacteria for producing biostimulant effects on seeds, seedlings & plants, such as improved germination and growth promotion of seedlings and plants.

### BACKGROUND OF THE INVENTION

Plant growth-growth promoting bacteria (PGPB) are associated with many, if not all, plant species and are commonly present in many environments. The most widely studied group of PGPB is plant growth-promoting rhizobacteria (PGPR), which colonize the root surfaces and the closely adhering soil interface, the rhizosphere. Inside the rhizosphere is a zone where bacteria, fungi and other organisms compete for nutrients and for binding to the root structures of the plant. Both detrimental and beneficial bacteria can occupy plant roots. The presence of PGPB within or near these roots or seeds can lead to a healthier rhizosphere environment and healthier plants. The free living bacteria are deemed to promote plant growth in agricultural crops and lead to increased growth and yield at harvest. The bacteria that colonize the roots and maintain their benefits throughout the growth cycle of the plant are especially desired for application during early growth or as a seed coating agent to agricultural crops.

The mechanisms that PGPB use in promoting seed germination, seedling and plant growth, are diverse and often plant- or cultivar-specific. Several growth-promoting mechanisms are known. These mechanisms involve supplying the plant with nutrients through e.g. phosphate solubilisation and transport towards the roots and atmospheric nitrogen fixation, or synthesizing phytohormones. As an additional advantage, PGPB can also lead to extensive remodelling of the plant root systems. One of the mechanisms is the excretion of volatile organic compounds (VOCs). Ryu et al. (2003) discloses that bacterial volatiles promote growth in *Arabidopsis.* The studied bacteria were of *Bacillus* species, and the VOCs were 2,3-butanediol and 3-hydroxy-butanone.

However, up to date, the majority of seed germination and seedling and plant growth-promoting effects by VOC-producing bacteria have been demonstrated *in vitro* on nutrient-rich media in sealed petri dishes. Blom et al. (2011) report that production of plant growth modulating volatiles is widespread among rhizosphere bacteria and strongly depends on culture conditions. Cordovez et al. (2015) report on the diversity and functions of VOCs that are produced by *Streptomyces* bacteria originating from a disease-suppressive soil. Hernández-Léon et al. (2015) disclose a characterization of the plant growth-promoting effects of diffusible and VOCs produced by *Pseudomonas fluorescens* strains. All these studies are based on *in vitro* experiments, where the entire plant (roots and shoots) are exposed to the volatiles. Little is known so far on the potential of VOCs in agriculture and in horticulture. It is also not known whether exposure to roots or rather shoot is required for growth-promoting effects.

Various sources moreover mention the application of bacteria from the genus of *Microbacterium* for different purposes. WO2013/016361A2) relates to compositions and methods for controlling head blight disease. CN104830716A mentions a specific *Microbacterium* strain for promoting content of salvianolic acid B and rosmarinic acid in roots of Salvia and for the promotion of weight gain in hairy roots. Madhayian et al, Int J. of Systematic and Evolutionary Microbiology, 60(2010), 1687-1692, discloses a new type of *Microbacterium* bacteria. A gnotobiotic growth pouches assay was carried out. Herein, it was found that the root length of treated tomato and canola seeds were comparatively greater than uninoculated control. Sang Hye Ji et al, Microbiol. Research, 169(2014), 83-98, discloses a variety of bacteria from Korean rice cultivars for plant growth promotion including some the *Microbacterium* bacteria (SW521-L21). WO2014/210372A1 relates to the use of seed-origin endophyte populations. *Microbacterium* bacteria are among the bacteria that have been screened for 10 different effects. WO2016/135700A1 relates to a composition of several bacteria and its use for biodegradation and plant growth. Example 10 is an experiment on tomato with a microbial consortium A1006 that is specified in the application (page 8). The consortium includes more than 20 different types of bacteria, including *Microbacterium* bacteria, and the application does not exclude that further bacteria are present therein.

### SUMMARY OF THE INVENTION

It is therefore an object of the present invention to provide a method for biostimulating seeds, seedlings and plants by using certain bacterial cultures and/or inoculums, so as to stimulate seed germination, seedling and/or plant growth via the production of VOCs, without the need of direct contact of the bacteria with the seed, seedling or plant and without the need for seed, seedling or plant colonization.

It is a further object to provide a bacterial composition comprising PGPB, which composition comprises one or more of these novel groups of PGPB within the genus *Microbacterium* that produce VOCs..

It is a further object to stimulate seed germination, or seedling and/or plant growth by use of certain bacterial cultures and/or inocula in certain plants and crops, such as those of the *Solanaceae* family, the *Asteraceae* family and/or the *Brassicaceae* family. Within the *Solanaceae* family the use on plants of the *Solanum* and the *Capsicum* genera are preferred. Most preferred is the use on plants of the *Solanum* genus, also known as *Solanoideae,* including potato, tomato and eggplant. Tomato plants are of particular interest. Within the *Asteraceae* family, the use on plants of the *Cichorioideae* subfamily, and particularly the *Cichorieae* tribe, also known as *Lactuceae* tribe, is preferred. Well known members thereof include lettuce, chicory, dandelion and salsify. Within the *Brassicaceae* family, relevant members are cabbage, broccoli, cauliflower and the model plant *Arabidopsis thaliana.*

According to a first aspect, the invention relates to bacterial compositions comprising at least one *Microbacterium* strain, said composition having a plant-growth promoting effect upon administration to seeds, seedlings and plants, wherein the *Microbacterium* strain is chosen from the strains EC6, EC8, EC19, W283, EC6, W211, W219, W236, W269, or any other strain with a genetic correspondence with *Microbacterium* sp. EC8 as based on 16S rRNA gene of at least 96%..

According to a second aspect, the invention relates to the use of a bacterial composition comprising at least one strain from the *Microbacterium* genus, for producing biostimulant effects in seeds, seedlings and/or plants, comprising the step of priming the seeds, or the seedling or plant, wherein the bacterial composition of the invention is used and the priming of the seeds, seedling or plants occurs by seed, root or root primordia exposure, without the need of direct contact of the bacteria with the seed, seedling or plant respectively and without seed, seedling or plant colonization.

According to again a further aspect the invention relates to the use of a bacterial composition comprising PGPB from the *Microbacterium* genus of the invention by exposure of seeds or roots of a seedling or plant of the *Solanum* genus of the *Solanaceae* family for producing biostimulant effects in the seeds, seedlings or plants, and particularly of tomato.

It has been surprisingly found in experiments leading to the present invention, that after exposing without direct contact the seeds or roots of the seedlings or plants to bacteria of the *Microbacterium* genus, durable and measurable enhanced growth were observed, also when the seedlings or plants were no longer exposed to the bacterial composition. This priming effect more particularly resulted in an improved germination rate, faster germination and/or growth promotion of the shoot and/or roots. This new approach is suitable not only for seed germination, or seedlings or plants grown *in vitro* but also for seeds, seedlings and plants in a soil matrix or other seed germinating medium or growth medium or substrate. While the initial experiments indicate specifically significant effects on the growth of root biomass and shoot biomass, it is not excluded that other stimulating effects may be obtained, such as a an increased resistance to abiotic stress of plants, and a quicker growth and/or higher resistance to abiotic stress within a predefined period, especially the phase of seedlings. In view thereof, the term 'biostimulant effects' is used in the present application.

According to the second aspect of the invention, the priming is carried out without the need of direct contact of the bacteria with the seeds, seedlings or plants respectively and without the need for seed, seedling and/or plant colonization. Thus, the priming is carried out in conditions such that direct contact and/or colonization is not necessary or required. There is thus no need to choose a soil matrix or other seed germinating medium or growth medium or substrate such that the bacteria will predominantly move to the seeds or roots or other portions of the seedlings or plants. There is no need to use a very high density of bacteria around the seeds or the roots of the seedlings or plants to induce priming. Similarly, it is not necessary that bacteria maintain very high density around the seeds or the roots of the seedlings or plants after the first priming. Rather, the bacteria may even be present in a different medium than the seeds, seedlings or plants respectively, as long as the VOCs excreted by the bacteria can reach the seeds, seedlings or plants. Additionally, the exposure period may be reduced. Also, the priming may be repeated at a later stage of seedling or plant development.

The priming effect was shown to be due to the VOCs produced by the *Microbacterium* strains. From initial experiments with the model plant *Arabidopsis thaliana,* it appears that the VOCs operate by means of up-regulating and down-regulating certain genes, and more particularly those involved in sulphur and nitrogen metabolism and transport. A variety of sulphur-containing organic compounds were identified as being comprised in the VOCs. The importance of this priming effect is first of all that no contact or colonization of the seeds, seedlings or plants is required. Hence, no direct contact with the seeds or roots is needed for the priming effect in accordance with the invention, but the effect is at least obtained via the production of VOCs. This is different than in the prior art that relies on efficient and sustained rhizosphere and/or root colonization for seed, seedling and plant stimulation.

The priming may be carried out in various ways. A first promising approach is priming by seed exposure, for instance before or after they are sown. Alternatively or additionally, the priming may be carried out by root or root primordia exposure of seedlings. Suitably, the seedlings have an age of 0-14 days upon priming. Preferably priming starts at a time between 4 and 10 days after the start of sowing seeds, more particularly at a time between 5 and 8 days. In a further embodiment, the priming is carried out by root or root primordia exposure of adult plants, i.e. plants that have grown beyond the stage of seedlings.

When priming is carried out by root exposure, the bacterial composition can be added to the soil, growth matrix or substrate, thus in a form of inoculation of the growth medium used, i.e. soil, growth matrix or substrate. This may occur upon sowing, or seedling or plant transfer, or at any suitable moment after sowing and after seedling or plant transfer, for instance a period between 2 and 7 days after seedling or plant transfer. For the avoidance of doubt, the term 'priming' herein refers to the act of adding the bacterial composition to seeds, seedlings or plants, to a medium where the seeds, seedlings or plants have been placed, or to a separate medium from the ones of seeds, seedlings or plants have been placed, at conditions wherein the relevant bacteria may grow, produce VOCs and that the produced VOCs can reach the seeds, seedlings or plants. Typically, this coincides with the addition itself. Alternatively, the act of priming may be embodied by changing conditions such that the bacteria start producing VOCs. For instance, such change in conditions may be achieved by transfer seed, seedling or plant from a storage environment to a growth environment, more particularly at or above room temperature and in light. The temperature may for instance be in the range of 20 to 40°C, more particularly 25 to about 37°C. Suitably, such growth environment is a growth chamber or a greenhouse.

In a preferred implementation, the inoculation of the growth medium is repeated, for instance at a time of 1 day-two weeks, preferably after about 1 week, for instance after 5, 6, 7 or 8 days, to further promote seedling or plant growth. This has been found to provide good results, both for lettuce and tomato plants, resulting in additional weight of the shoot. Inoculation can be also repeated or solely performed after transfer of the seedlings or plants, for instance vegetatively produced plants or micro-propagated plants, into a new growth medium. A single repetition is deemed preferable, though more frequent repetitions are not excluded.

After the priming act, i.e. the exposure of VOCs from the bacterial composition, the seed, seedling and/or plant may be exposed to the VOCs of the bacterial composition during an exposure period. In one embodiment, the exposure period may extend up to harvesting or during the whole cropping/exploitation cycle or whole life cycle of the plant, assuming that the bacteria will survive. In an alternative, preferred embodiment, the exposure period is limited to any suitable period of 1 hour to 7 days, for instance 1-5 days, such as 3-4 days. One advantage of limiting the exposure period is that it may not require environmental introduction of the bacterial strain. The priming is thereto particularly carried out before transplanting seedlings or plants (such as vegetatively multiplied and micro-propagated plants) to a soil environment, including natural soils, and artificial soil media such as rockwool, or any liquid or solid growth substrate. For the avoidance of doubt, an exposure period may be terminated by either removal of the seed, seedling or plant from being exposed to the VOCs of the bacteria by removing the seed, seedling or plant from the germinating or growth medium in which the bacteria have been inoculated for instance, or removal of the bacterium. The latter may be particularly carried out, when the bacterial composition is added to a domain separated from the germinating or growth medium of the seed, seedling or plant, or contained in its own container but with the ability that any produced VOC is transmitted to the seed, seedlings or plant, for instance to the roots of the seedling or plant.

According to a promising embodiment, the plant is obtained from vegetative multiplication or micro-propagation, suitably *in vitro* or semi-*in vitro* micro-propagation as known per se, including by cutting and layering processes. In this embodiment, priming is suitably carried out by adding the bacterial composition to the growth medium (more particularly substrate) and by root or root primordia exposure of plants that are vegetatively multiplied or micro-propagated during regeneration stage, during rooting stage, during transfer to a new substrate or at hardening stage for instance. The advantage herein is that the selection of plants that very positively react on the VOCs and/or the bacterial composition.

Particularly, in one embodiment, the seed, seedling or plant is exposed to the *Microbacterium* strain(s) in any type of liquid or solid formulation and thereafter transferred or transplanted to a growth medium. The seed, seedling or plant is exposed to the *Microbacterium* bacteria in a period of 0-14 days after sowing or after plants obtained from vegetative multiplication or micro-propagation are transferred in a new growth medium.

In a preferred embodiment, the bacterial composition is applied to the growth medium (i.e. soil, growth matrix, or substrate or) with a density of the bacteria from the *Microbacterium* genus of 5.10³-5.10⁷ cells/gram growth medium, preferably 5.10⁵-5.10⁶ cells/gram growth medium. This relatively low concentration turns out feasible and effective. It is believed that the surprisingly good results are due to the fact that no colonization is needed. Such densities were also used for the growth stimulation of tomato plants. When the growth medium is a soil, the relevant portion of the soil is a top layer of 10cm.

Furthermore, it was found that the germination rate was increased, in the sense that the percentage of germinated seeds at one week after germination, had increased relative to control, particularly to a percentage above 50% and even above 70%. The difference in germination was reduced after 17 days. Notwithstanding this difference, the observed earlier germination leads thereto that the average shoot size is increased at a predefined moment of evaluation and/or that the duration of germination up to seedlings may be reduced, for instance from 15-20 days to 10 days, i.e. with at least 20% and preferably up to 50% relatively to control. This effect was especially observed for plants of the *Solanum* genus, and more particularly tomato.

Given the surprisingly good results observed with the use of the *Microbacterium* bacteria for stimulation of seeds, seedlings and plants of tomato, it cannot be excluded that the biostimulant effect is also or even primarily due to other mechanisms than priming effects in tomato and in plants related to tomato, particularly of the *Solanum* genus. The biostimulant effect was obtained also upon the use of relatively low densities of bacteria, as specified hereinabove. The biostimulant effect was for instance observed as a significant shoot increase in seedlings, particularly in a period between seeding and two or three weeks thereafter. The effect was particularly significant in a comparison with other plants such as lettuce. The biostimulant effect was also seen in the increased germination rate and/or in an increase in root biomass in seedlings. In one embodiment, use is made of strains isolated from the endosphere rather than the rhizosphere.

The PGPB of the bacterial compositions of the invention may be present as a formulation of a biologically pure strain. Alternatively, two or more strains may be present. In addition to one or more biologically pure bacterial strains, a bacterial composition or formulation may suitably also comprises an acceptable carrier depending on the targeted seeds, seedling or plants and where they are placed to germinate, regenerate, harden or grow for instance. The carrier can include, but is not limited to, a bacterial growth medium, a dispersant, a surfactant, an additive, water, a thickener, an anti-caking agent, residue breakdown, a composting formulation, a granular application, diatomaceous earth, an oil, a coloring agent, a stabilizer, a preservative or a combination thereof. One of ordinary skill in the art can readily determine the appropriate carrier, if any, to be used taking into consideration factors such as a seed, seedling or plant to which the bacterial composition is to be applied, type of soil, growth matrix or substrate (germination and/or growth), climate conditions, whether the bacterial composition is in liquid, solid or powder form, and the like.

Any acceptable carrier can be used. Such carriers include, but are not limited to, vermiculite, charcoal, sugar factory carbonation press mud, rice husk, carboxymethyl cellulose, peat, perlite, fine sand, calcium carbonate, flour, alum, a starch, talc, polyvinyl pyrrolidone or a combination thereof.

The additive can comprise, but is not limited to, an oil, a gum, a resin, a clay, a polyoxyethylene glycol, a terpene, a viscid organic, a fatty acid ester, a sulphated alcohol, an alkyl sulfonate, a petroleum sulfonate, an alcohol sulphate, a sodium alkyl butane diamate, a polyester of sodium thiobutant dioctate, a benzene acetonitrile derivative, a proteinaceous material or a combination thereof. The proteinaceous material can include a milk product, wheat flour, soybean meal, blood, albumin, gelatine or a combination thereof.

The thickener can comprise, but is not limited to, a long chain alkylsulfonate of polyethylene glycol, polyoxyethylene oleate , polysaccharides or a combination thereof. The surfactant, which can also be of biological origin, can contain, but is not limited to, a heavy petroleum oil, a heavy petroleum distillate, a polyol fatty acid ester, a polyethoxylated fatty acid ester, an aryl alkyl polyoxyethylene glycol, an alkyl amine acetate, an alkyl aryl sulfonate, a polyhydric alcohol, an alkyl phosphate or a combination thereof. The anti-caking agent can include, but is not limited to, a sodium salt such as a sodium sulphite, a sodium sulphate, a sodium salt of monomethyl naphthalene sulfonate, a sodium salt of dimethyl naphthalene sulphate or a combination thereof. The anti-caking agent may further or alternatively contain, but is not limited to, a calcium salt, such as calcium carbonate, diatomaceous earth or a combination thereof.

The bacterial composition can be prepared as solid, liquid, gel or powdered formulation as is known in the art. It can for instance be formulated as a liquid formulation for application to plants or to a plant growth medium or a solid formulation for application to plants or to a plant growth medium. When the bacterial composition is prepared as a liquid formulation for application to plants or to a plant growth medium, it can be prepared in a concentrated formulation or a working form formulation. When the bacterial composition is present as a solid formulation, it can be prepared as a granular formulation, or as capsules or beads. The bacterial composition may further include agrochemicals, bio-active substances or other microorganisms such as a fertilizer, a micronutrient fertilizer material, an insecticide, a herbicide, a plant growth amendment, a fungicide, a molluscicide, an aligcide, a bacterial (bacteria different from those of the *Microbacterium* genus) or fungal inoculant or a combination thereof. Suitably, the bacterial composition is provided in concentrated form and may be diluted and mixed with further ingredients prior to its use, for instance when applied to a plant growth medium.

Within the genus of *Microbacterium,* several clades can be distinguished on the basis of an analysis of the 16S rRNA gene. It was observed in preliminary experiments that *Microbacterium* strain from the clades 1, 2 and 3 have particularly good plant growth promotion properties obtained by means of priming. The results for strains from clades 1 and 3, and especially from clade 3 were deemed excellent. The clades may be distinguished on the basis of the presence of certain strings within the full sequence.

Suitable examples of *Microbacterium* strain from clade 1 include: *Microbacterium* sp. W211, *Microbacterium* sp. W219, *Microbacterium* sp. W269, *Microbacterium* sp. W236, *Microbacterium* sp. EC1, *Microbacterium* sp. EC6, *Microbacterium oxydans* EU714375.1, *Microbacterium* sp. EU573118.1, *Microbacterium* sp._ EU535323.1, *Microbacterium* sp. EU538879.1, *Microbacterium maritypicum* EU434520.1, *Microbacterium* sp. EU373435.1, *Microbacterium* sp. EU333866.1, *Microbacterium* sp. DQ814695.1, *Microbacterium* sp. EU073962.2, *Microbacterium* sp. AM403655.1, *Microbacterium* sp. DQ304806.1, *Microbacterium arabinogalactanolyticum* AY509224.1, *Microbacterium* sp. AY038632.1, *Microbacterium* sp. DQ337545.1, *Microbacterium* sp. AF388031.1, *Microbacterium* sp. AY038630.1, *Microbacterium esteraromaticum* Y17231.1, *Microbacterium maritypicum* AJ853910.1, *Microbacterium arabinogalactanolyticum* Y17228.1, *Microbacterium paraoxydans* AJ491806.1, *Microbacterium testaceum* X77445.1.

Suitable examples of *Microbacterium* strain from clade 2 include: *Microbacterium* sp. W204, *Microbacterium* sp. W259, *Microbacterium* sp. W261, *Microbacterium* sp. EC24, *Microbacterium trichotecenolyticum* EU240437.1, *Microbacterium oleivorans* EU164543.1, *Microbacterium* sp. DQ824628.1, *Microbacterium* sp. DQ985071.1, *Microbacterium* sp. AY395034.1, *Microbacterium* sp. AJ244677.2, *Microbacterium trichotecenolyticum* AB167383.1, *Microbacterium* sp. AF538744.1, *Microbacterium aurum* AB007418.1, *Microbacterium gubbeenense* AF263565.1, *Microbacterium* sp. AB023370, *Microbacterium hydrothermale* HM222660.1, *Microbacterium oleivorans* AJ698725.1, *Microbacterium marinum* HQ622524.3, *Microbacterium trichotecenolyticum* AB004722.1, *Microbacterium kribbense* EF466125.1.

Suitable examples of *Microbacterium* strain from clade 3 include: *Microbacterium* sp. W283, *Microbacterium* sp. EC19, *Microbacterium* sp. EC8, *Microbacterium* sp. AY635877.1, *Microbacterium* sp. DQ279383.1, *Microbacterium natoriense* AY566291.1, *Microbacterium aerolatum* AJ309929.1.

Suitable examples of *Microbacterium* strain from clade 4 include: *Microbacterium* sp. W292, *Microbacterium* sp. EC21, *Microbacterium* sp. AM292071.1, *Microbacterium* sp. AB248875.1, *Microbacterium* sp. AB002637.1, *Microbacterium terregens* AB004721.1, *Microbacterium lacticum* X77441.1, *Microbacterium schleiferi* Y17237.1.

Suitable examples of *Microbacterium* strain from clade 5 include: *Microbacterium* sp. W154, *Microbacterium* sp. W163, *Microbacterium* sp. W186, *Microbacterium* sp. W200, *Microbacterium* sp. W229, *Microbacterium* sp. W230, *Microbacterium* sp. W232, *Microbacterium* sp. W240, *Microbacterium* sp. W242, *Microbacterium* sp. W251, *Microbacterium* sp. W267, *Microbacterium koreense* EU834282.1, *Microbacterium* sp. FJ204435.1, *Microbacterium* sp. AJ576398.1, *Microbacterium* sp. FJ204467.1, *Microbacterium* sp. AJ575543.1, *Microbacterium ginsengisoli* AB271048.1, *Microbacterium invictum* AM949677.1.

The 16S rRNA sequences are added to this application.

The specified examples may all be used for growth promotion of plants, and particularly by means of exposure of seeds or roots of a seedling or plant of the *Solanum* genus of the *Solanaceae* family for producing biostimulant effects in the seeds, seedlings or plants, and particularly of tomato.

Preferably, use is made of a *Microbacterium* strain that has been isolated as described hereinafter and identified as *Microbacterium* sp. W283, *Microbacterium* sp. EC19, *Microbacterium* sp. EC8,, *Microbacterium* sp. W211, *Microbacterium* sp. W219, *Microbacterium* sp. W269, *Microbacterium* sp. W236, *Microbacterium* sp. EC1, *Microbacterium* sp. EC6. All these strains were isolated from a single source and show major identity in the 16S rRNA gene. Particularly, the gene is much shorter than for the other strains, i.e. other strains have more strings both in advance and after the strings substantially corresponding to those of the new strains. Based on the findings in preliminary experiments for representative examples of the new strains and the genetic correspondence, it is expected that the effects found for the investigated strains also apply to other strains with a resembling genetic identity, for instance with a genetic correspondence based on the 16S rRNA gene of at least 96% as based on multi-sequence alignment found by means of sequence alignment tools, such as for instance those available from EMBL-EBI of Hinxton, Cambridgeshire, UK and available on www.ebi.ac.uk/Tools/msa, more particularly the T-Coffee MSA tool. Preferably, said genetic correspondence is at least 97% or even at least 98%.

### BRIEF INTRODUCTION OF THE FIGURES

These and other aspects of the invention will be further elucidated with reference to the following Figures, wherein:
Fig. 1A-C shows the plant shoot and root biomass determined 12, 10 and 7 days after exposure to *Microbacterium* sp. EC8 for *Arabidopsis thaliana,* tomato and lettuce seedlings, respectively;
Figs. 2A-2D shows results for experiments wherein plants were first primed by exposure to *Microbacterium* sp. EC8 and thereafter transplanted to soil. Fig. 2A-C relate to *Arabidopsis thaliana* and show the shoot dry weight (in mg), the flower dry weight (in cm) and the number of flowers respectively. Fig. 2D relates to lettuce and shows the shoot dry weight (in mg).

### EXAMPLES

### Example 1: Isolation of Microbacterium from the rhizosphere

*Microbacterium* strains were obtained from the rhizosphere (roots with adhering soil) of sugar beet plants (*Beta vulgaris* cv. Aligator). The soil was previously collected in 2003 and 2004 from an agricultural sugar beet field close to the town of Hoeven, the Netherlands (51°35'10"N 4°34'44"E). For the collection of Actinobacteria including *Microbacterium* from the rhizosphere, sugar beet seeds (cultivar Alligator) were sown in square PVC pots containing 250g of field soil with an initial moisture content of 10% (v/w). Plants were grown in a growth chamber (24°C; 180µmol.m⁻².s⁻¹ at plant level during 16h/d; 70% relative humidity) and watered weekly with standard Hoagland solution (macronutrients only). After 3 weeks of plant growth, 1g of sugar beet roots with adhering soil was suspended in 5ml of potassium-phosphate buffer (pH7.0). Samples were vortexed and sonicated for 1min. To enrich for different genera of *Actinobacteria,* a number of treatments were applied to the soil suspension. The treatments included pre-treatments and incubation in a medium. Pre-treatments included submission to 6% yeast extract (30°C during 120min.), rehydration (30°C, 90min) after centrifugation, submission to 1.5% phenol (30°C, 30min.) and wet-heating (70°C, 15min). The media included nystatin, nalidixic acid, trimethoprim and/or delvocid. One pre-treatment was applied. The treatments were based on literature. More details can be found in Cordovez et al. (2015), Supplementary Table S1. Single colonies were picked based on the morphology and purified on fresh agar plates. Strains were stored in glycerol (20%,v/v) at -20 and -80°C.

### Example 2: Isolation of Microbacterium endophytes

An additional isolation method was used to isolate *Microbacterium* endophytes. For that, roots of sugar beet seedlings were rinsed with 10ml of 10mM MgSO4.7H2O (hereafter: buffer) to remove the rhizospheric soil and washed three times with buffer supplemented with 0.01% Tween 20 (v/v). Subsequently, roots were immersed for 2min. under slow agitation in 1% (v/v) sodium hypochlorite solution supplemented with 0.01% (v/v) Tween 20 and then rinsed five times with buffer. To confirm that the roots were sterile, surface-sterilized roots were spread on Luria-Bertani (LB; Oxoid Thermo Scientific, Lenexa, USA) and 1/10th strength Tryptic Soy Agar (1/10th TSA; Difco, BD Laboratories, Houston, USA) agar plates. In addition, 100µl of the last rinsing step were also plated. To separate plant from microbial cells, root tissue in buffer was disrupted using a blender. The homogenate was filtered consecutively through 25µm and 10µm-mesh cheesecloth to remove plant tissue. The flow through was further cleaned by centrifugation at 500 X g for 10min. Bacterial cells were collected by centrifuging the supernatant at 9500rpm for 15min. The pellet, consisting of endophytic microorganisms and plant material, was suspended in 3.5ml buffer supplemented with Nycodenz® resin (PROGEN Biotechnik, Germany) to a final concentration of 50% (w/v). A Nycodenz density gradient was mounted above the sample by slowly depositing various layers of Nycodenz (3ml of 35% Nycodenz, 2ml of 20% Nycodenz, 2ml of 10% Nycodenz) and the gradient was centrifuged for 45min. at 8500rpm (Sorvall HB-6). Endophytic microbiome, visualized as a whitish band, was recovered by pipetting. The recovered cells were washed five times with buffer and centrifuged at 13000rpm for 5min. in order to remove the Nycodenz resin. Finally, bacterial cells were suspended in 500µl of buffer, recovered by quick centrifugation at 16000 X g. Samples were frozen in liquid nitrogen and stored at -80°C. For the isolation of single cells, 100µl were plated on 1/10th TSA medium.

### Example 3: Phylogeny of Microbacterium

For the phylogenetic characterization and functional analyses, a total of 26 strains (20 from rhizosphere and 6 from endosphere) were selected. Strains were characterized by 16S rRNA gene sequencing. PCR amplifications were conducted using primers 8F (5'-AGAGTTTGATCCTGGCTCAG - 3') and 1392R (5'- ACGGGCGGTGTGTACA - 3') or 27F (5'- GAGTTTGATCCTGGCTCAG - 3') and 1492R (5'- ACCTTGTTACGACGACTT- 3'). For obtaining DNA, cell suspensions were prepared in TE buffer and centrifuged at 13000rpm for 10min. After centrifugation, 2µl of the supernatants were used for the PCR reactions. PCR products were purified and sequenced at Macrogen Inc. Strains were characterized based on sequence identity with 16S rRNA gene sequences in the Greengenes database (http://greengenes.lbl.gov/) (McDonald et al., 2012).

The 16S rRNA gene sequences of the 26 *Microbacterium* strains were compared with the 16S rRNA gene sequences of *Microbacterium* OTUs previously identified by PhyloChip-based metagenomic analysis (the top 10% of most abundant taxa associated with disease suppressiveness) and *Microbacterium* type strains (Mendes et al., 2011; Cordovez et al., 2015). Table 1 shows a subdivision of the *Microbacterium* genus into 5 clades. The clades are based on phylogenetic analysis using partial sequences of 16S rRNA gene, resulted from alignment of 665 sites, was performed with Muscle (Edgar, 2004) in MEGA6 (Tamura et al., 2013) and visualized with iTOL (Letunic & Bork, 2011; Letunic & Bork, 2016) (http://itol.embl.de/). A Neighbor-joining consensus tree (Saitou & Nei, 1987) was constructed using Tamura-Nei model (Tamura & Nei, 1993) with the optimal model parameters and the option of complete deletion of gaps and gamma distribution. Confidence levels for the branching points were determined using 1000 bootstrap replicates (Felsenstein, 1985).

Subsequent analysis of the 16S rRNA sequences from these 26 strains together with strains previously detected in the sugar beet rhizosphere by PhyloChip (n = 40) and type strains (n = 17), showed that the rhizospheric and endospheric strains (n = 26) were phylogenetically diverse.

Analysis was further carried out with the T-Coffee multiple sequence analysis tool available on the website www.ebi.ac.uk/tools/msa. Table 1 shows the genetic correspondence level for several clades and subgroups identified therein. The results were derived from the percent identity matrix available in the tool (under summary results).

**Table 1 - Identity results obtained for clades and other subgroups**

| No | Subgroup | Identity level for all members (new strains and strains from database) | Identity level for new strains |
|---|---|---|---|
| 1 | Clade 1 | 96.1% and higher | 96.5% and higher |
| 2 | Clade 2 | 93.2% and higher | 97.6% and higher |
| 3 | Clade 3 | 96.0% and higher | 98.5% and higher (3 strains) |
| 4 | Clade 4 | 96.4% and higher | 99.9% (2 strains) |
| 5 | Clade 5 | 93.6% and higher | 97.8% and higher |
| 6 | Clade 1-3 | - | 96.3% and higher, most above 97% |
| 7 | Strains used in screening test (table 2) | - | 93.9% and higher |
| 8 | Strains used in screening test without W163 (table 2) | - | 96.4% and higher |
| 9 | All strains | - | 93.8% and higher |

These results demonstrate that there is a high genetic correspondence within the clades and also for the new strains. Comparison of the results from entry 8 and 6 shows that the identity level within the tested strains of clade 1-3 was the same as that of all new strains within this clade. This is an indication that the screening results in Table 2 are representative and that similar results can be expected from the other strains within these clades.

Any bacteria that would have a genetic structure wherein the 16S rRNA corresponds to at least 96%, or preferably at least 97%, at least 98% or at least 99% can thus be expected to give same or similar biostimulant effects.

### Example 4: Preliminary evaluation of plant growth promotion

To test for plant growth-promotion, 7-day-old *Arabidopsis thaliana* seedlings were exposed to the VOCs emitted by 8 of the *Microbacterium* strains (EC6, W211, W236, W269, W204, EC8, W283 and W163). A. *thaliana* seedlings Col-0 (collection of the Department of Phytopathology at Wageningen University, the Netherlands) were exposed to the VOCs from the different strains. Seeds were surface sterilized as described in van de Mortel et al. (2012) and kept in the dark at 4°C for 3-4 days. Sterile A. *thaliana* seeds sown on Petri dishes (Ø90mm) containing 25ml of 0.5X Murashige and Skoog medium (Murashige & Skoog, 1962) supplemented with 0.5% (w/v) sucrose. Petri dishes were placed inside a larger Petri dish (Ø145mm), sealed and incubated in a climate cabinet (21°C; 180µmol.m⁻².s⁻¹ at plant level; 16h/d; 60-70% relative humidity). After 7 days, seedlings were exposed to the VOCs emitted by the *Microbacterium* strains. For that, Petri dishes (Ø 35mm) containing *Microbacterium* cultures, previously incubated at 30°C for 3 days (10µl; OD600 = 1), were placed in the larger Petri dish (Ø145mm) containing the Petri dish (Ø 90mm), with the seedlings. Plates were sealed and returned to growth cabinet. Plant fresh weight was determined after 14 days and plant dry weight was determined after overnight incubation at 65°C. A total of 4-5 replicates were used per treatment. Student's t-Test was performed to determine statistically significant differences compared to the control treatment (plants exposed to medium only).

All *Microbacterium* strains tested promoted the growth of A. *thaliana* seedlings. VOCs of the eight *Microbacterium* strains induced significant increases in shoot and root biomass of A. *thaliana,* but differed in their effects on root architecture. The results of this preliminary test are summarized in Table 2.

**Table 2 - Overview of screening tests. The amounts presented here are dry weight biomass.**

| Name | Origin | Clade | Plant growth promotion assay | | | |
|---|---|---|---|---|---|---|
| | | | Shoot biomass | | root biomass | |
| | | | (mg) | Relative to control | (mg) | Relative to control |
| Control | | - | 0.6 | | 0.14 | |
| EC6 | endosphere | 1 | 1.9 | 3.2 | 0.40 | 2.9 |
| W211 | rhizosphere | 1 | 3.2 | 5.3 | 0.40 | 2.9 |
| W236 | rhizosphere | 1 | 2.1 | 3.5 | 0.25 | 1.8 |
| W269 | rhizosphere | 1 | 2.5 | 4.2 | 0.26 | 1.9 |
| W204 | rhizosphere | 2 | 2.3 | 3.8 | 0.25 | 1.8 |
| EC8 | endosphere | 3 | 2.1 | 3.5 | 0.46 | 3.3 |
| W283 | rhizosphere | 3 | 3.4 | 5.7 | 0.35 | 2.5 |
| W163 | rhizosphere | 5 | 1.5 | 2.5 | 0.28 | 2.0 |

It follows that all the *Microbacterium* strains tested show biostimulant activity in this *in vitro* assay. Strains EC8 has the biggest impact on root development, while strain W283 has the most pronounced effect on shoot biomass. The strains from clade 3 are therewith the most preferred. However, many strains from clade 1 show very positive results with respect to plant growth promotion as well, and the strains from other clades also provide positive results in comparison to the control. These positive *in vitro* results provide an indication that the *Microbacterium* strains are indeed capable of plant growth promotion. This is confirmed in the further experiments with *Microbacterium* sp. EC8.

### Example 5: Microbacterium sp. EC8 identification

*Microbacterium* sp. EC8 was selected for further experiments. *Microbacterium* sp. EC8 has been deposited in accordance with the Budapest Treaty at the CBS, Utrecht on 2 September 2016, with accession number CBS141778 and the name *Microbacterium* sp. EC8 in the name of NIOO-KNAW.

To identify the genetic basis of VOC production in *Microbacterium* sp. EC8, we sequenced and analyzed its genome. For the DNA isolation, a single colony of *Microbacterium* sp. EC8 was inoculated in LB medium and incubated for 2 days at 25°C. Prior to DNA isolation, bacterial pellet was collected by centrifugation and mixed with 0.9% NaCl. Suspension was centrifuged and the pellet was washed with 0.9% NaCl three times. Total genomic DNA was extracted using the MasterPure™ Complete DNA and RNA Purification Kit (Epicentre Biotechnologies, Madison, WI, USA) according to manufacturer's instructions with minor modification (beat beating step was skipped). DNA sequencing of *Microbacterium* sp. EC8 was performed with PacBio sequencing and subsequent de novo assembly using the Hierarchical Genome Assembly Process (HGAP v3) in the SMRTPortal software v3.0 (Chin et al., 2013). A library of approximately 10 KB was sequenced on the PacBio RS II in two SMRT cells. Reads were filtered for a minimal polymerase read length of 500 bp, a read quality of 0.8 and a minimal subread length of 500 bp. After assembly the remaining InDel and base substation errors in the draft assembly were reduced with two rounds of the Quiver algorithm. The resulting singular contig was checked using a custom script and overlapping ends trimmed. There was no evidence of plasmids in the sequence data.

The assembled *Microbacterium* sp. EC8 genome consists of a single chromosome of 3.18Mb with G+C content of 67.5% and 3,101 coding DNA sequences (CDSs).

### Example 6: VOCs from Microbacterium sp. EC8

To study the diversity of the VOCs in more detail, headspace VOCs of cultures of *Microbacterium* sp. EC8 were collected for 6 days and analyzed by GC-QTOF-MS. *Microbacterium* cells (100µl OD600 = 0.1) were plated on sterile glass Petri dishes (Ø 90mm) containing 20µl of TSA medium. Petri dishes were sealed and incubated at 30°C for 6 days. VOC collection started right after plating, and for that, the lids of these Petri dishes were designed with an outlet where the Tenax tubes were connected. Trapped compounds were subjected to Gas Chromatography-Quadrupole Time of Flight-Mass Spectrometry (GC-QTF-MS). Compounds were desorbed from the Tenax tubes in a thermodesorption unit (model UnityTD-100, Markes International Ltd., Llantrisant, UK) at 210°C for 12min. (Helium flow 50ml.min⁻¹) using 1:20 split ratio. Released compounds were focused on a cold trap at -10°C and introduced into the GC-QTF-MS (Agilent 7890B GC and the Agilent 7200A QTOF, Santa Clara, USA). Compounds were transferred to the analytical column (30m × 0.25mm ID RXI-5MS, film thickness 0.25µm; Restek 13424-6850, Bellefonte, PA, USA) by heating the cold trap to 250°C for 12min. Temperature program of the GC oven was: 39°C for 2min, from 39°C to 95°C at 3.5°C.min⁻¹, from 95°C to 165°C at 6°C.min⁻¹, 165°C to 250°C at 15°C.min⁻¹ and finally, from 250°C to 300°C at 40°C.min⁻¹ and 20min. hold at a constant gas flow of 1.2ml.min⁻¹. Mass spectra were acquired by electron impact ionization (70eV) with a scanning from m/z 30-400 with a scan rate of 4 scans.s⁻¹. Mass-spectra were analyzed with MassHunter Qualitative Analysis Software B.07.00 (Agilent Technologies, Santa Clara, USA) using the GC-Q-TOF qualitative analysis module. VOCs were selected based on three criteria: peak intensity of at least 104, P < 0.05 (t-Test), and fold change (FC) > 2. Selected VOCs were tentatively identified by comparison of the mass spectra with those of NIST (National Institute of Standards and Technology, USA) and Wiley libraries and by comparing the experimentally calculated LRI with the literature values.

Table 5 shows 18 VOC that were detected that were not found in the control (agar medium only) or were detected with peak areas significantly different (t-Test, P < 0.05) and at least 2-fold larger than those in the control. The vast majority of VOCs that met these criteria were identified as sulfur-containing compounds. These included sulfur-containing compounds commonly found for other bacterial genera such as dimethyl-disulfide and dimethyl trisulfide, but also more rare compounds such as S-methyl 2-methylpropanethioate and S-methyl pentanethioate. In addition, four ketones, including 3,3,6-trimethylhepta-1,5-dien-4-one (also known as Artemisia ketone), were found in the headspace of *Microbacterium* sp. EC8 culture.

| Compound | Type of compound | RI |
|---|---|---|
| Cyclopentene | Olefin | 543 |
| 2-butanone | Keton | 600 |
| 2-pentanone | Keton | 688 |
| Methyl thioacetate | Sulphur-containing | 704 |
| (Methyldsulfanyl)methane [Dimethyl disulfide] | Sulphur-containing | 750 |
| S-methyl propanethioate | Sulphur-containing | 800 |
| S-Methyl 2-methyl propane thioate | Sulphur-containing | 847 |
| 2,4-dithiapenane | Sulphur-containing | 886 |
| 1-(methyldisulfanyl)propane | Sulphur-containing | 888 |
| S-methyl pentane thioate | Sulphur-containing | 940 |
| (Methyltrisulfanyl)methane [dimethyl trisulfide] | Sulphur-containing | 973 |
| 3,3,6-trimethyl-hepta-1,5-dien-4-one [Artemisia ketone) | Unsaturated ketone | 1051 |
| ? | Sulphur-containing compound | 1059 |
| Methyl (methylthio)methyl disulfide | Sulphur-containing compound | 1122 |
| (methyltetrasulfanyl)methane [dimethyl tetrasulfide] | Sulphur-containing compound | 1212 |
| (methylpentasulfanyl)methane [dimethyl pentasulfide] | Sulphur-containing compound | 1460 |

Table 5 - Volatile organic compounds emitted by *Microbacterium* sp. EC8. VOCs displayed were detected only for *Microbacterium* sp. EC8 or were significantly different (Student's t-Test, P < 0.05, n = 3) and detected at peak intensities at least twice as high as in the control (medium only). Compounds were putatively annotated by comparing their mass spectra (MS) and calculated retention indices (RI) with those of NIST and in-house mass spectral libraries and standard.

### Example 7: Plant transcriptional changes induced by VOCs emitted by Microbacterium sp. EC8

To understand the molecular mechanisms underlying VOC-mediated plant growth promotion by *Microbacterium* sp. EC8, RNAseq analysis was performed for *Arabidopsis thaliana* seedlings exposed for one week to the bacterial VOCs. Total RNA was extracted from shoot and root tissues A. *thaliana* seedlings exposed to the VOCs from *Microbacterium* sp. EC8 for one week. Seedlings exposed to TSA medium only were used as control. For the sequencing of plant RNA, total RNA was extracted from roots and shoots. A total of 4 replicates were used, and each replicate consisted of 4 plates with 6 seedlings each in order to obtain enough biomass. RNA was obtained from frozen tissues with Trizol reagent (Invitrogen). The RNA samples were further purified using the NucleoSpin RNA II kit (Macherey-Nagel) and kept at -80°C until sequencing. For RNA sequencing, samples were processed using the NEBNext Ultra Directional RNA Library Prep Kit for Illumina at ServiceXS (GenomeScan B.V., Leiden, The Netherlands). Briefly, mRNA was isolated from the total RNA using the oligo-dT magnetic beads. After fragmentation of the mRNA, cDNA was synthesized, ligated with sequencing adapters and amplified by PCR in order to obtain cDNA libraries. Each cDNA library was individually analyzed for quality and yield using a Fragment Analyzer. cDNA was then clustered and a concentration of 1.6 pM was sequenced with an Illumina NextSeq 500 sequencer.

Illumina sequences were trimmed and filtered with FASTQC with a threshold of 25 (Q > 25). Quality-trimmed reads were counted using RSEM software package (Li & Dewey, 2011) transformed into RPKM (Reads Per Kilobases per Million reads). Reads were mapped to the A. *thaliana* reference genes using the software Bowtie2 v.2.1.0 (Langmead & Salzberg, 2012). The Bioconductor package DESeq2 (Love et al., 2014) was used for normalization and differential expression analyses. The P-value was obtained from the differential gene expression test. FDR (False Discovery Rate) manipulation was used to determine the P-value threshold in multiple tests and analyses. Significant differentially expressed genes (DEGs) were selected using FDR < 0.05 and the absolute value of the log2Ratio ≥ 0.585 (at least 1.5x higher than the expression level in control) as thresholds. Biological interpretation of the DEGs was performed using Cytoscape software with ClueGO plugin (Bindea et al., 2009).

Genes of shoot and root tissues with an adjusted P < 0.05 and with a value of log2Ratio ≥ 0.585 or ≤ 0.585 (1.5-fold change) were considered as differentially expressed from the non-exposed (control) seedlings. A total of 946 (545 up- and 401 down-regulated) and 1361 (698 up- and 663 down-regulated) differentially expressed genes (DEGs) were identified in shoot and root tissues, respectively. Arabidopsis root tissue displayed a higher number of transcriptional changes compared to shoot tissue. A total of 20 genes involved in sulfur metabolism and transport were found to be differentially expressed in shoot and root tissues upon exposure to VOCs from *Microbacterium* sp. EC8. Table 6 provides the overview of the differentially expressed genes and the fold change for the types involved in the metabolism of sulphur and nitrogen (nitrate).

**Table 6 - Differentially expressed genes (DEGs) of Arabidopsis thaliana seedlings exposed to volatile organic compounds (VOCs) emitted by Microbacterium sp. EC8. One week old seedlings were exposed to VOCs for one week. DEGs involved in metabolism and transport of sulphur (S) and nitrate (N) are specified. Fold change was calculated using the log2FC (VOC exposed seedlings / control).**

| **Code** | **Name** | **TYPE** | **Description** | **FC shoots** | **FC roots** |
|---|---|---|---|---|---|
| AT1G02500.1 | SAM-1 | S-metabolism | S-adenosylmethionine synthase | 1.7 | 1.1 |
| AT4G01850.2 | SAM-2 | S-metabolism | S-adenosylmethionine synthase | 1.7 | -1.1 |
| AT4G13940.1 | MEE58 | S-metabolism | S-adenosyl-L-homocysteine hydrolase | 2.5 | 2.1 |
| AT3G23810.1 | SAHH2 | S-metabolism | S-adenosyl-L-homocysteine hydrolase | 2.1 | 1.6 |
| AT1G64660.1 | MGL | S-metabolism | methionine gamma-lyase | 3.5 | 2.7 |
| AT5G25980.2 | TGG2 | S-metabolism | thioglucoside glucohydrolase | 2.9 | 1.0 |
| AT1G27130.1 | GSTU13 | S-metabolism | glutathione transferase | 2.8 | 1.3 |
| AT1G78380.1 | GSTU19 | S-metabolism | glutathione transferase | 1.7 | -1.7 |
| AT2G30860.1 | GSTF9 | S-metabolism | glutathione transferase | 2.1 | 1.1 |
| AT2G30870.1 | GSTF10 | S-metabolism | glutathione transferase | 2.3 | 2.2 |
| AT2G29490.1 | GSTU1 | S-metabolism | glutathione transferase | -1.0 | -1.7 |
| A T2G29420.1 | GSTU7 | S-metabolism | glutathione transferase | -1.3 | -3.0 |
| A T3G09270.1 | GSTU8 | S-metabolism | glutathione transferase | -1.2 | -2.2 |
| AT1G74590.1 | GSTU10 | S-metabolism | glutathione transferase | -2.9 | -3.9 |
| AT1G78380.1 | GSTU19 | S-metabolism | glutathione transferase | 1.7 | -1.7 |
| AT4G04610.1 | APR1 | S-metabolism | phosphosulfate reductase | -1.1 | -3.6 |
| AT4G21990.1 | APR3 | S-metabolism | phosphosulfate reductase | -1.2 | -1.9 |
| AT1 G78000.2 | SULTR1.2 | S-metabolism | sulfate transporter | -1.9 | -6.9 |
| AT4G02700.1 | SULTR3.2 | S-metabolism | sulfate transporter | 1.0 | -2.0 |
| AT3G12520.2 | SULTR 4.2 | S-metabolism | sulfate transporter | -1.6 | -3.4 |
| AT1 G08090.1 | NRT2.1 | N-metabolism | nitrate transporter | 1.0 | 14.0 |
| AT3G45060.1 | NRT2.6 | N-metabolism | nitrate transporter | -1.5 | 2.4 |
| AT5G14570.1 | NRT2.7 | N-metabolism | nitrate transporter | -1.7 | 1.5 |
| AT1G77760.1 | NIA1 | N-metabolism | nitrate reductase | 1.0 | 1.6 |
| AT1G37130.1 | NIA2 | N-metabolism | nitrate reductase | -1.5 | -7.3 |
| AT5G40890.1 | CLC-A | N-metabolism | chloride channel | -1.7 | 6.1 |

### Example 8: Plant growth promotion in vitro

### Bacterial strain

*Microbacterium* sp. EC8 was grown on Tryptone Soy Broth (Oxoid Thermo Scientific, Lenexa, USA) supplemented with 18g of technical agar (Oxoid Thermo Scientific, Lenexa, USA) for 3 days at 21°C. Cells were obtained from agar plate and mixed with 10mM MgSO4.7H20 buffer. Cell density was measured and adjusted to OD600 = 1 (∼10⁹ cfu.ml⁻¹).

### Plant material

For the *in vitro* assays, seeds of *Arabidopsis thaliana* were surface-sterilized for 3h by placing seeds in Eppendorf tubes open in a desiccator jar. Two beakers, each containing 50ml of sodium hypochlorite solution were placed inside, and 1.5ml of 37% hydrochloric acid was added to each beaker. The desiccator jar was closed, and the seeds were sterilized by chlorine gas.

Eppendorf tubes containing the sterile seeds was kept open in the flow cabinet for 30 min and after that placed on a wet paper filter in a Petri dish. Petri dish was sealed and wrapped in tin foil and kept at 4°C for 3-4 days. Seeds of lettuce (*Lactuca sativa*) and tomato (*Solanum lycopersicum* L.) were surface-sterilized by soaking in 70% ethanol for 2min., followed by soaking in 1% sodium hypochlorite solution for 20min. After soaking, seeds were rinsed three times in sterile demi-water. Plants were kept in climate cabinets at 21°C; 180µmol.m⁻².s⁻¹ at plant level; 16h/d; 70% relative humidity.

### In vitro plant growth promotion assay

Sterile seeds of *A. thaliana,* lettuce and tomato were sown on Petri dishes (Ø 90mm) containing 25ml of 0.5X Murashige and Skoog medium (Murashige & Skoog, 1962) supplemented with 0.5% sucrose. These Petri dishes (without lids) were kept inside a larger Petri dish (Ø 145mm) which were sealed and kept in the climate cabinet. After four days, seedlings were exposed to the bacterial VOCs or to agar medium by introducing a small Petri dish Ø 35mm) containing a 3-day-old bacterial culture or the agar medium (control). Petri dishes Ø 145mm) were sealed and kept in the climate cabinet.

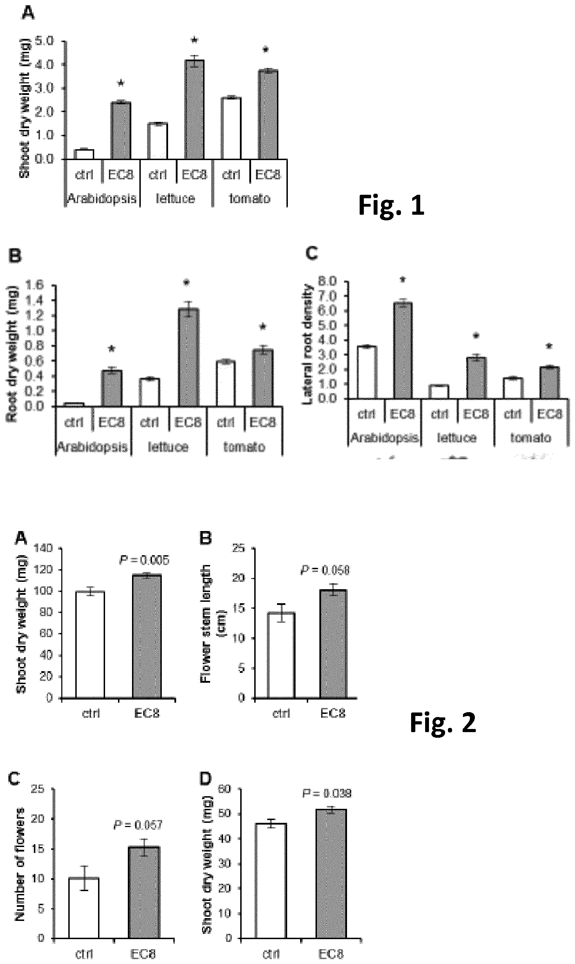

Fig. 1A-C shows the plant shoot and root biomass was determined after 12, 10 and 7 days for Arabidopsis, tomato and lettuce seedlings, respectively. Control seedlings are referred as 'ctrl' and were exposed to agar medium only; seedlings exposed to VOCs from EC8 are referred as 'EC8'; asterisks indicate statistically significant differences between VOC-exposed and control seedlings (Student's t-Test, P < 0.05). Upon exposure to the bacterial VOCs, lettuce seedlings showed an increase of 178% in shoot biomass (t-Test, P < 0.001), 253% in root biomass (t-Test, P < 0.001) and 217% in lateral root density (t-Test, P < 0.001); tomato seedlings showed an increase of 44% in shoot biomass (t-Test, P < 0.001), 27% in root biomass (t-Test, P = 0.038) and 54% in lateral root density (t-Test, P < 0.001) (Fig. 1A, B, C, S1) compared to control seedlings (exposed to agar medium only).

### Example 9: In vitro priming effect

To test if VOCs emitted by *Microbacterium* sp. EC8 could prime plant growth and development, Arabidopsis thaliana and lettuce seedlings were exposed *in vitro* to the bacterial VOCs and then transplanted to soil. For the *in vitro* exposure of the seedlings, use was made of the three-compartment set-up described above. Seven-day-old *Arabidopsis thaliana* and three-day-old lettuce seedlings were exposed for five and three days, respectively. The transplanted plants were kept in plastic pots containing 130 g of potting soil with 40% moisture. A total of 5-9 replicates were used per treatment. A. *thaliana* shoot biomass, number of flower and length of flower stem were determined 21 days after soil transplantation. Lettuce biomass was determined 13 days after soil transplantation.

Fig. 2A-D shows the results. Figs. 2A-4C relate to A. *thaliana* and show the shoot dry weight (in mg), the flower dry weight (in cm) and the number of flowers respectively. Fig. 2D relates to lettuce and shows the shoot dry weight (in mg). The results in Fig. 4A-D demonstrate that short VOC-exposure (four days) promoted the growth of A. *thaliana* and lettuce plants transplanted to and grown in soil. Arabidopsis plants showed a significant increase of 35% in shoot biomass. We also observed increases of 27% in length of the flower stem and of 51% in number of flowers, although these increases were not statistically significant. Lettuce plants showed a significant 12% increase in shoot biomass (t-Test, P = 0.038; Fig. 4D). These results demonstrate that a four-day-exposure of A. *thaliana* and lettuce to VOCs from *Microbacterium* sp. EC8 is sufficient to trigger plant growth promotion without direct and prolonged contact between the plants and the bacterial strain. To test if a short exposure to the bacterial VOCs had an effect on plant growth, and then transplanted to soil.

### Example 10: Demonstration of root exposure

A set of further experiments was set up to verify that the effect of the *Microbacterium* sp. EC8 is based on root exposure.

In the first set-up, plants and the bacterial culture were kept inside a sterile container for one week allowing exposure of the plant shoots to the bacterial VOCs. Seedlings were sown in pots (inner diameter: 6.5cm, height: 5cm) containing potting soil and kept in the climate chamber. *Microbacterium* sp. EC8 was inoculated on Petri dishes containing TSA medium and incubated for 6 days at 21°C. Ten holes were made on the walls of these Petri dishes to allow diffusion of the bacterial VOCs as displayed in Fig. S3. *Arabidopsis thaliana,* lettuce and tomato seedlings were exposed to the bacterial VOCs seven, four and six days after sowing, respectively. After one week of co-cultivation, pots were kept open in the flow cabinet for 30min. to remove excess of condensation on the pot walls. Plants were exposed three more days and allowed to grow for four days in the absence of the bacterial VOCs. After that, shoot biomass was determined. Exposure to the VOCs emitted by *Microbacterium* sp. EC8 resulted in a 45% increase of shoot biomass of A. *thaliana* plants (t-Test, P = 0.002). However, no significant increases in shoot biomass were observed for lettuce plants (t-Test, P = 0.336) and tomato (t-Test, P = 0.837).

In the second experimental set-up, plant roots were exposed to VOCs emitted by *Microbacterium* sp. EC8 inoculated onto agar medium. To expose only the roots to the bacterial VOCs, we used a pot with two compartments separated by a polyester membrane (5µm, Nedfilter, Lelystad, The Netherlands). Upper compartment (inner diameter: 5.5cm, height: 8cm) was filled with potting soil-sand mixture (1:2 v/v; 25% moisture) where one A. *thaliana* or lettuce seed was sown. Bottom compartment (inner diameter: 6.5 cm, height: 4.5cm) was filled with the soil-sand mixture mixed with the bacterial culture (10⁷ cfu.g⁻¹ soil) or a Petri dish (Ø35mm) containing a three-day-old bacterial culture on TSA medium (initial concentration 10⁹ cfu.ml⁻¹) previously incubated at 21°C. Shoot and root biomass were determined three weeks after sowing. VOCs emitted by *Microbacterium* sp. EC8 grown on agar medium increased the biomass of A. *thaliana* shoots (t-Test, P = 0.001) and roots (t-Test, P < 0.001), and of lettuce shoots (t-Test, P = 0.004) and roots (t-Test, P = 0.036).

### Example 11: Biostimulant effect on lettuce through soil inoculation

Experiments were carried out wherein the bacterial composition of *Microbacterium* sp. EC8 was inoculated in soil. In a first set of experiments, the effect was tested for lettuce. The EC8 was added to the soil in two different densities: 10⁶ and 10⁷ cells.g⁻¹ soil, which is hereinafter referred to as "low density" and "high density" respectively. Additionally control experiments without *Microbacterium* sp. EC8 were carried out. Use was made of 100% potting soil, with 8 plants/pot and 10 replicates. The growth took place in a growth chamber that was held at 21°C during day and night at 70% relative humidity. Tests were carried out wherein the bacterial composition was added to the soil at sowing and at sowing and after 1 week. These two administration protocols are hereinafter also referred to as "single addition" and "two addition" respectively. Table 7 shows the results of shoot at harvesting after 2 weeks.

**Table 7 - Growth stimulation of lettuce by exposure to Microbacterium sp. EC8.**

| | Control | Low density - Single addition | Low density - Two additions | High density - Single addition | High density - Two additions |
|---|---|---|---|---|---|
| Shoot fresh weight (mg) | 500 | 620 | 650 | 580 | 690 |
| Shoot fresh weight (%) | 100 | 120 | 125 | 112 | 138 |
| Shoot dry weight (mg) | 25 | 28 | 30 | 26 | 30 |
| Shoot dry weight (%) | 100 | 118 | 121 | 102 | 122 |

### Example 12: Biostimulant effect on tomato through soil inoculation

The same experiment as specified for lettuce in Example 11 were also carried out for tomato cv. minibel, with as differences that 5 plants were present per pot and that the harvest took place after 17 days. Results are shown in Table 8.

**Table 8 - Growth stimulation of tomato by exposure to Microbacterium sp. EC8.**

| | Control | Low density - Single addition | Low density - Two additions | High density - Single addition | High density - Two additions |
|---|---|---|---|---|---|
| Shoot dry weight (mg) | 15 | 28 | 32 | 31 | 36 |
| Shoot dry weight (%) | 100 | 180 | 200 | 200 | 220 |

It is apparent from the data that the growth promotion in tomato is highly significant. This applies not merely to the high density addition, but also to the low density addition. The benefit of the second addition after 1 week is about 10% relative to the single addition. This again suggests the presence of a priming effect. However, the overall effect is so significant that contribution of other mechanisms of growth promotion cannot be excluded.

### Example 13: Enhanced germination of tomato seeds

During the experiment described in Example 15, furthermore the germination rate was reviewed, both after 7 days and at harvest (17 days). It was apparent that the germination after 7 days was highly increased. At harvest, the difference was less big but still present. Results are shown in Table 9.

**Table 9 - Germination rate of tomato by exposure to Microbacterium sp. EC8.**

| | Control | Low density - Single addition | Low density - Two additions | High density - Single addition | High density - Two additions |
|---|---|---|---|---|---|
| Count at 7 days (%) | 24 | 88 | 80 | 78 | 76 |
| Count at 17 days (%) | 82 | 96 | 98 | 93 | 96 |

Thus, in summary, the invention relates to a bacterial composition and the use thereof, which bacterial composition comprises at least one plant growth-promoting bacterium from the *Microbacterium* genus, for producing biostimulant effects in seeds, seedlings and/or plants, comprising the step of priming said seeds, or seedlings or plants. The bacterial composition particularly comprises *Microbacterium* bacteria from clades 1 or 3, more particularly from certain new isolates identified as Microbacterium sp. W283, Microbacterium sp. EC19, Microbacterium sp. EC8 (of clade 3),, Microbacterium sp. W211, Microbacterium sp. W219, Microbacterium sp. W269, Microbacterium sp. W236, Microbacterium sp. EC1, Microbacterium sp. EC6 (of clade 1).

The bacterial composition is particularly applied to a growth medium, for instance before transplantation. Very good results have been obtained for tomato plants. This relates to an increase in the germination rate, and/or an increase in shoot biomass in seedlings, and/or an increase in root biomass in seedlings. The shoot increase particularly occurs in seedlings in a period between sowing and two weeks thereafter, and/or wherein the biostimulant effect is based on priming. The *Microbacterium* sp. EC8 bacteria is deposited under the Budapest treaty and the 16S rRNA genes of said new strains and a plurality of strains from a database are included in the sequence listing attached hereto.

### References

Bindea et al., Bioinformatics 25(2009): 1091-1093.
Blom et al., Environ Microbiol 13(2011): 3047-3058.
Chin et al., Nat Meth 10 (2013): 563-569.
Cordovez et al., Frontiers in Microbiology 6(Oct 2015):1081; doi: 10.3389/fmicb.2015.01081. Felsenstein, Evolution 39(1985): 783-791.
Hernández-Léon et al., Biol Control 81(2015): 83-92.
Langmead & Salzberg, Nat. Meth. 9 (2012): 357-359.
Letunic & Bork, Nucleic Acids Res 39(2011): W475-W478.
Letunic & Bork, Nucleic Acids Res 2016, 44(W12016): W242-W245.
Li & Dewey, BMC Bioinform 12 (2011): 1-16.
Love et al., Genome Biology 15 (2014): 1-21.
McDonald et al., ISME J 6(2012): 610-648.
Mendes et al., Science 332(6033), 2011): 1097-1100.
Murashige & Skoog, Phys Plant, 15 (1962): 473-497.
Ryu et al., Proc Natl Acad Sci USA 100(2003), 4927-4932.
Saitou & Nei, Mol Biol Evol 4(1987): 406-425
Tamura & Nei, Mol Biol Evol 10(1993): 1073-1095.
van de Mortel et al., Plant Physiol 160(2012): 2173-2188.

## Claims

1. A bacterial composition comprising at least one *Microbacterium* strain, said composition having a plant-growth promoting effect upon administration to seeds, seedlings and plants, wherein the *Microbacterium* strain is chosen from the strains EC6, EC8, EC19, W283, EC6, W211, W219, W236, W269, or any other strain with a genetic correspondence with *Microbacterium* sp. EC8 as based on 16S rRNA gene of at least 96%.

2. Use of a bacterial composition comprising at least one plant growth-promoting bacterium from the *Microbacterium* genus, for producing biostimulant effects in seeds, seedlings and/or plants, comprising the step of priming said seeds, or seedlings or plants,
wherein the *Microbacterium* bacterium is chosen from the strains EC8, W283, EC19, EC1, EC6, W211, W236, W219 and W269 or any other strain with a genetic correspondence of at least 96%, with the *Microbacterium* sp. EC8 as based on the 16S rRNA gene,
wherein the priming of the seeds, seedling or plants occurs by seed, root or root primordia exposure, without the need of direct contact of the bacteria with the seed, seedling or plant respectively and without seed, seedling or plant colonization.

3. Use as claimed in Claim 2, wherein the *Microbacterium* bacteria comprise genes for production of volatile organic compounds, via which the priming occurs, and wherein preferably sulphur-containing volatile organic compounds are produced in said volatile organic compounds.

4. Use as claimed in Claim 2 or 3, wherein the seed, seedling or plant is chosen from the *Solanaceae* family, the *Asteraceae* family and/or the *Brassicaceae* family.

5. Use as claimed in Claim 4, wherein the seed, seedling or plant is chosen from the *Solanum* genera within the *Solanaceae* family, and wherein preferably the seed, seedling or plant is a tomato seed, seedling or plant.

6. Use as claimed in Claim 4, wherein the seed, seedling or plant is chosen from the *Cichorieae* of the *Cichorioideae* subfamily of the *Asteraceae* family, especially lettuce.

7. Use as claimed in any one of the Claims 2-6, wherein the seed or seedling or plant is exposed to the *Microbacterium* bacteria in a period of 1 hour to 14 days after sowing or after plants obtained from vegetative multiplication or micro-propagation are transferred in a new growth medium.

8. Use as claimed in any one of the Claims 2-7, wherein the seed, seedling or plant is exposed to the *Microbacterium* strain(s) by inoculation of the bacterial composition on or into a germination or growth medium, and wherein preferably inoculation is repeated after a predefined period.

9. Use of a bacterial composition as claimed in Claim 1 for producing biostimulant effects in plants of the chosen from the *Solanum* genus within the *Solanaceae* family.

10. Use as claimed in Claim 9, wherein the plant is a tomato plant.

11. Use as claimed in Claim 9 or 10, wherein the bacterial composition is added to the growth medium, such as a soil or other substrates, in which seeds or seedlings are sown or planted.

12. Use as claimed in Claim 11, wherein the bacteria from the *Microbacterium* genus is applied in a density of 5.10³-5.10⁷ cells/gram of soil, substrate or growth matrix, preferably 5.10⁵-5.10⁶ cells/gram of soil, substrate or growth matrix.

## Patentansprüche

1. Bakterielle Zusammensetzung, welche zumindest einen *Microbacterium* Stamm umfasst, wobei die Zusammensetzung einen das Pflanzenwachstum fördernden Effekt auf eine Verabreichung an Saatgut, Keimlinge und Pflanzen hin aufweist, wobei der *Microbacterium* Stamm ausgewählt ist aus den Stämmen EC6, EC8, EC19, W283, EC6, W211, W219, W236, W269 oder irgendeinem anderen Stamm mit einer genetischen Übereinstimmung zu dem *Microbacterium* sp. EC8 basierend auf einem 16S rRNA Gen von zumindest 96 %.

2. Verwendung einer bakteriellen Zusammensetzung, welche zumindest ein das Pflanzenwachstum förderndes Bakterium aus der *Microbacterium* Gattung umfasst, zum Erzeugen von biostimulierenden Effekten in Saatgut, Keimlingen und/oder Pflanzen, umfassend den Schritt des Priming des Saatguts oder der Keimlinge oder der Pflanzen, wobei das *Microbacterium* Bakterium ausgewählt ist aus den Stämmen EC8, W283, EC19, EC1, EC6, W211, W219, W236, W219 und W269 oder irgendeinem anderen Stamm mit einer genetischen Übereinstimmung zu dem *Microbacterium* sp. EC8 basierend auf einem 16S rRNA Gen von zumindest 96 %, wobei das Priming des Saatguts, der Keimlinge oder der Pflanzen durch Exponieren des Saatguts, der Wurzeln oder des Wurzelprimordiums, mit oder ohne die Notwendigkeit des direkten Kontakts der Bakterien mit dem Saatgut, den Keimlingen bzw. den Pflanzen und ohne Saatgut-, Keimlings- oder Pflanzen-Besiedlung erfolgt.

3. Verwendung gemäß Anspruch 2, wobei das *Microbacterium* Bakterium Gene zur Produktion von flüchtigen organischen Verbindungen aufweist, über welche das Priming erfolgt, und wobei vorzugsweise schwefelhaltige flüchtige organische Verbindungen in den flüchtigen organischen Verbindungen erzeugt werden.

4. Verwendung gemäß Anspruch 2 oder 3, wobei das Saatgut, die Keimlinge oder die Pflanze ausgewählt ist/sind aus der *Solanaceae* Familie, der *Asteraceae* Familie und/oder der *Brassicaceae* Familie.

5. Verwendung gemäß Anspruch 4, wobei das Saatgut, die Keimlinge oder die Pflanze ausgewählt ist/sind aus der *Solanum* Gattung innerhalb der *Solanaceae* Familie, und wobei das Saatgut, der Keimling oder die Pflanze ein/eine Tomaten-Saatgut, -Keimling oder -Pflanze ist.

6. Verwendung gemäß Anspruch 4, wobei das Saatgut, der Keimling oder die Pflanze ausgewählt ist/sind aus der *Cichorieae* von der *Cichorioideae* Unterfamilie von der *Asteraceae* Familie, insbesondere Salat.

7. Verwendung gemäß irgendeinem der Ansprüche 2-6, wobei das Saatgut oder der Keimling oder die Pflanze dem *Microbacterium* Bakterium für eine Zeitdauer von 1 Stunde bis 14 Tage ausgesetzt wird nach dem Säen oder nachdem Pflanzen aus vegetativer Vermehrung oder Microvermehrung in einen neuen Nährboden transferiert worden sind.

8. Verwendung gemäß irgendeinem der Ansprüche 2 - 7, wobei das Saatgut, die Keimlinge oder die Pflanze dem/den *Microbacterium* Stamm/Stämmen ausgesetzt werden durch Inokulation der bakteriellen Zusammensetzung auf oder in eine Germination oder einen Nährboden, und wobei vorzugsweise eine Inoculation nach einer vordefinierten Zeitdauer wiederholt wird.

9. Verwendung einer bakteriellen Zusammensetzung gemäß Anspruch 1 zum Erzeugen von biostimulierenden Effekten in Pflanzen ausgewählt aus der *Solanum* Gattung innerhalb der *Solanaceae* Familie.

10. Verwendung gemäß Anspruch 9, wobei die Pflanze eine Tomatenpflanze ist.

11. Verwendung gemäß Anspruch 9 oder 10, wobei die bakterielle Zusammensetzung dem Nährboden, wie beispielsweise Erde oder andere Substrate, in welchen das Saatgut oder die Keimlinge gesät oder gepflanzt werden, hinzugefügt wird.

12. Verwendung gemäß Anspruch 11, wobei das Bakterium aus der *Microbacterium* Gattung in einer Dichte von 5,10³ - 5,10⁷ Zellen/Gramm der Erde, des Substrats oder der Nährmatrix angewandt wird, vorzugsweise 5,10⁵ - 5,10⁶ Zellen/Gramm der Erde, des Substrats oder der Nährmatrix.

## Revendications

1. Composition bactérienne comprenant au moins une souche de Microbactérium, ladite composition présentant un effet favorisant la croissance de plante lors de l'administration à des graines, semis et plantes, dans laquelle la souche de Microbactérium est choisie parmi les souches EC6, EC8, EC19, W283, EC6, W211, W219, W236, W269, ou toute autre souche présentant une correspondance génétique avec la souche de Microbactérium EC8 tel que sur la base du gène ARNr 16S d'au moins 96%.

2. Utilisation d'une composition bactérienne comprenant au moins une bactérie favorisant la croissance de plante, du genre Microbactérium, afin de produire des effets biostimulants sur des graines, semis et/ou plantes, comprenant l'étape d'amorçage desdites graines ou semis ou plantes,
dans laquelle la bactérie Microbactérium est choisie à partir des souches EC8, W283, EC19, EC1, EC6, W211, W236, W219 et W269 ou toute autre souche présentant une correspondance génétique d'au moins 96%, avec la souche de Microbactérium EC8 tel que sur la base du gène ARNr 16S,
dans laquelle l'amorçage des graines, semis ou plantes est réalisé par exposition des graines, racines ou primordiums racinaires, sans nécessiter le contact direct des bactéries respectivement avec les graines, semis ou plantes et sans colonisation des graines, semis ou plantes.

3. Utilisation selon la revendication 2, dans laquelle les bactéries Microbactérium comprennent des gènes destinés à assurer la production de composés organiques volatils, par l'intermédiaire desquels l'amorçage se produit, et dans laquelle, de préférence, des composés organiques volatils sulfurés sont produits dans lesdits composés organiques volatils.

4. Utilisation selon la revendication 2 ou 3, dans laquelle les graines, semis ou plantes sont choisis parmi la famille des Solanacées, la famille des Astéracées et/ou la famille des Brassicacées.

5. Utilisation selon la revendication 4, dans laquelle les graines, semis ou plantes sont choisis parmi les genres Solanum dans la famille des Solanacées et dans laquelle, de préférence, les graines, semis ou plantes sont des graines, semis ou plants de tomate.

6. Utilisation selon la revendication 4, dans laquelle les graines, semis ou plantes sont choisis parmi les Cichoriées de la sous-famille des Cichorioidées de la famille des Astéracées, en particulier, la laitue.

7. Utilisation selon l'une quelconque des revendications 2 à 6, dans laquelle les graines ou semis ou plantes sont exposés aux bactéries Microbactérium pendant une période de 1 heure à 14 jours après l'ensemencement ou après que des plantes obtenues par multiplication végétative ou micro-propagation ont été transférées dans un nouveau milieu de croissance.

8. Utilisation selon l'une quelconque des revendications 2 à 7, dans laquelle les graines, semis ou plantes sont exposées à la ou aux souches de Microbactérium par l'inoculation de la composition bactérienne sur ou dans un milieu de germination ou de croissance et dans laquelle, de préférence, l'inoculation est répétée après une période prédéfinie.

9. Utilisation d'une composition bactérienne selon la revendication 1, afin de produire des effets biostimulant sur des plantes choisies à partir du genre Solanum dans la famille des Solanacées.

10. Utilisation selon la revendication 9, dans laquelle la plante est un plant de tomate.

11. Utilisation selon la revendication 9 ou 10, dans laquelle la composition bactérienne est ajoutée au milieu de croissance, tel qu'un sol ou d'autres substrats, dans lequel des graines ou semis sont semées ou plantées.

12. Utilisation selon la revendication 11, dans laquelle les bactéries du genre Microbactérium sont appliquées à une densité de 5^{∗}10³ à 5^{∗}10⁷ cellules/gramme de sol, substrat ou matrice de croissance, de préférence, 5^{∗}10⁵ à 5^{∗}10⁶ cellules/gramme de sol, substrat ou matrice de croissance.


### SEQUENCE LISTING

<110> DCM De Ceuster Meststoffen NV Nederlands Instituut voor Ecologie van de Koninklijke Nederlandse Akademie van Wetenschappen (NIOO-KNAW)
<120> novel plant-growth promoting bacteria and use thereof
<130> 4H/2TU72/2
<160> 115
<170> BiSSAP 1.3.6
<210> 1
   <211> 1067
   <212> RNA
   <213> Microbacterium sp. W154
<400> 1
   agcttgctct ctggatcagt ggcgaacggg tgagtaacac gtgagcaacc tgccccggac      60
   tctgggataa cagctggaaa cagctgctaa taccggatac gagctgcgaa ggcatcttca     120
   gcagctggaa agaatttcgg tccgggatgg gctcgcggcc tatcagctag ttggtgaggt     180
   aatggctcac caaggcgtcg acgggtagcc ggcctgagag ggtgaccggc cacactggga     240
   ctgagacacg gcccagactc ctacgggagg cagcagtggg gaatattgca caatgggcga     300
   aagcctgatg cagcaacgcc gcgtgaggga tgacggcctt cgggttgtaa acctctttta     360
   gcagggaaga agcgaaagtg acggtacctg cagaaaaagc gccggctaac tacgtgccag     420
   cagccgcggt aatacgtagg gcgcaagcgt tatccggaat tattgggcgt aaagagctcg     480
   taggcggttt gtcgcgtctg ctgtgaaaac ccgaggctca acctcgggcc tgcagtgggt     540
   acgggcagac tagagtgcgg taggggagat tggaattcct ggtgtagcgg tggaatgcgc     600
   agatatcagg aggaacaccg atggcgaagg cagatctctg ggccgtaact gacgctgagg     660
   agcgaaaggg tggggagcaa acaggcttag ataccctggt agtccacccc gtaaacgttg     720
   ggaactagtt gtggggtcca ttccacggat tccgtgacgc agctaacgca ttaagttccc     780
   cgcctgggga gtacggccgc aaggctaaaa ctcaaaggaa ttgacgggga cccgcacaag     840
   cggcggagca tgcggattaa ttcgatgcaa cgcgaagaac cttaccaagg cttgacatat     900
   acgagaacgg gccagaaatg gtcaactctt tggacactcg taaacaggtg gtgcatggtt     960
   gtcgtcagct cgtgtcgtga gatgttgggt taagtcccgc aacgagcgca accctcgttc    1020
   tatgttgcca gcacgtaatg gtgggaactc atgggatact gccgggg                  1067
<210> 2
   <211> 1010
   <212> RNA
   <213> Microbacterium sp. W163
<400> 2
   agagagcttg ctctttggat cagtggcgaa cgggtgagta acacgtgagc aatctgcccc 60
   tgactctggg ataacagttg gaaacagctg ctaataccgg atacgagctt cgaaggcatc 120
   ttcagaagct ggaaagaact tcggtcaggg atgagctcgc ggcctatcag ctagttggtg 180
   aggtaatggc tcaccaaggc gtcgacgggt agccggcctg agagggtgac cggccacact 240
   gggactgaga cacggcccag actcctacgg gaggcagcag tggggaatat tgcacaatgg 300
   gcgcaagcct gatgcagcaa cgccgcgtga gggacgacgg ccttcgggtt gtaaacctct 360
   tttagcaggg aagaagcgaa agtgacggta cctgcagaaa aagcgccggc taactacgtg 420
   ccagcagccg cggtaatacg tagggcgcaa gcgttatccg gaattattgg gcgtaaagag 480
   ctcgtaggcg gtttgtcgcg tctgctgtga aaactggagg ctcaacctcc agcctgcagt 540
   gggtacgggc agactagagt gcggtagggg agattggaat tcctggtgta gcggtggaat 600
   gcgcagatat caggaggaac accgatggcg aaggcagatc tctgggccgt aactgacgct 660
   gaggagcgaa agggtgggga gcaaacaggc ttagataccc tggtagtcca ccccgtaaac 720
   gttgggaact agttgtgggg tccattccac ggattccgtg acgcagctaa cgcattaagt 780
   tccccgcctg gggagtacgg ccgcaaggct aaaactcaaa ggaattgacg gggacccgca 840
   caagcggcgg agcatgcgga ttaattcgat gcaacgcgaa gaaccttacc aaggcttgac 900
   atatacgaga acgggccaga aatggtcaac tctttggaca ctcgtaaaca ggtggtgcat 960
   ggttgtcgtc agctcgtgtc gtgagatgtt gggttaagtc ccgcaacgag 1010
<210> 3
   <211> 977
   <212> RNA
   <213> Microbacterium sp. W186
<400> 3
   gagagcttgc tctctggatc agtggcgaac gggtgagtaa cacgtgagca acctgccccg 60
   gactctggga taacagctgg aaacagctgc taataccgga tacgagctgc gaaggcatct 120
   tcagcagctg gaaagaattt cggtccggga tgggctcgcg gcctatcagc tagttggtga 180
   ggtaatggct caccaaggcg tcgacgggta gccggcctga gagggtgacc ggccacactg 240
   ggactgagac acggcccaga ctcctacggg aggcagcagt ggggaatatt gcacaatggg 300
   cgaaagcctg atgcagcaac gccgcgtgag ggatgacggc cttcgggttg taaacctctt 360
   ttagcaggga agaagcgaaa gtgacggtac ctgcagaaaa agcgccggct aactacgtgc 420
   cagcagccgc ggtaatacgt agggcgcaag cgttatccgg aattattggg cgtaaagagc 480
   tcgtaggcgg tttgtcgcgt ctgctgtgaa aacccgaggc tcaacctcgg gcctgcagtg 540
   ggtacgggca gactagagtg cggtagggga gattggaatt cctggtgtag cggtggaatg 600
   cgcagatatc aggaggaaca ccgatggcga aggcagatct ctgggccgta actgacgctg      660
   aggagcgaaa gggtggggag caaacaggct tagataccct ggtagtccac cccgtaaacg      720
   ttgggaacta gttgtggggt ccattccacg gattccgtga cgcagctaac gcattaagtt      780
   ccccgcctgg ggagtacggc cgcaaggcta aaactcaaag gaattgacgg ggacccgcac      840
   aagcggcgga gcatgcggat taattcgatg caacgcgaag aaccttacca aggcttgaca      900
   tatacgagaa cgggccagaa atggtcaact ctttggacac tcgtaaacag gtggtgcatg      960
   gttgtcgtca gctcgtg                                                     977
<210> 4
   <211> 936
   <212> RNA
   <213> Microbacterium sp. W200
<400> 4
   ttgctctctg gatcagtggc gaacgggtga gtaacacgtg agcaacctgc cccggactct       60
   gggataacag ctggaaacag ctgctaatac cggatacgag ctgcgaaggc atcttcagca      120
   gctggaaaga atttcggtcc gggatgggct cgcggcctat cagctagttg gtgaggtaat      180
   ggctcaccaa ggcgtcgacg ggtagccggc ctgagagggt gaccggccac actgggactg      240
   agacacggcc cagactccta cgggaggcag cagtggggaa tattgcacaa tgggcgaaag      300
   cctgatgcag caacgccgcg tgagggatga cggccttcgg gttgtaaacc tcttttagca      360
   gggaagaagc gaaagtgacg gtacctgcag aaaaagcgcc ggctaactac gtgccagcag      420
   ccgcggtaat acgtagggcg caagcgttat ccggaattat tgggcgtaaa gagctcgtag      480
   gcggtttgtc gcgtctgctg tgaaaacccg aggctcaacc tcgggcctgc agtgggtacg      540
   ggcagactag agtgcggtag gggagattgg aattcctggt gtagcggtgg aatgcgcaga      600
   tatcaggagg aacaccgatg gcgaaggcag atctctgggc cgtaactgac gctgaggagc      660
   gaaagggtgg ggagcaaaca ggcttagata ccctggtagt ccaccccgta aacgttggga      720
   actagttgtg gggtccattc cacggattcc gtgacgcagc taacgcatta agttccccgc      780
   ctggggagta cggccgcaag gctaaaactc aaaggaattg acggggaccc gcacaagcgg      840
   cggagcatgc ggattaattc gatgcaacgc gaagaacctt accaaggctt gacatatacg      900
   agaacgggcc agaaatggtc aactctttgg acactc                                936
<210> 5
   <211> 859
   <212> RNA
   <213> Microbacterium sp. W204
<400> 5
   actctgggat aagcgctgga aacggcgtct aataccggat acgagattcc accgcatggt      60
   gagtttctgg aaagattttt tggtctggga tgggctcacg gcctatcagc ttgttggtga     120
   ggtaatggct caccaaggcg tcgacgggta gccggcctga gagggtgacc ggccacactg     180
   ggactgagac acggcccaga ctcctacggg aggcagcagt ggggaatatt gcacaatggg     240
   cggaagcctg atgcagcaac gccgcgtgag ggatgacggc cttcgggttg taaacctctt     300
   ttagcaggga agaagcgaaa gtgacggtac ctgcagaaaa agcgccggct aactacgtgc     360
   cagcagccgc ggtaatacgt agggcgcaag cgttatccgg aattattggg cgtaaagagc     420
   tcgtaggcgg tttgtcgcgt ctgctgtgaa atcccgaggc tcaacctcgg gtctgcagtg     480
   ggtacgggca gactagagtg cggtagggga gattggaatt cctggtgtag cggtggaatg     540
   cgcagatatc aggaggaaca ccgatggcga aggcagatct ctgggccgtt actgacgctg     600
   aggagcgaaa gggtggggag caaacaggct tagataccct ggtagtccac cccgtaaacg     660
   ttgggaacta gttgtggggt ccattccacg gattccgtga cgcagctaac gcattaagtt     720
   ccccgcctgg ggagtacggc cgcaaggcta aaactcaaag gaattgacgg ggacccgcac     780
   aagcggcgga gcatgcggat taattcgatg caacgcgaag aaccttacca aggcttgaca     840
   tacaccagaa cgccctaga                                                  859
<210> 6
   <211> 1015
   <212> RNA
   <213> Microbacterium sp. W211
<400> 6
   gagcttgctc tgtgggatca gtggcgaacg ggtgagtaac acgtgagcaa cctgcccctg      60
   actctgggat aagcgctgga aacggcgtct aatactggat atgtgacgtg accgcatggt     120
   ctgcgtttgg aaagattttt cggttgggga tgggctcgcg gcctatcagc ttgttggtga     180
   ggtaatggct caccaaggcg tcgacgggta gccggcctga gagggtgacc ggccacactg     240
   ggactgagac acggcccaga ctcctacggg aggcagcagt ggggaatatt gcacaatggg     300
   cgaaagcctg atgcagcaac gccgcgtgag ggatgacggc cttcgggttg taaacctctt     360
   ttagcaggga agaagcgaaa gtgacggtac ctgcagaaaa agcgccggct aactacgtgc     420
   cagcagccgc ggtaatacgt agggcgcaag cgttatccgg aattattggg cgtaaagagc     480
   tcgtaggcgg tttgtcgcgt ctgctgtgaa atcccgaggc tcaacctcgg gcctgcagtg     540
   ggtacgggca gactagagtg cggtagggga gattggaatt cctggtgtag cggtggaatg     600
   cgcagatatc aggaggaaca ccgatggcga aggcagatct ctgggccgta actgacgctg     660
   aggagcgaaa gggtggggag caaacaggct tagataccct ggtagtccac cccgtaaacg     720
   ttgggaacta gttgtggggt ccattccacg gattccgtga cgcagctaac gcattaagtt     780
   ccccgcctgg ggagtacggc cgcaaggcta aaactcaaag gaattgacgg ggacccgcac     840
   aagcggcgga gcatgcggat taattcgatg caacgcgaag aaccttacca aggcttgaca     900
   tatacgagaa cgggccagaa atggtcaact ctttggacac tcgtaaacag gtggtgcatg     960
   gttgtcgtca gctcgtgtcg tgagatgttg ggttaagtcc cgcaacgagc gcaac         1015
<210> 7
   <211> 955
   <212> RNA
   <213> Microbacterium sp. W219
<400> 7
   accggagctt gctctgtggg atcagtggcg aacgggtgag taacacgtga gcaacctgcc 60
   cctgactctg ggataagcgc tggaaacggc gtctaatact ggatatgtga cgtgaccgca 120
   tggtctgcgt ttggaaagat ttttcggttg gggatgggct cgcggcctat cagcttgttg 180
   gtgaggtaat ggctcaccaa ggcgtcgacg ggtagccggc ctgagagggt gaccggccac 240
   actgggactg agacacggcc cagactccta cgggaggcag cagtggggaa tattgcacaa 300
   tgggcgaaag cctgatgcag caacgccgcg tgagggatga cggccttcgg gttgtaaacc 360
   tcttttagca gggaagaagc gaaagtgacg gtacctgcag aaaaagcgcc ggctaactac 420
   gtgccagcag ccgcggtaat acgtagggcg caagcgttat ccggaattat tgggcgtaaa 480
   gagctcgtag gcggtttgtc gcgtctgctg tgaaatcccg aggctcaacc tcgggcctgc 540
   agtgggtacg ggcagactag agtgcggtag gggagattgg aattcctggt gtagcggtgg 600
   aatgcgcaga tatcaggagg aacaccgatg gcgaaggcag atctctgggc cgtaactgac 660
   gctgaggagc gaaagggtgg ggagcaaaca ggcttagata ccctggtagt ccaccccgta 720
   aacgttggga actagttgtg gggtccattc cacggattcc gtgacgcagc taacgcatta 780
   agttccccgc ctggggagta cggccgcaag gctaaaactc aaaggaattg acggggaccc 840
   gcacaagcgg cggagcatgc ggattaattc gatgcaacgc gaagaacctt accaaggctt 900
   gacatatacg agaacgggcc agaaatggtc aactctttgg acactcgtaa acagg 955
<210> 8
   <211> 965
   <212> RNA
   <213> Microbacterium sp. W229
<400> 8
   agagagcttg ctctttggat cagtggcgaa cgggtgagta acacgtgagc aatctgcccc 60
   tgactctggg ataacagttg gaaacagctg ctaataccgg atacgagctt cgaaggcatc 120
   ttcagaagct ggaaagaact tcggtcaggg atgagctcgc ggcctatcag ctagttggtg 180
   aggtaatggc tcaccaaggc gtcgacgggt agccggcctg agagggtgac cggccacact 240
   gggactgaga cacggcccag actcctacgg gaggcagcag tggggaatat tgcacaatgg 300
   gcgcaagcct gatgcagcaa cgccgcgtga gggacgacgg ccttcgggtt gtaaacctct 360
   tttagcaggg aagaagcgaa agtgacggta cctgcagaaa aagcgccggc taactacgtg 420
   ccagcagccg cggtaatacg tagggcgcaa gcgttatccg gaattattgg gcgtaaagag 480
   ctcgtaggcg gtttgtcgcg tctgctgtga aaactggagg ctcaacctcc agcctgcagt 540
   gggtacgggc agactagagt gcggtagggg agattggaat tcctggtgta gcggtggaat 600
   gcgcagatat caggaggaac accgatggcg aaggcagatc tctgggccgt aactgacgct 660
   gaggagcgaa agggtgggga gcaaacaggc ttagataccc tggtagtcca ccccgtaaac 720
   gttgggaact agttgtgggg tccattccac ggattccgtg acgcagctaa cgcattaagt 780
   tccccgcctg gggagtacgg ccgcaaggct aaaactcaaa ggaattgacg gggacccgca 840
   caagcggcgg agcatgcgga ttaattcgat gcaacgcgaa gaaccttacc aaggcttgac 900
   atatacgaga acgggccaga aatggtcaac tctttggaca ctcgtaaaca ggtggtgcat 960
   ggttg 965
<210> 9
   <211> 809
   <212> RNA
   <213> Microbacterium sp. W232
<400> 9
   agagagcttg ctctttggat cagtggcgaa cgggtgagta acacgtgagc aatctgcccc      60
   tgactctggg ataacagttg gaaacagctg ctaataccgg atacgagctt cgaaggcatc     120
   ttcagaagct ggaaagaact tcggtcaggg atgagctcgc ggcctatcag ctagttggtg     180
   aggtaatggc tcaccaaggc gtcgacgggt agccggcctg agagggtgac cggccacact     240
   gggactgaga cacggcccag actcctacgg gaggcagcag tggggaatat tgcacaatgg     300
   gcgcaagcct gatgcagcaa cgccgcgtga gggacgacgg ccttcgggtt gtaaacctct     360
   tttagcaggg aagaagcgaa agtgacggta cctgcagaaa aagcgccggc taactacgtg     420
   ccagcagccg cggtaatacg tagggcgcaa gcgttatccg gaattattgg gcgtaaagag     480
   ctcgtaggcg gtttgtcgcg tctgctgtga aaactggagg ctcaacctcc agcctgcagt     540
   gggtacgggc agactagagt gcggtagggg agattggaat tcctggtgta gcggtggaat     600
   gcgcagatat caggaggaac accgatggcg aaggcagatc tctgggccgt aactgacgct     660
   gaggagcgaa agggtgggga gcaaacaggc ttagataccc tggtagtcca ccccgtaaac     720
   gttgggaact agttgtgggg tccattccac ggattccgtg acgcagctaa cgcattaagt     780
   tccccgcctg gggagtacgg ccgcaaggc                                       809
<210> 10
   <211> 830
   <212> RNA
   <213> Microbacterium sp. W240
<400> 10
   agagagcttg ctctctggat cagtggcgaa cgggtgagta acacgtgagc aacctgcccc      60
   ggactctggg ataacagctg gaaacagctg ctaataccgg atacgagctg cgaaggcatc     120
   ttcagcagct ggaaagaatt tcggtccggg atgggctcgc ggcctatcag ctagttggtg     180
   aggtaatggc tcaccaaggc gtcgacgggt agccggcctg agagggtgac cggccacact     240
   gggactgaga cacggcccag actcctacgg gaggcagcag tggggaatat tgcacaatgg     300
   gcgaaagcct gatgcagcaa cgccgcgtga gggatgacgg ccttcgggtt gtaaacctct     360
   tttagcaggg aagaagcgaa agtgacggta cctgcagaaa aagcgccggc taactacgtg     420
   ccagcagccg cggtaatacg tagggcgcaa gcgttatccg gaattattgg gcgtaaagag     480
   ctcgtaggcg gtttgtcgcg tctgctgtga aaacccgagg ctcaacctcg ggcctgcagt     540
   gggtacgggc agactagagt gcggtagggg agattggaat tcctggtgta gcggtggaat     600
   gcgcagatat caggaggaac accgatggcg aaggcagatc tctgggccgt aactgacgct     660
   gaggagcgaa agggtgggga gcaaacaggc ttagataccc tggtagtcca ccccgtaaac     720
   gttgggaact agttgtgggg tccattccac ggattccgtg acgcagctaa cgcattaagt     780
   tccccgcctg gggagtacgg ccgcaaggct aaaactcaaa cgaattgacg                830
<210> 11
   <211> 800
   <212> RNA
   <213> Microbacterium sp. W242
<400> 11
   aacggtgaaa gagagcttgc tctctggatc agtggcgaac gggtgagtaa cacgtgagca      60
   acctgccccg gactctggga taacagctgg aaacagctgc taataccgga tacgagctgc     120
   gaaggcatct tcagcagctg gaaagaattt cggtccggga tgggctcgcg gcctatcagc     180
   tagttggtga ggtaatggct caccaaggcg tcgacgggta gccggcctga gagggtgacc     240
   ggccacactg ggactgagac acggcccaga ctcctacggg aggcagcagt ggggaatatt     300
   gcacaatggg cgaaagcctg atgcagcaac gccgcgtgag ggatgacggc cttcgggttg     360
   taaacctctt ttagcaggga agaagcgaaa gtgacggtac ctgcagaaaa agcgccggct     420
   aactacgtgc cagcagccgc ggtaatacgt agggcgcaag cgttatccgg aattattggg     480
   cgtaaagagc tcgtaggcgg tttgtcgcgt ctgctgtgaa aacccgaggc tcaacctcgg     540
   gcctgcagtg ggtacgggca gactagagtg cggtagggga gattggaatt cctggtgtag 600
   cggtggaatg cgcagatatc aggaggaaca ccgatggcga aggcagatct ctgggccgta 660
   actgacgctg aggagcgaaa gggtggggag caaacaggct tagataccct ggtagtccac 720
   cccgtaaacg ttgggaacta gttgtggggt ccattccacg gattccgtga cgcagctaac 780
   gcattaagtt ccccgcctgg 800
<210> 12
   <211> 800
   <212> RNA
   <213> Microbacterium sp. W259
<400> 12
   agcagagctt gctctgtgga tcagtggcga acgggtgagt aacacgtgag caacctgccc 60
   ctgactctgg gataagcgct ggaaacggcg tctaataccg gatatgagct gcgatcgcat 120
   ggtcagcagt tggaaagatt tttcggtctg ggatgggctc acggcctatc agcttgttgg 180
   tgaggtaatg gctcaccaag gcgtcgacgg gtagccggcc tgagagggtg accggccaca 240
   ctgggactga gacacggccc agactcctac gggaggcagc agtggggaat attgcacaat 300
   gggcgaaagc ctgatgcagc aacgccgcgt gagggatgac ggccttcggg ttgtaaacct 360
   cttttagcag ggaagaagcg aaagtgacgg tacctgcaga aaaagcgccg gctaactacg 420
   tgccagcagc cgcggtaata cgtagggcgc aagcgttatc cggaattatt gggcgtaaag 480
   agctcgtagg cggtttgtcg cgtctgctgt gaaatcccga ggctcaacct cgggtctgca 540
   gtgggtacgg gcagactaga gtgcggtagg ggagattgga attcctggtg tagcggtgga 600
   atgcgcagat atcaggagga acaccgatgg cgaaggcaga tctctgggcc gttactgacg 660
   ctgaggagcg aaagggtggg gagcaaacag gcttagatac cctggtagtc caccccgtaa 720
   acgttgggaa ctagttgtgg ggtccattcc acggattccg tgacgcagct aacgcattaa 780
   gttccccgcc tggggagtac 800
<210> 13
   <211> 904
   <212> RNA
   <213> Microbacterium sp. W261
<400> 13
   agcttgcttg gtggatcagt ggcgaacggg tgagtaacac gtgagcaacc tgccctggac      60
   tctgggataa gcgctggaaa cggcgtctaa tactggatat gagctctcat cgcatggtgg     120
   gggttggaaa gattttttgg tctgggatgg gctcgcggcc tatcagcttg ttggtgaggt     180
   aatggctcac caaggcgtcg acgggtagcc ggcctgagag ggtgaccggc cacactggga     240
   ctgagacacg gcccagactc ctacgggagg cagcagtggg gaatattgca caatgggcga     300
   aagcctgatg cagcaacgcc gcgtgaggga tgacggcctt cgggttgtaa acctctttta     360
   gcagggaaga agcgaaagtg acggtacctg cagaaaaagc gccggctaac tacgtgccag     420
   cagccgcggt aatacgtagg gcgcaagcgt tatccggaat tattgggcgt aaagagctcg     480
   taggcggttt gtcgcgtctg ctgtgaaatc ccgaggctca acctcgggcc tgcagtgggt     540
   acgggcagac tagagtgcgg taggggagat tggaattcct ggtgtagcgg tggaatgcgc     600
   agatatcagg aggaacaccg atggcgaagg cagatctctg ggccgtaact gacgctgagg     660
   agcgaaaggg tggggagcaa acaggcttag ataccctggt agtccacccc gtaaacgttg     720
   ggaactagtt gtggggacca ttccacggtt tccgtgacgc agctaacgca ttaagttccc     780
   cgcctgggga gtacggccgc aaggctaaaa ctcaaaggaa ttgacgggga cccgcacaag     840
   cggcggagca tgcggattaa ttcgatgcaa cgcgaagaac cttaccaagg cttgacatac     900
   acca                                                                  904
<210> 14
   <211> 1016
   <212> RNA
   <213> Microbacterium sp. W267
<400> 14
   agagagcttg ctctctggat cagtggcgaa cgggtgagta acacgtgagc aacctgcccc      60
   ggactctggg ataacagctg gaaacagctg ctaataccgg atacgagctg cgaaggcatc     120
   ttcagcagct ggaaagaatt tcggtccggg atgggctcgc ggcctatcag ctagttggtg     180
   aggtaatggc tcaccaaggc gtcgacgggt agccggcctg agagggtgac cggccacact     240
   gggactgaga cacggcccag actcctacgg gaggcagcag tggggaatat tgcacaatgg     300
   gcgaaagcct gatgcagcaa cgccgcgtga gggatgacgg ccttcgggtt gtaaacctct     360
   tttagcaggg aagaagcgaa agtgacggta cctgcagaaa aagcgccggc taactacgtg     420
   ccagcagccg cggtaatacg tagggcgcaa gcgttatccg gaattattgg gcgtaaagag     480
   ctcgtaggcg gtttgtcgcg tctgctgtga aaacccgagg ctcaacctcg ggcctgcagt     540
   gggtacgggc agactagagt gcggtagggg agattggaat tcctggtgta gcggtggaat     600
   gcgcagatat caggaggaac accgatggcg aaggcagatc tctgggccgt aactgacgct     660
   gaggagcgaa agggtgggga gcaaacaggc ttagataccc tggtagtcca ccccgtaaac     720
   gttgggaact agttgtgggg tccattccac ggattccgtg acgcagctaa cgcattaagt     780
   tccccgcctg gggagtacgg ccgcaaggct aaaactcaaa ggaattgacg gggacccgca     840
   caagcggcgg agcatgcgga ttaattcgat gcaacgcgaa gaaccttacc aaggcttgac     900
   atatacgaga acgggccaga aatggtcaac tctttggaca ctcgtaaaca ggtggtgcat     960
   ggttgtcgtc agctcgtgtc gtgagatgtt gggttaagtc ccgcaacgag cgcaac        1016
<210> 15
   <211> 1033
   <212> RNA
   <213> Microbacterium sp. W269
<400> 15
   tcgacggtga accggagctt gctctgtggg atcagtggcg aacgggtgag taacacgtga 60
   gcaacctgcc cctgactctg ggataagcgc tggaaacggc gtctaatact ggatatgtga 120
   cgtgaccgca tggtctgcgt ttggaaagat ttttcggttg gggatgggct cgcggcctat 180
   cagcttgttg gtgaggtaat ggctcaccaa ggcgtcgacg ggtagccggc ctgagagggt 240
   gaccggccac actgggactg agacacggcc cagactccta cgggaggcag cagtggggaa 300
   tattgcacaa tgggcggaag cctgatgcag caacgccgcg tgagggatga cggccttcgg 360
   gttgtaaacc tcttttagca gggaagaagc gaaagtgacg gtacctgcag aaaaagcgcc 420
   ggctaactac gtgccagcag ccgcggtaat acgtagggcg caagcgttat ccggaattat 480
   tgggcgtaaa gagctcgtag gcggtttgtc gcgtctgctg tgaaatcccg aggctcaacc 540
   tcgggcctgc agtgggtacg ggcagactag agtgcggtag gggagattgg aattcctggt 600
   gtagcggtgg aatgcgcaga tatcaggagg aacaccgatg gcgaaggcag atctctgggc 660
   cgtaactgac gctgaggagc gaaagggtgg ggagcaaaca ggcttagata ccctggtagt 720
   ccaccccgta aacgttggga actagttgtg gggtccattc cacggattcc gtgacgcagc 780
   taacgcatta agttccccgc ctggggagta cggccgcaag gctaaaactc aaaggaattg 840
   acggggaccc gcacaagcgg cggagcatgc ggattaattc gatgcaacgc gaagaacctt 900
   accaaggctt gacatatacg agaacgggcc agaaatggtc aactctttgg acactcgtaa 960
   acaggtggtg catggttgtc gtcagctcgt gtcgtgagat gttgggttaa gtcccgcaac 1020
   gagcgcaacc ctc 1033
<210> 16
   <211> 823
   <212> RNA
   <213> Microbacterium sp. W283
<400> 16
   ttgctgggtg gattagtggc gaacgggtga gtaacacgtg agcaacctgc ccctgactct 60
   gggataagcg ctggaaacgg cgtctaatac tggatacgaa caagaatcgc atggttactt 120
   gttggaaaga ttttttggtt ggggatgggc tcgcggccta tcagcttgtt ggtgaggtaa 180
   tggctcacca aggcgtcgac gggtagccgg cctgagaggg tgaccggcca cactgggact 240
   gagacacggc ccagactcct acgggaggca gcagtgggga atattgcaca atgggcggaa 300
   gcctgatgca gcaacgccgc gtgagggatg acggccttcg ggttgtaaac ctcttttagc     360
   agggaagaag cgagagtgac ggtacctgca gaaaaagcgc cggctaacta cgtgccagca     420
   gccgcggtaa tacgtagggc gcaagcgtta tccggaatta ttgggcgtaa agagctcgta     480
   ggcggtttgt cgcgtctgct gtgaaatccc gaggctcaac ctcgggcctg cagtgggtac     540
   gggcagacta gagtgcggta ggggagattg gaattcctgg tgtagcggtg gaatgcgcag     600
   atatcaggag gaacaccgat ggcgaaggca gatctctggg ccgtaactga cgctgaggag     660
   cgaaagggtg gggagcaaac aggcttagat accctggtag tccaccccgt aaacgttggg     720
   aactagttgt ggggtccatt ccacggattc cgtgacgcag ctaacgcatt aagttccccg     780
   cctggggagt acggccgcaa ggctaaaact caaaggaatt gac                       823
<210> 17
   <211> 1078
   <212> RNA
   <213> Microbacterium sp. W230
<400> 17
   agagagcttg ctctttggat cagtggcgaa cgggtgagta acacgtgagc aatctgcccc      60
   tgactctggg ataacagttg gaaacagctg ctaataccgg atacgagctt cgaaggcatc     120
   ttcagaagct ggaaagaact tcggtcaggg atgagctcgc ggcctatcag ctagttggtg     180
   aggtaatggc tcaccaaggc gtcgacgggt agccggcctg agagggtgac cggccacact     240
   gggactgaga cacggcccag actcctacgg gaggcagcag tggggaatat tgcacaatgg     300
   gcgcaagcct gatgcagcaa cgccgcgtga gggacgacgg ccttcgggtt gtaaacctct     360
   tttagcaggg aagaagcgaa agtgacggta cctgcagaaa aagcgccggc taactacgtg     420
   ccagcagccg cggtaatacg tagggcgcaa gcgttatccg gaattattgg gcgtaaagag     480
   ctcgtaggcg gtttgtcgcg tctgctgtga aaactggagg ctcaacctcc agcctgcagt     540
   gggtacgggc agactagagt gcggtagggg agattggaat tcctggtgta gcggtggaat     600
   gcgcagatat caggaggaac accgatggcg aaggcagatc tctgggccgt aactgacgct     660
   gaggagcgaa agggtgggga gcaaacaggc ttagataccc tggtagtcca ccccgtaaac     720
   gttgggaact agttgtgggg tccattccac ggattccgtg acgcagctaa cgcattaagt     780
   tccccgcctg gggagtacgg ccgcaaggct aaaactcaaa ggaattgacg gggacccgca      840
   caagcggcgg agcatgcgga ttaattcgat gcaacgcgaa gaaccttacc aaggcttgac     900
   atatacgaga acgggccaga aatggtcaac tctttggaca ctcgtaaaca ggtggtgcat     960
   ggttgtcgtc agctcgtgtc gtgagatgtt gggttaagtc ccgcaacgag cgcaaccctc    1020
   gttctatgtt gccagcacgt aatggtggga actcatggga tactgccggg gtcaactc      1078
<210> 18
   <211> 1068
   <212> RNA
   <213> Microbacterium sp. W292
<400> 18
   gcggagcttg ctccgctgga tcagtggcga acgggtgagt aacacgtgag caatctgccc      60
   ctgactctgg gataagcgct ggaaacggcg tctaataccg gatacgagct gcgaaggcat     120
   cttcagcagc tggaaagaac ttcggtcagg gatgagctcg cggcctatca gctagttggt     180
   gaggtaacgg ctcaccaagg cgtcgacggg tagccggcct gagagggtga ccggccacac     240
   tgggactgag acacggccca gactcctacg ggaggcagca gtggggaata ttgcacaatg     300
   ggcgcaagcc tgatgcagca acgccgcgtg agggacgacg gccttcgggt tgtaaacctc     360
   ttttagcagg gaagaagcga aagtgacggt acctgcagaa aaagcgccgg ctaactacgt     420
   gccagcagcc gcggtaatac gtagggcgca agcgttatcc ggaattattg ggcgtaaaga     480
   gctcgtaggc ggtctgtcgc gtctgctgtg aaaacccgag gctcaacctc gggcctgcag     540
   tgggtacggg cagactagag tgcggtaggg gagattggaa ttcctggtgt agcggtggaa     600
   tgcgcagata tcaggaggaa caccgatggc gaaggcagat ctctgggccg taactgacgc     660
   tgaggagcga aagggtgggg agcaaacagg cttagatacc ctggtagtcc accccgtaaa     720
   cgttgggaac tagttgtggg gaccattcca cggtttccgt gacgcagcta acgcattaag     780
   ttccccgcct ggggagtacg gccgcaaggc taaaactcaa aggaattgac ggggacccgc     840
   acaagcggcg gagcatgcgg attaattcga tgcaacgcga agaaccttac caaggcttga     900
   catatacgag aacgggccag aaatggtcaa ctctttggac actcgtaaac aggtggtgca     960
   tggttgtcgt cagctcgtgt cgtgagatgt tgggttaagt cccgcaacga gcgcaaccct    1020
   cgttctatgt tgccagcacg taatggtggg aactcatggg atactgcc                 1068
<210> 19
   <211> 832
   <212> RNA
   <213> Microbacterium sp. W251
<400> 19
   agagagcttg ctctttggat cagtggcgaa cgggtgagta acacgtgagc aatctgcccc       60
   tgactctggg ataacagttg gaaacagctg ctaataccgg atacgagctt cgaaggcatc      120
   ttcagaagct ggaaagaact tcggtcaggg atgagctcgc ggcctatcag ctagttggtg      180
   aggtaatggc tcaccaaggc gtcgacgggt agccggcctg agagggtgac cggccacact      240
   gggactgaga cacggcccag actcctacgg gaggcagcag tggggaatat tgcacaatgg      300
   gcgcaagcct gatgcagcaa cgccgcgtga gggacgacgg ccttcgggtt gtaaacctct      360
   tttagcaggg aagaagcgaa agtgacggta cctgcagaaa aagcgccggc taactacgtg      420
   ccagcagccg cggtaatacg tagggcgcaa gcgttatccg gaattattgg gcgtaaagag      480
   ctcgtaggcg gtttgtcgcg tctgctgtga aaactggagg ctcaacctcc agcctgcagt      540
   gggtacgggc agactagagt gcggtagggg agattggaat tcctggtgta gcggtggaat      600
   gcgcagatat caggaggaac accgatggcg aaggcagatc tctgggccgt aactgacgct      660
   gaggagcgaa agggtgggga gcaaacaggc ttagataccc tggtagtcca ccccgtaaac      720
   gttgggaact agttgtgggg tccattccac ggattccgtg acgcagctaa cgcattaagt      780
   tccccgcctg ggagtacggc ccgcaaggct aaaactcaaa ggaattgacg gg              832
<210> 20
   <211> 1010
   <212> RNA
   <213> Microbacterium sp. W236
<400> 20
   ccagcttgct gggtggatta gtggcgaacg ggtgagtaac acgtgagcaa cctgcccctg      60
   actctgggat aagcgctgga aacggcgtct aatactggat atgtcccgtc accgcatggt     120
   gtgcgggtgg aaagattttt cggttgggga tgggctcgcg gcctatcagc ttgttggtga     180
   ggtaatggct caccaaggcg tcgacgggta gccggcctga gagggtgacc ggccacactg     240
   ggactgagac acggcccaga ctcctacggg aggcagcagt ggggaatatt gcacaatggg     300
   cggaagcctg atgcagcaac gccgcgtgag ggatgacggc cttcgggttg taaacctctt     360
   ttagcaggga agaagcgaga gtgacggtac ctgcagaaaa agcaccggct aactacgtgc     420
   cagcagccgc ggtaatacgt agggtgcaag cgttatccgg aattattggg cgtaaagagc     480
   tcgtaggcgg tctgtcgcgt ctgctgtgaa atcccgaggc tcaacctcgg gcttgcagtg     540
   ggtacgggca gactagagtg cggtagggga gattggaatt cctggtgtag cggtggaatg     600
   cgcagatatc aggaggaaca ccgatggcga aggcagatct ctgggccgta actgacgctg     660
   aggagcgaaa gggtggggag caaacaggct tagataccct ggtagtccac cccgtaaacg     720
   ttgggaacta gttgtggggt cctttccacg gattccgtga cgcagctaac gcattaagtt     780
   ccccgcctgg ggagtacggc cgcaaggcta aaactcaaag gaattgacgg ggacccgcac     840
   aagcggcgga gcatgcggat taattcgatg caacgcgaag aaccttacca aggcttgaca     900
   tacacgagaa cgggccagaa atggtcaact ctttggacac tcgtgaacag gtggtgcatg     960
   gttgtcgtca gctcgtgtcg tgagatgttg ggttaagtcc cgcaacgagc               1010
<210> 21
   <211> 1027
   <212> RNA
   <213> Microbacterium sp. EC6
<400> 21
   agcaacctgc ccctgactct gggataagcg ctggaaacgg cgtctaatac tggatatgtc 60
   ccgtcaccgc atggtgtgtg ggtggaaaga tttttcggtt ggggatgggc tcgcggccta 120
   tcagcttgtt ggtgaggtaa tggctcacca aggcgtcgac gggtagccgg cctgagaggg 180
   tgaccggcca cactgggact gagacacggc ccagactcct acgggaggca gcagtgggga 240
   atattgcaca atgggcgcaa gcctgatgca gcaacgccgc gtgagggatg acggccttcg 300
   ggttgtaaac ctcttttagc agggaagaag cgtgagtgac ggtacctgca gaaaaagcac 360
   cggctaacta cgtgccagca gccgcggtaa tacgtagggt gcaagcgtta tccggaatta 420
   ttgggcgtaa agagctcgta ggcggtttgt cgcgtctgct gtgaaattcc gaggctcaac 480
   ctcgggcttg cagtgggtac gggcagacta gagtgcggta ggggagattg gaattcctgg 540
   tgtagcggtg gaatgcgcag atatcaggag gaacaccgat ggcgaaggca gatctctggg 600
   ccgtaactga cgctgaggag cgaaagggtg gggagcaaac aggcttagat accctggtag 660
   tccaccccgt aaacgttggg aactagttgt ggggtccttt ccacggattc cgtgacgcag 720
   ctaacgcatt aagttccccg cctggggagt acggccgcaa ggctaaaact caaaggaatt 780
   gacggggacc cgcacaagcg gcggagcatg cggattaatt cgatgcaacg cgaagaacct 840
   taccaaggct tgacatacac cagaacaccc tggaaacagg ggactctttg gacactggtg 900
   aacaggtggt gcatggttgt cgtcagctcg tgtcgtgaga tgttgggtta agtcccgcaa 960
   cgagcgcaac cctcgttcta tgttgccagc acgtaatggt gggaactcat gggatactgc 1020
   cggggtc 1027
<210> 22
   <211> 1026
   <212> RNA
   <213> Microbacterium sp. EC21
<400> 22
   agcaatctgc ccctgactct gggataagcg ctggaaacgg cgtctaatac cggatacgag 60
   ctgcgaaggc atcttcagca gctggaaaga acttcggtca gggatgagct cgcggcctat 120
   cagctagttg gtgaggtaac ggctcaccaa ggcgtcgacg ggtagccggc ctgagagggt 180
   gaccggccac actgggactg agacacggcc cagactccta cgggaggcag cagtggggaa 240
   tattgcacaa tgggcgcaag cctgatgcag caacgccgcg tgagggacga cggccttcgg 300
   gttgtaaacc tcttttagca gggaagaagc gaaagtgacg gtacctgcag aaaaagcgcc 360
   ggctaactac gtgccagcag ccgcggtaat acgtagggcg caagcgttat ccggaattat 420
   tgggcgtaaa gagctcgtag gcggtctgtc gcgtctgctg tgaaaacccg aggctcaacc 480
   tcgggcctgc agtgggtacg ggcagactag agtgcggtag gggagattgg aattcctggt 540
   gtagcggtgg aatgcgcaga tatcaggagg aacaccgatg gcgaaggcag atctctgggc 600
   cgtaactgac gctgaggagc gaaagggtgg ggagcaaaca ggcttagata ccctggtagt 660
   ccaccccgta aacgttggga actagttgtg gggaccattc cacggtttcc gtgacgcagc 720
   taacgcatta agttccccgc ctggggagta cggccgcaag gctaaaactc aaaggaattg 780
   acggggaccc gcacaagcgg cggagcatgc ggattaattc gatgcaacgc gaagaacctt 840
   accaaggctt gacatatacg agaacgggcc agaaatggtc aactctttgg acactcgtaa 900
   acaggtggtg catggttgtc gtcagctcgt gtcgtgagat gttgggttaa gtcccgcaac 960
   gagcgcaacc ctcgttctat gttgccagca cgtaatggtg ggaactcatg ggatactgcc 1020
   ggggtc 1026
<210> 23
   <211> 1027
   <212> RNA
   <213> Microbacterium sp. EC19
<400> 23
   agcaacctgc ccctgactct gggataagcg ctggaaacgg cgtctaatac tggatacgaa 60
   caagaatcgc atggttactt gttggaaaga ttttttggtt ggggatgggc tcgcggccta 120
   tcagcttgtt ggtgaggtaa tggctcacca aggcgtcgac gggtagccgg cctgagaggg 180
   tgaccggcca cactgggact gagacacggc ccagactcct acgggaggca gcagtgggga 240
   atattgcaca atgggcggaa gcctgatgca gcaacgccgc gtgagggatg acggccttcg 300
   ggttgtaaac ctcttttagc agggaagaag cgagagtgac ggtacctgca gaaaaagcgc 360
   cggctaacta cgtgccagca gccgcggtaa tacgtagggc gcaagcgtta tccggaatta 420
   ttgggcgtaa agagctcgta ggcggtttgt cgcgtctgct gtgaaatccc gaggctcaac 480
   ctcgggcctg cagtgggtac gggcagacta gagtgcggta ggggagattg gaattcctgg 540
   tgtagcggtg gaatgcgcag atatcaggag gaacaccgat ggcgaaggca gatctctggg 600
   ccgtaactga cgctgaggag cgaaagggtg gggagcaaac aggcttagat accctggtag 660
   tccaccccgt aaacgttggg aactagttgt ggggtccatt ccacggattc cgtgacgcag 720
   ctaacgcatt aagttccccg cctggggagt acggccgcaa ggctaaaact caaaggaatt 780
   gacggggacc cgcacaagcg gcggagcatg cggattaatt cgatgcaacg cgaagaacct 840
   taccaaggct tgacatatac gagaacgggc cagaaatggt caactctttg gacactcgta 900
   aacaggtggt gcatggttgt cgtcagctcg tgtcgtgaga tgttgggtta agtcccgcaa 960
   cgagcgcaac cctcgttcta tgttgccagc acgtaatggt gggaactcat gggatactgc 1020
   cggggtc 1027
<210> 24
   <211> 1026
   <212> RNA
   <213> Microbacterium sp. EC24
<400> 24
   agcaacctgc cctggactct gggataagcg ctggaaacgg cgtctaatac tggatatgag 60
   ctccttccgc atggtggggg ttggaaagat ttttcggtct gggatgggct cgcggcctat 120
   cagcttgttg gtgaggtaat ggctcaccaa ggcgtcgacg ggtagccggc ctgagagggt 180
   gaccggccac actgggactg agacacggcc cagactccta cgggaggcag cagtggggaa 240
   tattgcacaa tgggcggaag cctgatgcag caacgccgcg tgagggatga cggccttcgg 300
   gttgtaaacc tcttttagca gggaagaagc gaaagtgacg gtacctgcag aaaaagcgcc 360
   ggctaactac gtgccagcag ccgcggtaat acgtagggcg caagcgttat ccggaattat 420
   tgggcgtaaa gagctcgtag gcggtttgtc gcgtctgctg tgaaatcccg aggctcaacc 480
   tcgggcctgc agtgggtacg ggcagactag agtgcggtag gggagattgg aattcctggt 540
   gtagcggtgg aatgcgcaga tatcaggagg aacaccgatg gcgaaggcag atctctgggc 600
   cgtaactgac gctgaggagc gaaagggtgg ggagcaaaca ggcttagata ccctggtagt 660
   ccaccccgta aacgttggga actagttgtg gggaccattc cacggtttcc gtgacgcagc 720
   taacgcatta agttccccgc ctggggagta cggccgcaag gctaaaactc aaaggaattg 780
   acggggaccc gcacaagcgg cggagcatgc ggattaattc gatgcaacgc gaagaacctt 840
   accaaggctt gacatatacg agaacgggcc agaaatggtc aactctttgg acactcgtaa 900
   acaggtggtg catggttgtc gtcagctcgt gtcgtgagat gttgggttaa gtcccgcaac 960
   gagcgcaacc ctcgttctat gttgccagca cgtaatggtg ggaactcatg ggatactgcc 1020
   ggggtc 1026
<210> 25
   <211> 1027
   <212> RNA
   <213> Microbacterium sp. EC8
<400> 25
   agcaacctgc ccctgactct gggataagcg ctggaaacgg cgtctaatac tggatacgag 60
   tagcgatcgc atggtcagct actggaaaga ttttttggtt ggggatgggc tcgcggccta 120
   tcagcttgtt ggtgaggtaa tggctcacca aggcgtcgac gggtagccgg cctgagaggg 180
   tgaccggcca cactgggact gagacacggc ccagactcct acgggaggca gcagtgggga 240
   atattgcaca atgggcggaa gcctgatgca gcaacgccgc gtgagggatg acggccttcg 300
   ggttgtaaac ctcttttagc agggaagaag cgagagtgac ggtacctgca gaaaaagcgc 360
   cggctaacta cgtgccagca gccgcggtaa tacgtagggc gcaagcgtta tccggaatta 420
   ttgggcgtaa agagctcgta ggcggtttgt cgcgtctgct gtgaaatccc gaggctcaac 480
   ctcgggcctg cagtgggtac gggcagacta gagtgcggta ggggagattg gaattcctgg 540
   tgtagcggtg gaatgcgcag atatcaggag gaacaccgat ggcgaaggca gatctctggg 600
   ccgtaactga cgctgaggag cgaaagggtg gggagcaaac aggcttagat accctggtag 660
   tccaccccgt aaacgttggg aactagttgt ggggtccatt ccacggattc cgtgacgcag 720
   ctaacgcatt aagttccccg cctggggagt acggccgcaa ggctaaaact caaaggaatt 780
   gacggggacc cgcacaagcg gcggagcatg cggattaatt cgatgcaacg cgaagaacct 840
   taccaaggct tgacatatac gagaacgggc cagaaatggt caactctttg gacactcgta 900
   aacaggtggt gcatggttgt cgtcagctcg tgtcgtgaga tgttgggtta agtcccgcaa 960
   cgagcgcaac cctcgttcta tgttgccagc acgtaatggt gggaactcat gggatactgc 1020
   cggggtc 1027
<210> 26
   <211> 1027
   <212> RNA
   <213> Microbacterium sp. EC1
<400> 26
   agcaacctgc ccctgactct gggataagcg ctggaaacgg cgtctaatac tggatatgtc 60
   ccgtcaccgc atggtgtgcg ggtggaaaga tttttcggtt ggggatgggc tcgcggccta 120
   tcagcttgtt ggtgaggtaa tggctcacca aggcgtcgac gggtagccgg cctgagaggg 180
   tgaccggcca cactgggact gagacacggc ccagactcct acgggaggca gcagtgggga 240
   atattgcaca atgggcgaaa gcctgatgca gcaacgccgc gtgagggatg acggccttcg 300
   ggttgtaaac ctcttttagc agggaagaag cgaaagtgac ggtacctgca gaaaaagcac 360
   cggctaacta cgtgccagca gccgcggtaa tacgtagggt gcaagcgtta tccggaatta 420
   ttgggcgtaa agagctcgta ggcggtctgt cgcgtctgct gtgaaatccc gaggctcaac 480
   ctcgggcttg cagtgggtac gggcagacta gagtgcggta ggggagattg gaattcctgg 540
   tgtagcggtg gaatgcgcag atatcaggag gaacaccgat ggcgaaggca gatctctggg 600
   ccgtaactga cgctgaggag cgaaagggtg gggagcaaac aggcttagat accctggtag 660
   tccaccccgt aaacgttggg aactagttgt ggggtccttt ccacggattc cgtgacgcag 720
   ctaacgcatt aagttccccg cctggggagt acggccgcaa ggctaaaact caaaggaatt 780
   gacggggacc cgcacaagcg gcggagcatg cggattaatt cgatgcaacg cgaagaacct 840
   taccaaggct tgacatacac gagaacgggc cagaaatggt caactctttg gacactcgtg 900
   aacaggtggt gcatggttgt cgtcagctcg tgtcgtgaga tgttgggtta agtcccgcaa 960
   cgagcgcaac cctcgttcta tgttgccagc acgtaatggt gggaactcat gggatactgc 1020
   cggggtc 1027
<210> 27
   <211> 1420
   <212> RNA
   <213> Microbacterium_koreense_EU834282.1
<400> 27
   gggtgcttac catgcaagtc gaacggtgaa ggtggagctt gctccaccgg atcagtggcg      60
   aacgggtgag taacacgtga gcaacctgcc ccggactctg ggataacagt tggaaacagc     120
   tgctaatacc ggatacgagc tgcgaaggca tcttcagcag ctggaaagaa cttcggtctg     180
   ggatgggctc acggcctatc agctagttgg tgaggtaatg gctcaccaag gcgtcgacgg     240
   gtagccggcc tgagagggtg accggccaca ctgggactga gacaccgccc agactcctac     300
   gggaggcagc agtggggaat attgcacaat gggcgcaagc ctgatgcagc aacgccgcgt     360
   gagggacgac ggccttcggg ttgtaaacct cttttagcag ggaagaagcg aaagtgacgg     420
   tacctgcaga aaaagcaccg gctaactacg tgccagcagc cgcggtaata cgtagggtgc     480
   aagcgttatc cgggaattat tgggcgtaaa gagctcgtag gcggtttgtc gcgtctgctg     540
   tgaaatctgg gggctcaacc cccagcctgc agtgggtacg ggcagactag agtgcggtag     600
   gggagattgg aattcctggt gtagcggtgg aatgcgcaga tatcaggagg aacaccgatg     660
   gcgaaggcag atctctgggc cgtaactgac gctgaggagc gaaagggtgg ggagcaaaca     720
   ggcttagata ccctggtagt ccaccccgta aacgttggga actagttgtg gggtccattc     780
   cacggattcc gtgacgcagc taacgcatta agttccccgc ctggggagta cggccgcaag     840
   gctaaaactc aaaggaattg acggggaccc gcacaagcgg cggagcatgc ggattaattc     900
   gatgcaacgc gaagaacctt accaaggctt gacatatacg agaacgggcc agaaatggtc     960
   aactctttgg acactcgtaa acaggtggtg catggttgtc gtcagctcgt gtcgtgagat    1020
   gttgggttaa gtcccgcaac gagcgcaacc ctcgttctat gttgccagca cgtaatggtg    1080
   ggaactcatg ggatactgcc ggggtcaact cggaggaagg tggggatgac gtcaaatcat    1140
   catgcccctt atgtcttggg cttcacgcat gctacaatgg ccggtacaat gggctgcaat    1200
   accgtaaggt ggagcgaatc ccaaaaagcc ggtcccagtt cggattgagg tctgcaactc    1260
   gacctcatga agtcggagtc gctagtaatc gcagatcagc aacgctgcgg tgaatacgtt    1320
   cccgggtctt gtacacaccg cccgtcaagt catgaaagtc ggtaacacct gaagccggtg    1380
   gcccaaccct tgtggaggga gccgtcgaag gtggattcgg                           1420
<210> 28
   <211> 1474
   <212> RNA
   <213> Microbacterium_oxydans_EU714375.1
<400> 28
   tgaatgctgg cggcgtgctt aacacatgca agtccaacgg cgaacacgga gcttgctctg      60
   ggggatcagt ggcgaacggg tgagtaacac gtgagcaacc tgcccctgac tctgggataa     120
   gcgctggaaa cggcgtctaa tactggatat gtgacgtgac cgcatggtct gcgtctggaa     180
   agaatttcgg ttggggatgg gctcgcggcc tatcagcttg ttggtgaggt aatggctcac     240
   caaggcgtcg acgggtagcc ggcctgagag ggtgaccggc cacactggga ctgagacacg     300
   gcccagactc ctacgggagg cagcagtggg gaatattgca caatgggcgc aagcctgatg     360
   cagcaacgcc gcgtgaggga cgacggcctt cgggttgtaa acctctttta gcagggaaga     420
   agcgaaagtg acggtacctg cagaaaaagc gccggctaac tacgtgccag cagccgcggt     480
   aatacgtagg gcgcaagcgt tatccggaat tattgggcgt aaagagctcg taggcggttt     540
   gtcgcgtctg ctgtgaaatc cggaggctca acctccggcc tgcagtgggt acgggcagac     600
   tagagtgcgg taggggagat tggaattcct ggtgtagcgg tggaatgcgc agatatcagg     660
   aggaacaccg atggcgaagg cagatctctg ggccgtaact gacgctgagg agcgaaaggg     720
   tggggagcaa acaggcttag ataccctggt agtccacccc gtaaacgttg ggaactagtt     780
   gtggggtcca ttccacggat tccgtgacgc agctaacgca ttaagttccc cgcctgggga     840
   gtacggccgc aaggctaaaa ctcaaaggaa ttgacgggga cccgcacaag cggcggagca     900
   tgcggattaa ttcgatgcaa cgcgaagaac cttaccaagg cttgacatat acgagaacgg     960
   gccagaaatg gtcaactctt tggacactcg taaacaggtg gtgcatggtt gtcgtcagct    1020
   cgtgtcgtga gatgttgggt taagtcccgc aacgagcgca accctcgttc tatgttgcca    1080
   gcacgtaatg gtgggaactc atgggatact gccggggtca actcggagga aggtggggat    1140
   gacgtcaaat catcatgccc cttatgtctt gggcttcacg catgctacaa tggccggtac    1200
   aaagggctgc aataccgcga ggtggagcga atcccaaaaa gccggtccca gttcggattg    1260
   aggtctgcaa ctcgacctca tgaagtcgga gtcgctagta atcgcagatc agcaacgctg    1320
   cggtgaatac gttcccgggt cttgtacaca ccgcccgtca agtcatgaaa gtcggtaaca    1380
   cctgaagccg gtggcctaac ccttgtggag ggagccgtcg aaggtgggat cggtaattag    1440
   gactaagtcg taacaaggta gccgtaccgg aagg                                 1474
<210> 29
   <211> 1370
   <212> RNA
   <213> Microbacterium_sp._FJ204467.1
<400> 29
   agtcgaacgg tgaaagagag cttgctctct ggatcagtgg cgaacgggtg agtaacacgt 60
   gagcaacctg ccccggactc tgggataaca gctggaaaca gctgctaata ccggatacga 120
   gctgcgaagg catcttcagc agctggaaag aatttcggtc cgggatgggc tcgcggccta 180
   tcagctagtt ggtgaggtaa tggctcacca aggcgtcgac gggtagccgg cctgagaggg 240
   tgaccggcca cactgggact gagacacggc ccagactcct acgggaggca gcagtgggga 300
   atattgcaca atgggcgaaa gcctgatgca gcaacgccgc gtgaaggatg acggccttcg 360
   ggttgtaaac ctcttttagc agggaagaag cgaaagtgac ggtacctgca gaaaaagcgc 420
   cggctaacta cgtgccagca gccgcggtaa tacgtagggc gcaagcgtta tccggaatta 480
   ttgggcgtaa agagatcgta ggcggtttgt cgcgtttgct gtgaaaaccc gaggctcaac 540
   ctcgggcctg cagtgggtac gggcagacta gagtgcggta ggggagattg gaattcctgg 600
   tgtagcggtg gaatgcgcag atatcaggag gaacaccgat ggcgaaggca gatctctggg 660
   ccgtaactga cgctgaggag cgaaagggtg gggagcaaac aggcttagat accctggtag 720
   tccaccccgt aaacgttggg aactagttgt ggggtccatt ccacggattc cgtgacgcag 780
   ctaacgcatt aagttccccg cctggggagt acggccgcaa ggctaaaact caaagaaatt 840
   gacggggacc cgcacaagcg gcggaacatg cggattaatt cgatgcaacg cgaaaaacct 900
   taccaaggct tgacatatac aaaaacgggc aagaaatggt caactctttg gacactcgta 960
   aacaggtggt gcatggttgt cgtcagctcg tgtcgtgaga tgttgggtta agtcccgcaa 1020
   cgagcgcaac cctcgttcta tgttgccagc gcgtaatggt gggaactcat gggatactgc 1080
   cggggtcaac tcggaggaag gtggggatga cgtcaaatca tcatgcccct tatgtcttgg 1140
   gcttcacgca tgctacaatg gccggtacaa agggctgcaa taccgcaagg tggagcgaat 1200
   cccaaaaagc cggtcccagt tcggattgag gtctgcaact cgacctcatg aagtcggagt 1260
   cgctagtaat cgcagatcag caacgctgcg gtgaatacgt tcccgggtct tgtacacacc 1320
   gcccgtcaag tcatgaaagt cggtaacacc tgaagccggt ggcccaaccc 1370
<210> 30
   <211> 1390
   <212> RNA
   <213> Microbacterium_sp._FJ204435.1
<400> 30
   tgcaagtcga acggatgtaa agagagcttg ctctctggat cagtggcgaa cgggtgagta 60
   acacgtgagc aacctgcccc ggactctggg ataacagctg gaaacagctg ctaataccgg 120
   atacgagctg cgaaggcatc ttcagcagct ggaaagaatt tcggtccggg atgggctcgc 180
   ggcctatcag ctagttggtg aggtaatggc tcaccaaggc gtctacgggt agccggcctg 240
   agagggtgac cggccacact gggactgaga cacggcccag actcctacgg gaggcagcag 300
   tggggaatat tgcacaatgg gcgaaagcct gatgcagcaa cgccgcgtga gggatgacgg 360
   ccttcgggtt gtaaacctct ttttaccagg gaagaagcaa aagtgacggt acctscaaaa 420
   aaaccgccgg ctaattactt gccagcagcc gcggttatat gtagggggcc agcgttatct 480
   ggaattattg ggggtaaaaa gctcgtaggc ggtttgttgc tttttctgtg aaaacccgag 540
   gctcaacctc gggcctgcag tgggtacggg cagactagat tgcggtaggg gagattggaa 600
   ttcctggtgt agcggtggaa tgcgcagata tcaggaggaa caccgatggc gaaggcagat 660
   ctctgggccg taactgacgc tgaagagcga aatgttgggg agcaaacagg cttaaatacc 720
   ctggtagtcc accccgtaaa cgttgggaac tagttgtggg gtccattcca cggattccgt 780
   gacgcatcta acgcattaag ttccccgcct ggggagtacg gccgcaaggc taaaactcac 840
   agggaattga cgggaacccg cacaagcggc ggagcctgcg gattaattcg atgcaacgcg 900
   aagaacctta ccaaggcttg acatatatga gaacgggcca gaaatggtca actctttgga 960
   cactcgtaaa caggtggtgc atggttgtcg tcagctcgtg tcgtgagatg ttgggttaag 1020
   tcccgcaacg agcgcaaccc tccttctatg ttgccagcac gtaatggtgg gaactcatgg 1080
   gatactgccg gggtcaactc ggaggaaggt ggggatgacg tcaaatcatc atgcccctta 1140
   tgtcttgggc ttcacgcatg ctacaatggc cggtacaaag ggctgcaata ccgcaaggtg 1200
   gagcgaatcc caaaaagccg gtcccagttc ggattgaggt ctgcaactcg acctcatgaa 1260
   gtcggagtcg ctagtaatcg cagatcagca acgctgcggt gaatacgttc ccgggtcttg 1320
   tacacaccgc ccgtcaagtc ctgaaagtcg gtaacacctg aagccggtgg cccaaccctt 1380
   gtggaggagc 1390
<210> 31
   <211> 1380
   <212> RNA
   <213> Microbacterium_sp._EU535323.1
<400> 31
   agagtttgat cctggctcag gatgaacgct ggcggcgtgc ttaatacatg caagtcgaac 60
   ggtgaacacg gagcttgctc tgtgggatca gtggcgaacg ggtgagtaac acgtgagcaa 120
   cctgcccctg actctgggat aagcgctgga aacggcgtct aatactggat atgtgacgtg 180
   accgcatggt ctgcgtctgg aaagaatttc ggttggggat gggctcgcgg cctatcagct 240
   tgttggtgag gtaatggctc accaaggcgt cgacgggtag ccggcctgag agggtgaccg 300
   gccacactgg gactgagaca cggcccagac tcctacggga ggcagcagtg gggaatattg 360
   cacaatgggc gcaagcctga tgcagcaacg ccgcgtgagg gacgacggcc tccgggttgt      420
   aaacctcttt tagcagggaa gaagcgaaag tgacggtacc tgcagaaaaa gcgccggcta      480
   actacgtgcc agcagccgcg gtaatacgta gggcgcaagc gttatccgga attattgggc      540
   gtaaagagct cgtaggcggt ttgtcgcgtc tgctgtgaaa tccggaggct caacctccgg      600
   cctgcagtgg gtacgggcag actagagtgc ggtaggggag attggaattc ctggtgtagc      660
   ggtggaatgc gcagatatca ggaggaacac cgatggcgaa ggcagatctc tgggccgtaa      720
   ctgacgctga ggagcgaaag ggtggggagc aaacaggctt agataccctg gtagtccacc      780
   ccgtaaacgt tgggaactag ttgtggggtc cattccacgg attccgtgac gcagctaacg      840
   cattaagttc cccgcctggg gagtacggcc gcaaggctaa aactcaaagg aattgacgag      900
   gacccgcaca agcggcggag catgcggatt aattcgatgc aacgcgaaga accttaccaa      960
   ggcttgacat atacgagaac gggccagaaa tggtcaactc tttggacact cgtaaacagg     1020
   tggtgcatgg ttgtcgtcag ctcgtgtcgt gagatgttgg gttaagtccc gcaacgagcg     1080
   caaccctcgt tctatgttgc cagcacgtaa tggtgggaac tcatgggata ctgccggggt     1140
   caactcggag gaaggtgggg atgacgtcaa atcatcatgc cccttatgtc ttgggcttca     1200
   cgctgctaca atggccggta caaagggctg caataccgcg aggtggagcg aatcccaaaa     1260
   agccggtccc agttcggatt gaggtctgca actcgacctc atgaagtcgg agtcgctagt     1320
   aatcgcagat cagcaacgct gcggtgaata cgttcccggg tcttgtactc accgcccgtc     1380
<210> 32
   <211> 1381
   <212> RNA
   <213> Microbacterium_sp._EU538879.1
<400> 32
   agagtctgtt cctggctcag gatgaacgct ggcggcgtgc ttaacacatg caagtcgaac      60
   ggtgaacacg gagcttgctc tgtgggatca gtggcgaacg ggtgagtaac acgtgagcaa     120
   cctgcccctg actctgggat aagcgctgga aacggcgtct aatactggat atgtgacgtg     180
   accgcatggt ctgcgtctgg aaagaatttc ggttggggat gggctcgcgg cctatcagct     240
   tgtcggtgag gtaatggctc accaaggcgt cgacgggtag ccggcctgag agggtgaccg     300
   gccacactgg gactgagaca cggcccagac tcctacggga ggcagcagtg gggaatattg     360
   cacaatgggc gcaagcctga tgcagcaacg ccgcgtgagg gacgacggcc ttcgggttgt     420
   aaacctcttt tagcagggaa gaagcgaaag tgacggtacc tgcagaaaaa gcgccggcta     480
   actacgtgcc agcagccgcg gtaatacgta gggcgcaagc gttatccgga attattgggc     540
   gtaaagagct cgtaggcggt ttgtcgcgtc tgctgtgaaa tccggaggct caacctccgg     600
   cctgcagtgg gtacgggcag actagagtgc ggtaggggag attggaattc ctggtgtagc     660
   ggtggaatgc gcagatatca ggaggaacac cgatggcgaa ggcagatctc tgggccgtaa     720
   ctgacgctga ggagcgaaag ggtggggagc aaacaggttt agataccctg gtagtccacc     780
   ccgtaaacgt tgggaactag ttgtggggtc cattccacag attccgtgac gcagctaacg     840
   cattaagttc cccgcctggg gagtacggcc gcaaggctaa aactcaaagg aattgacggg     900
   gacccgcaca agcggcggag catgcggatt aattcgatgc aacgcgaaga accttaccaa     960
   ggcttgacat atacgagaac gggccagaaa tggtcaactc tttggacact cgtaaacagg    1020
   tggtgcatgg ttgtcgtcag ctcgtgtcgt gagatgttgg gttaagtccc gcaacgagcg    1080
   caaccctcgt tctatgttgc cagcacgtaa tggtgggaac tcatgggata ctgccggggt    1140
   caactcggag gaaggtgggg atgacgtcaa atcatcatgc cccttatgtc ttgggcttca    1200
   cgcatgctac aatggccggt acaaagggct gcaataccgc gaggtggggc gaatcccaaa    1260
   aagccggtcc cagttcggat tgaggtctgc aactcgacct catgaagtcg gagtcgctag    1320
   taatcgcaga tcagcaacgc tgcggtgaat acgttcccgg gtcttgtact caccgcccgt    1380
   c                                                                     1381
<210> 33
   <211> 1486
   <212> RNA
   <213> Microbaterium_sp._EU573118.1
<400> 33
   gtttgatcct ggctcaggca tgaacgctgg cggcgtgctt aacacatgca agtcgaacgg 60
   tgaacacgga gcttgctctg tgggatcagt ggcgaacggg tgagtaacac gtgagcaacc 120
   tgcccctgac tctgggataa gcgctggaaa cggcgtctaa tactggatat gtgacgtgac 180
   cgcatggtct gcgtctggaa agaatttcgg ttggggatgg gcccgcggcc tatcagcttg 240
   ttggtgaggt aatggctcac caaggcgtcg acgggtagcc ggcctgagag ggtgaccggc 300
   cacactggga ctgagacacg gcccagactc ctacgggagg cagcagtggg gaatattgca 360
   caatgggcgc aagcctgatg cagcaacgcc gcgtgaggga cgacggcctt cgggttgtaa 420
   acctctttta gcagggaaga agcgaaagtg acggtacctg cagaaaaagc gccggctaac 480
   tacgtgccag cagccgcggt aatacgtagg gcgcaagcgt tatccggaat tattgggcgt 540
   aaagagctcg taggtggttt gtcgcgtctg ctgtaaaatc cggaggctca acctccggcc 600
   tgcagtgggt acggggcaga ctagagtgcg gtaggggaga ttggaattcc tggtgtagcg 660
   gtggaatgcg cagatatcag gaggaacacc gatggcgaag gcagatctct gggccgtaac 720
   tgacgctgag gagcgaaagg gtggggagca aacaggctta gataccctgg tagtccaccc 780
   cgtaaacgtt gggaactagt tgtggggtcc attccacgga ttccgtgacg cagctaacgc 840
   attaagttcc ccgcctgggg agtacggccg caaggctaaa actcaaagga attgacgggg 900
   acccgcacaa gcggcggagc atgcggatta attcgatgca acgcgaagaa ccttaccaag 960
   gcttgacata tacgagaacg ggccagaaat ggtcaactct ttggacactc gtaaacaggt 1020
   ggtgcatggt tgtcgtcagc tcgtgtcgtg agatgttggg ttaagtcccg caacgagcgc 1080
   aaccctcgtt ctatgttgcc agcacgtaat ggtgggaact catgggatac tgccggggtc 1140
   aactcggagg aaggtgggga tgacgtcaaa tcatcatgcc ccttatgtct tgggcttcac 1200
   gcatgctaca atggccggta caaagggctg caataccgcg aggtggagcg aatcccaaaa 1260
   agccggtccc agttcggatt ggggtctgca actcgacctc atgaagtcgg agtcgctagt 1320
   aatcgcagat cagcaacgct gcggtgaata cgttcccggg tcttgtacac accgcccgtc 1380
   aagtcatgaa agtcggtaac acctgaagcc ggtggcctaa cccttgtgga gggagccgtc 1440
   gaaggtggga tcggtaatta ggactaagtc gtaacaaggt aaccgt 1486
<210> 34
   <211> 1385
   <212> RNA
   <213> Microbacterium_maritypicum_EU434520.1
<400> 34
   tcgagcggtg aacacggagc ttgctctgtg ggatcagtgg cgaacgggtg agtaacacgt 60
   gagcaacctg cccctgactc tgggataagc gctggaaacg gcgtctaata ctggatatgt 120
   gacgtgaccg catggtctgc gtctggaaag aatttcggtt ggggatgggc tcgcggccta 180
   tcagcttgtt ggtgaggtaa tggctcacca aggcgtcgac gggtagccgg cctgagaggg 240
   tgaccggcca cactgggact gagacacggc ccagactcct acgggaggca gcagtgggga 300
   atattgcaca atgggcgcaa gcctgatgca gcaacgccgc gtgagggacg acggccttcg 360
   ggttgtaaac ctcttttagc agggaagaag cgaaagtgac ggtacctgca gaaaaagcgc 420
   cggctaacta cgtgccagca gccgcggtaa tacgtagggc gcaagcgtta tccggaatta 480
   ttgggcgtaa agagctcgta ggcggtttgt cgcgtctgct gtgaaatccg gaggctcaac 540
   ctccggcctg cagtgggtac gggcagacta gagtgcggta ggggagattg gaattcctgg 600
   tgtagcggtg gaatgcgcag atatcaggag gaacaccgat ggcgaaggca gatctctggg 660
   ccgtaactga cgctgaggag cgaaagggtg gggagcaaac aggcttagat accctggtag 720
   tccaccccgt aaacgttggg aactagttgt ggggtccatt ccacggattc cgtgacgcag 780
   ctaacgcatt aagttccccg cctggggagt acggccgcaa ggctaaaact caaaggaatt 840
   gacagggacc cgcacaagcg gcggagcatg cggattaatt cgatgcaacg cgaagaacct 900
   taccaaggct tgacatatac gagaacgggc cagaaatggt caactctttg gacactcgta 960
   aacaggtggt gcatggttgt cgtcagctcg tgtcgtgaga tgttgggtta agtcccgcaa 1020
   cgagcgcaac cctcgttcta tgttgccagc acgtaatggt gggaactcat gggatactgc 1080
   cggggtcaac tcggaggaag gtggggatga cgtcaaatca tcatgcccct tatgtcttgg 1140
   gcttcacgca tgctacaatg gccggtacaa agggctgcaa taccgcgagg tggagcgaat 1200
   cccaaaaagc cggtcccagt tcggattgag gtctgcaact cgacctcatg aagtcggagt 1260
   cgctagtaat cgcagatcag caacgctgcg gtgaatacgt tcccgggtct tgtacacacc 1320
   gcccgtcaag tcatgaaagt cggtaacacc tgaagccggt ggccttaccc ttttgctgta 1380
   agccg 1385
<210> 35
   <211> 1484
   <212> RNA
   <213> Microbacterium_sp._EU373435.1
<400> 35
   cggagagttt gatcctggct caggatgaac gctggcggcg tgcttaacac atgcaagtcg 60
   aacggtgaag ccaagcttgc ttggtggatc agtggcgaac gggtgagtaa cacgtgagca 120
   acctgccctg gactctggga taagcgctgg aaacggcgtc taatactgga tatgagacgt 180
   gatcgcatgg tcgtgtttgg aaagattttt cggtctggga tgggctcgcg gcctatcagc 240
   ttgttggtga ggtaatggct caccaaggcg tcgacgggta gccggcctga gagggtgacc 300
   ggccacactg ggactgagac acggcccaga ctcctacggg aggcagcagt ggggaatatt 360
   gcacaatggg cggaagcctg atgcagcaac gccgcgtgag tgatgaaggc cttagggttg 420
   taaagctctt tcaccggaga agataatgac ggtatccgga gaagaagccc cggctaactt 480
   cgtgccagca gccgcggtaa tacgaagggg gctagcgttg ttcggaatta ctgggcgtaa 540
   agagctcgta ggcggtttgt cgcgtctgct gtgaaatccc gaggctcaac ctcgggcctg 600
   cagtgggtac gggcagacta gagtgcggta ggggagattg gaattcctgg tgtagcggtg 660
   gaatgcgcag atatcaggag gaacaccgat ggcgaaggca gatctctggg ccgtaactga 720
   cgctgaggag cgaaagggtg gggagcaaac aggcttagat accctggtag tccaccccgt 780
   aaacgttggg aactagttgt ggggaccatt ccacggtttc cgtgacgcag ctaacgcatt 840
   aagttccccg cctggggagt acggccgcaa ggctaaaact caaaggaatt gacggggacc 900
   cgcacaagcg gcggagcatg cggattaatt cgatgcaacg cgaagaacct taccraggct 960
   tgacatatac gagaacgggc cagaaatggt caactctttg gacactcgta aacaggtggt 1020
   gcatggttgt cgtcagctcg tgtcgtgaga tgttgggtta agtcccgcaa cgagcgcaac 1080
   cctcgttcta tgttgccagc acgtaatggt gggaactcat gggatactgc cggggtcaac 1140
   tcggaggaag gtggggatga cgtcaaatca tcatgcccct tatgtcttgg gcttcacgca 1200
   tgctacaatg gccggtacaa agggctgcaa taccgtaagg tggagcgaat cccaaaaagc 1260
   cggtcccagt tcggattgag gtctgcaact cgacctcatg aagtcggagt cgctagtaat 1320
   cgcagatcag caacgctgcg gtgaatacgt tcccgggtct tgtacacacc gcccgtcaag 1380
   tcatgaaagt cggtaacacc tgaagccggt ggcccaaccc ttgtggaggg agccgtcgaa 1440
   ggtgggatcg gtaattagga ctaagtcgta acaaggtagc cgta 1484
<210> 36
   <211> 1485
   <212> RNA
   <213> Microbacterium_sp._EU333866.1
<400> 36
   gaacgctggc ggcgtgctta acacatgcat ttcgaacggt gaacacggag cttgctctgt 60
   gggatcagtg gcgaacgggt gagtaacacg tgagcaacct gcccctgact ctgggataag 120
   cgctggaaac ggcgtctaat actggatatg tgacgtgatc gcatggtctg cgtctggaaa 180
   gaatttcggt tggggatggg ctcgcggcct atcagcttgt tggtgaggta atggctcacc 240
   aaggcgtcga cgggtagccg gcctgagagg gtgaccggcc acactgggac tgagacacgg 300
   cccagactcc tacgggaggc agcagtgggg aatattgcac aatgggcgca agcctgatgc 360
   agcaacgccg cgtgagggat gacggccttc gggttgtaaa cctcttttag cagggaagaa 420
   gcgaaagtga cggtacctgc agaaaaagcg ccgggtaact acgtgccagc agccgcggta 480
   atacgtaggg cgcaagcgtt atccggaatt attgggcgta aagagctcgt aggcggtttg 540
   tcgcgtctgc tgtgaaatcc ggaggctcaa cctccggcct gcagtgggta cgggcagact 600
   agagtgcggt aggggagatt ggaattcctg gtgtagaggt ggaatgcgca gatatcagga 660
   ggaacaccga tggcgaagac agatctctgg gccgtaactg acgttgagga gcgaaagggt 720
   ggggagcata caggcttaga tatcctggta gtccaccccg taaacgttgg gaactagttg 780
   tggggtccat tccacggatt ccgtgacgca gctaacgcat taagttcccc gcctggggag 840
   tacggccgca aggctaaaac tcaaaggaat tgacggggac ccgcacaagc ggcggagcat 900
   gcggattaat tcgatgcaac gcgaagaacc ttaccaaggc ttgacatata cgagaacggg 960
   ccagaaatgg tcaactcatt ggacagtcgt aaacaggtgg tgcatggtaa tcgtcaggtc 1020
   gtgtcgtgag atgttgggtt aagtcccgca acgagcgcaa ccctcgttct atgttgccag 1080
   cacgtaatgg tgggaactca tgggatactg ccgggttcaa ctcggaggaa ggtggggatg 1140
   acgtcaaatc atcatgcccc ttatgtcttg ggcttcacgc atgctacaat ggccggtaca 1200
   aagggctgca ataccgcgag gtggagcgaa tcccaaaaag ccggtcccag ttcggattga 1260
   ggtctgcaac tcgacctcat gaagtcggag tcgctagtaa tcgcagatca gcaacgctgc 1320
   ggtgaatacg ttcccgggtc ttgtacacac cgcccgtcaa gtcatgaaag tcggtaacac 1380
   ctgaagccgg tggcctaacc cttgtggagg gagccgtcga aggtgggatc ggttaattag 1440
   gtacataaat taggactaag tcgtaacaag gtagccgtac cggaa 1485
<210> 37
   <211> 1406
   <212> RNA
   <213> Microbacterium_sp._AM292071.1
<400> 37
   tgaaggcgga gcttgctctg ctggatcagt ggccaacggg tgagtaaccc gtgagcaatc 60
   tgcccctgac tctgggataa gcgctggaaa cggcgtctaa tactggatac gagctgcgaa 120
   ggcatcttca gcagctggaa agaacttcgg tcagggatga gctcgcggcc tatcagcttg 180
   ttggtgaggt aatggctcac caaagcatcg acgggtagcc ggcctgaaag ggtgaccggc 240
   caccctggga ctgagacacg gcccagactc ctacgggagg cagcagtggg gaatattgca 300
   caatggggga aagcctgatg cagcaacgcc gcgtgaggga cgacggcctt cgggttgtaa 360
   acctctttta gcagggaaga agcgaaagtg acggtccctg caaaaaaagc gccggctaac 420
   tacatgccag cagccgcggt aatacgtagg gcgcaagcgt tatccggaat tattgcggcg 480
   taaagagctc gtaggcggtt tgtcgcgtct gctgtgaaat cccgaggctc aacctcgsgc 540
   ctgcwktggg tacgggcaga ctagagtgcg gtagaggaga ttggaattcc tggtgtagcg 600
   gtggaatgcg cagatatcag gaggaacacc gatggcgaag gcagatctct gggccgtaac 660
   tgacgctgag gagcgaaagg gtggggagca aacaggctta gataccctgg tagtccaccc 720
   cgtaaacgtt gggaactagt tgtggggtcc attccacgga ttccgtgacg caactaacgc 780
   attaagttcc ccgcctgggg agtacggccg caagggctaa aactcaaagg aattgacggg 840
   gacccgcaca agcggctgac atgcggatta attcgatgca acgcgaagaa ccttaccaag 900
   gcttgacata tacgagaacg ggaccagaaa tggtcaactc tttaggacac tcgtaaacag 960
   gtggtgcatg gttgtcgtca gctcgtgtcg tgagatgttc gggttaagtc ccgcaacgag 1020
   cgcaaccctc gttctatgtt gccagcacgt catggtggga actcatggaa tactgccggg 1080
   gtcaactcgg aggaaggtga ggatgacgtc aaatcatcat gccccttatg tcttgggctt 1140
   cacgcatgct acaatggccg gtacaatggg ctgcaatacc gcaaggtgga gcgaatccca 1200
   aaaagccggt cccagttcgg attgaggtct gcaactcgac ctcatgaagt cggagtcgct 1260
   agtaatcgca gatcagcaac gctgcggtga atacgttccc gggtcttgta caccccgccc 1320
   gtcaagtcat gaaagttggt aacacctgaa gccggtggcc caaccccttg tggaaggagc 1380
   cctcgatgtg ggatctggta attagg 1406
<210> 38
   <211> 1381
   <212> RNA
   <213> Microbacterium_oleivorans_EU164543.1
<400> 38
   atgcaagttc gaacggtgaa gcagagcttg ctctgtggat cagtggcgaa cgggtgagta      60
   acacgtgagc aacctgcccc tgactctggg ataagcgctg gaaacggcgt ctaatactgg     120
   atatgagctg cgatctaatg gtcagcagtt ggaaagattt ttcggtctgg gatgggctca     180
   cggcctatca gcttgttggt gaggtaatgg ctcaccaagg cgtcgacggg tagccggcct     240
   gagagggtga ccggccacac tgggactgag acacggccca gactcctacg ggaggcagca     300
   gtggggaata ttgcacaatg ggcgaaagcc tgatgcagca acgccgcgtg agggatgacg     360
   gccttcgggt tgtaaacctc ttttagcagg gaagaagcga aagtgacggt acctgcagaa     420
   aaagcgccgg ctaactacgt gccagcagcc gcggtaatac gtagggcgca agcgttatcc     480
   ggaattattg ggcgtaaaga gctcgtaggc ggtttgtcgc gtctgctgtg aaatcccgag     540
   gctcaacctc gggtctgcag tgggtacggg cagactagag tgcggtaggg gagattggaa     600
   ttcctggtgt agcggtggaa tgcgcagata tcaggaggaa caccgatggc gaaggcagat     660
   ctctgggccg ttactgacgc tgagagcgaa agggtgggga gcaaacaggc ttagataccc     720
   tggtagtcca ccccgtaaac gttgggaact agttgtgggt ccattcccgg attccgtgac     780
   gcactaacga ttaagttccc cgcctggggg agtacggccg caaggctaaa actcaaaagg     840
   aattgacggg gacccgcaca agcggcggag catgcggatt aattcgatgc aacgcgaaga     900
   accttaccaa ggcttgacat atacgagaac gggccagaaa tggtcaactc tttggacact     960
   cgtaaacagg tggtgcatgg ttgtcgtcag ctcgtgtcgt gagatgttgg gttaagtccc    1020
   gcaacgagcg caaccctcgt tctatgttgc cagcacgtaa tggtgggaac tcatgggata    1080
   ctgccggggt caactcggag gaaggtgggg atgacgtcaa atcatcatgc cccttatgtc    1140
   ttgggcttca cgcatgctac aatggccggt acaaagggct gcaataccgc gaggtggagc    1200
   gaatcccaaa aagccggtcc cagttcggat tgaggtctgc aactcgacct catgaagtcg    1260
   gagtcgctag taatcgcaga tcagcaacgc tgcggtgaat acgttcccgg gtcttgtaca    1320
   caccgcccgt caagtcatga aagtcggtaa ctacctgaag ccggtggccc aacccttgtg    1380
   g                                                                    1381
<210> 39
   <211> 1330
   <212> RNA
   <213> Microbacterium_trichotecenolyticum_EU240437.1
<400> 39
   gctgctggtg gagcagtggc gacgggtgag tacacgtgag cactggctgg actctgggat      60
   aagcgctgga acggcgtcta atactggata tgagcctctt ccgcatggtg ggggttggaa 120
   agattttttg gtctgggatg ggctcgcggt ctatcagctt gttggtgagg taatggctca 180
   ccaaggcgtc gacgggtagc cggcctgaga gggtgaccgg ccacactggg actgagacac 240
   ggcccagact cctacgggag gcagcagtgg ggaatattgc acaatgggcg gaagcctgat 300
   gcagcaacgc cgcgtgaggg atgacggcct tcgggttgta aacctctttt agcagggaag 360
   aagcgaaagt gacggtacct gcagaaaaag cgccggctaa ctacgtgcca gcagccgcgg 420
   taatacgtag ggcgcaagcg ttatccggaa ttattgggcg taaagagctc gtaggcggtt 480
   tgtcgcgtct gctgtgaaat cccgaggctc aacctcgggc ctgcagtggg tacgggcaga 540
   ctagagtgcg gtaggggaga ttggaattcc tggtgtagcg gtggaatgcg cagatatcag 600
   gaggaacacc gatggcgaag gcagatctct gggccgtaac tgacgctgag gagcgaaagg 660
   gtggggagca aacaggctta gataccctgg tagtccaccc cgtaaacgtt gggaactagt 720
   tgtggggacc attccacggt ttccgtgacg cagctaacgc attaagttcc ccgcctgggg 780
   agtacggccg caaggctaaa actcaaagga attgacgggg acccgcacaa gcggcggagc 840
   atgcggatta attcgatgca acgcgaagaa ccttaccaag gcttgacata caccagaacg 900
   ggccagaaat ggtcaactct ttggacactg gtgaacaggt ggtgcatggt tgtcgtcagc 960
   tcgtgtcgtg agatgttggg ttaagtcccg caacgagcgc aaccctcgtt ctatgttgcc 1020
   agcacgtaat ggtgggaact catgggatac tgccggggtc aactcggagg aaggtgggga 1080
   tgacgtcaaa tcatcatgcc ccttatgtct tgggcttcac gcatgctaca atggccggta 1140
   caaagggctg caataccgtg aggtggagcg aatcccaaaa agccggtccc agttcggatt 1200
   gaggtctgca actcgacctc atgaagtcgg agtcgctagt aatcgcagat cagcaacgct 1260
   gcggtgaata cgttcccggg tcttgtacac accgcccgtc aagtcatgaa gtcggtcaca 1320
   cctgaagccg 1330
<210> 40
   <211> 1323
   <212> RNA
   <213> Microbacterium_sp._EU073962.2
<400> 40
   gtcgaacgat gaacccgaag cttgctttgg gggattagtg gcgaacgggt gagtaacacg 60
   tgagcaacca gcccctcact ctgggataag cgctggaaac ggcgtctaat actggatacg 120
   agacgcgacc gcatggtcag tgtctggaaa gattttttgg tgggggatgg gctcgcggcc 180
   tatcagcttg ttggtgaggt aatggctcac caaggcgtcg acgggtagcc ggcctgagag 240
   ggtgaccggc cacactggga ctgagacacg gcccagactc ctacgggagg cagcagtggg 300
   gaatattgca caatgggcgg aagcctgatg cagcaacgcc gcgtgaggga tgacggcctt 360
   cgggttgtaa acctctttta gcagggaaga agcgaaagtg acggtacctg cagaaaaagc 420
   accggctaac tacgtgccag cagccgcggt aatacgtagg gtgcaagcgt tatccggaat 480
   tattgggcgt aaagagctcg taggcggttt gtcgcgtctg ctgtgaaatc ccgaggctca 540
   acctcgggcc tgcagtgggt acgggcagac tagagtgcgg taggggagat tggaattcct 600
   ggtgtagcgg tggaatgcgc agatatcagg aggaacaccg atggcgaagg cagatctctg 660
   ggccgtaact gacgctgagg agcgaaaggg tggggagcaa acaggcttag ataccctggt 720
   agtccacccc gtaaacgttg ggaactagtt gtggggtcct ttccacggat tccgtgacgc 780
   agctaacgca ttaagttccc cgcctgggga gtacggccgc aaggctaaaa ctcaaaggaa 840
   ttgacgggga cccgcacaag cggcggagca tgcggattaa ttcggtgcaa cgcgaagaac 900
   cttaccaagg cttgacatac acgagaacgg gccagaaatg gtcaactctt tggacactcg 960
   tgaacaggtg gtgcatggtt gtcgtcagct cgtgtcgtga gatgttgggt taagtcccgc 1020
   aacgagcgca accctcgttc tatgttgcca gcacgtaatg gtgggaactc atgggatact 1080
   gccggggtca actcggagga aggtggggat gacgtcaaat catcatgccc cttatgtctt 1140
   gggcttcacg catgctacaa tggccggtac aaagggctgc aataccgtga ggtggagcga 1200
   atcccaaaaa gccggtccca gttcggattg aggtctgcaa ctcgacctca tgaagtcgga 1260
   gtcgctagta atcgcagatc agcaacgctg cggtgaatac gttcccgggt cttgtacaca 1320
   ccg 1323
<210> 41
   <211> 1383
   <212> RNA
   <213> Microbacterium_sp._DQ824628.1
<400> 41
   agagtttgat cctggctcag gatgaacgtt ggcggcgtgc ttaacacatg caagtcgaac      60
   ggtgaagcag agcttgctct gtggatcagt ggcgaacggg tgagtaacac gtgagcaacc     120
   tgccccggac tctgggataa gcgctggaaa cggcgtctaa tactggatac gagacacgat     180
   cgcatgatca gtgtttggaa agatttttcg gtctgggatg ggctcgcggc ctatcagctt     240
   gttggtgagg taatggctca ccaaggcgtc gacgggtagc cggcctgaga gggtgaccgg     300
   ccacactggg actgagacac ggcccagact cctacgggag gcagcagtgg ggaatattgc     360
   acaatgggcg aaagcctgat gcagcaacgc cgcgtgaggg atgacggcct tcgggttgta     420
   aacctctttt agcagggaag aagcgaaagt gacggtacct gcagaaaaag caccggctaa     480
   ctacgtgcca gcagccgcgg tagtacgtag ggtgcaagcg ttatccggaa ttattgggcg     540
   taaagagctc gtaggcggtt tgtcgcgtct gctgtgaaaa cccgaggctc aacctcgggc     600
   ctgcagtggg tacgggcaga ctagagtgcg gtaggggaga ttggaattcc tggtgtagcg     660
   gtggaatgcg cagatatcag gaggaacacc gatggcgtag gcagatctct gggccgttac     720
   tgacgctgag gagcgaaagg gtggggagca aacaggctta gataccctgg tagtccaccc     780
   cgtaaacgtt gggaactagt tgtggggtcc attccacgga ttccgtgacg cagctaacgc     840
   attaagttcc ccgcctgggg agtacggccg caaggctaaa actcaaagga attggcgggg     900
   acccgcacaa gcggcggagc atgcggatta attcgatgca acgcgaagaa ccttaccaag     960
   gcttgacata cacgagaaca ccgtagaaat acgggactct ttggactctc gtgaacaggt    1020
   ggtgcatggt tgtcgtcagc tcgtgtcgtg agatgttggg ttaagtcccg caacgagcgc    1080
   aaccctcgtt ctatgttgcc agcacgtaat ggtgggaact catgggatac tgccggggtc    1140
   aactcggagg aaggtgggga tgacgtcaaa tcatcatgcc ccttatgtct tgggcttcac    1200
   gcatgctaca atggccggta caaagggctg cgataccgcg aggtggagcg aatcccaaaa    1260
   agccggtccc agttcggata gaggtctgca actcgacctc atgaagtcgg agtcgctagt    1320
   aatcgcagat cagcaacgct gcggtgaata agatcccggg tcttgcacac accgcccgtc    1380
   aag                                                                  1383
<210> 42
   <211> 1480
   <212> RNA
   <213> Microbacterium_sp._DQ985071.1
<400> 42
   agagtttgat catggctcag gatgaacgct ggcggcgtgc ttaacacatg caagtcgaac      60
   ggtgaagcca agcttgcttg gtggatcagt ggcgaacggg tgagtaacac gtgagcaacc     120
   tgccctggac tctgggataa gcgctggaaa cggcgtctaa tactggatat gagcccctat     180
   cgcatggtgg gggttggaaa gattttttgg tctgggatgg gctcgcggcc tatcagcttg      240
   ttggtgaggt aatggctcac caaggcgtcg acgggtagcc ggcctgagag ggtgaccggc     300
   cacactggga ctgagacacg gcccagactc ctacgggagg cagcagtggg gaatattgca     360
   caatgggcgg aagcctgatg cagcaacgcc gcgtgaggga tgacggcctt cgggttgtaa     420
   acctctttta gcagggaaga agcgagagtg acggtacctg cagaaaaagc gccggctaac     480
   tacgtgccag cagccgcggt aatacgtagg gcgcaagcgt tatccggaat tattgggcgt     540
   aaagagctcg taggcggttt gtcgcgtctg ctgtgaaatc ccgaggctca acctcgggcc     600
   tgcagtgggt acgggcagac tagagtgcgg taggggagat tggaattcct ggtgtagcgg     660
   tggaatgcgc agatatcagg aggaacaccg atggcgaagg cagatctctg ggccgtaact     720
   gacgctgagg agcgaaaggg tggggagcaa acaggcttag ataccctggt agtccacccc     780
   gtaaacgttg ggaactagtt gtggggacca ttccacggtt tccgtgacgc agctaacgca     840
   ttaagttccc cgcctgggga gtacggccgc aaggctaaaa ctcaaaggaa ttgacgggga     900
   cccgcacaag cggcggagca tgcggattaa ttcgatgcaa cgcgaagaac cttaccaagg     960
   cttgacatac accagaacac cgtagaaata cgggactctt tggacactgg tgaacaggtg    1020
   gtgcatggtt gtcgtcagct cgtgtcgtga gatgttgggt taagtcccgc aacgagcgca    1080
   accctcgttc tatgttgcca gcacgtaatg gtgggaactc atgggatact gccggggtca    1140
   actcggagga aggtggggat gacgtcaaat catcatgccc cttatgtctt gggcctcacg    1200
   catgctacaa tggccggtac aaaaggctgc aataccgtga ggtggagcga atcccaaaaa    1260
   gccggtccca gttcggattg aggtctgcaa ctcgacctca tgaagtcgga gtcgctagta    1320
   atcgcagatc agcaacgctg cggtgaatac gttcccgggt cttgtacaca ccgcccgtca    1380
   agtcatgaaa gtcggtaaca cctgaagccg gtggcccaac ccttgtggag ggagccgtcg    1440
   aaggtgggat cggtaattag gactaagtcg taacaaggta                           1480
<210> 43
   <211> 1438
   <212> RNA
   <213> Microbacterium_sp._DQ814695.1
<400> 43
   gatgaacgct ggcggcgtgc ttaacacatg caagtcgaac ggtgaacacg gagcttgctc      60
   tgtgggatca gtggcgaacg ggtgagtaac acgtgagcaa cctgcccctg actctgggat     120
   aagcgctgga aacggcgtct aatactggat atgtgacgtg atcgcatggt ctgcgtctgg     180
   aaagattttt cggttgggga tgggctcgcg gcctatcagc ttgttggtga ggtaatggct     240
   caccaaggcg tcgacgggta gccggcctga gagggtgacc ggccacactg ggactgagac     300
   acggcccaga ctcctacggg aggcagcagt ggggaatatt gcacaatggg cgcaagcctg     360
   atgcagcaac gccgcgtgag ggatgacggc cttcgggttg taaacctctt ttagcaggga     420
   agaagcgaaa gtgacggtac ctgcagaaaa agcgccggct aactacgtgc cagcagccgc     480
   ggtaatacgt agggcgcaag cgttatccgg aattattggg cgtaaagagc tcgtaggcgg     540
   tttgtcgcgt ctgctgtgaa atccggaggc tcaacctccg gcctgcagtg ggtacgggca     600
   gactagagtg cggtagggga gattggaatt cctggtgtag cggtggaatg cgcagatatc     660
   aggaggaaca ccgatggcga aggcagatct ctgggccgta actgacgctg aggagcgaaa     720
   gggtggggag caaacaggct tagataccct ggtagtccac cccgtaaacg ttgggaacaa     780
   gttgtggggt ccatttcacg gattccggtg acgcagttaa cgcattaagt ttccccgcct      840
   tggggagtac ggccgcaagg ctaaaactca aaggaattga cggggacccg cacaagcggc     900
   ggagcatgcg gattaattcg atgcaacgcg aagaacctta ccaaggcttg acatatacga     960
   gaacgggcca gaaatggtca actctttgga cactcgtaaa caggtggtgc atggttgtcg    1020
   tcagctcgtg tcgtgagatg ttgggttaag tcccgcaacg agcgcaaccc tcgttctatg    1080
   ttgccagcac gtaatggtgg gaactcatgg gatactgccg gggtcaactc ggaggaaggt    1140
   ggggatgacg tcaaatcatc atgcccctta tgtcttgggc ttcacgcatg ctacaatggc    1200
   cggtacaaag ggctgcaata ccgtgaggtg gagcgaatcc caaaaagccg gtcccagttc    1260
   ggattgaggt ttgcaactcg acctcatgaa gtcggagtcg ctagtaatcg cagatcagca    1320
   acgctgcggt gaatacgttc ccgggtcttg tacacaccgc ccgtcaagtc atgaaagtcg    1380
   gtaacacctg aagccggtgg cctaaccctt gtggagggag ccgtcgaagg tgggatcg      1438
<210> 44
   <211> 1483
   <212> RNA
   <213> Microbacterium_sp._AM403655.1
<400> 44
   agagtttgat cctggctcag gatgaacgct ggtggcgtgc ttaacacatg caagtcgaac 60
   ggtgaacacg gagcttgctc tgtgggatca gtggcgaacg ggtgagtaac acgtgagcaa 120
   cctacccctg actctgggat aagcgctgga aacggcgtct aatactggat atgtgatgcg 180
   accgcatggt ctgtatctgg aaagaatttc ggttggggat gggctcgcgg cctatcagct 240
   tgttggtgag gtaatggctc accaaggcgt cgacgggtag ccggcctgag agggtgaccg 300
   gccacactgg gactgagaca cggcccagac tcctacggga ggcagcagtg gggaatattg 360
   cacaatgggc gcaagcctga tgcagcaacg ccgcgtgagg gacgacggcc ttcgggttgt 420
   aaacctcttt tagcagggaa gaagcgaaag tgacggtacc tgcagaaaaa gcaccggcta 480
   actacgtgcc agcagccgcg gtaatacgta gggtgcaagc gttatccgga attattgggc 540
   gtaaagagct cgtaggcggt ttgtcgcgtc tgctgtgaaa tccggaggct caacctccgg 600
   cctgcagtgg gtacgggcag actagagtgc ggtaggggag attggaattc ctggtgtagc 660
   ggtggaatgc gcagatatca ggaggaacac cgatggcgaa ggcagatctc tgggccgtaa 720
   ctgacgctga ggagcgaaag ggtggggagc aaacaggctt agataccctg gtagtccacc 780
   ccgtaaacgt tgggaactag ttgtggggtc cattccacgg attccgtgac gcagctaacg 840
   cattaagttc cccgcctggg gagtacggcc gcaaggctaa aactcaaagg aattgacggg 900
   gacccgcaca agcggcggag catgcggatt aattcgatgc aacgcgaaga accttaccaa 960
   ggcttggcat atacgagaac gggccagaaa tggtcaactc tttggacact cgtaaacagg 1020
   tggtgcatgg ttgtcgtcag ctcgtgtcgt gagatgttgg gttaagtccc gcaacgagcg 1080
   caaccctcgt tctatgttgc cagcacgtaa tggtgggaac tcatgggata ctgccggggt 1140
   caactcggag gaaggtgggg atgacgtcaa atcatcatgc cccttatgtc ttgggcttca 1200
   cgcatgctac aatggccggt acaaagggct gcaataccgc gaggtggagc gaatcccaaa 1260
   aagccggtcc cagttcggat tgaggtctgc aactcgacct catgaagtcg gagtcgctag 1320
   taatcgcaga tcagcaacgc tgcggtgaat acgttcccgg gtcttgtaca caccgcccgt 1380
   caagtcatga aagtcggtaa cacctgaagc cggtggccta acccttgtgg agggagccgt 1440
   cgaaggtggg atcggtaatt aggactaagt cgtaacaagg tag 1483
<210> 45
   <211> 1421
   <212> RNA
   <213> Microbacterium_sp._AB248875.1
<400> 45
   atcatggctc aggatgaacg ctgcggcgtg cttaacacat gcaagtcgaa cggtgaaaga      60
   gagcttgctc tctagatcag tggcgaacgg gtgagtaaca cgtgagcaat ctgcccttga     120
   ctctgggata agcgttggaa acgacgtcta ataccggata cgagctgtga aggcatcttc     180
   aacagctgga aagaacttcg gtcaaggatg agctcgcggc ctatcagcta gttggtgagg     240
   taatggctca ccaaggcgtc gacgggtagc cggcctgaga gggtgaccgg ccacactggg     300
   actgagacac ggcccagact cctacgggag gcagcagtgg ggaatattgc acaatgggcg     360
   caagcctgat gcagcaacgc cgcgtgaggg acgacggcct tcgggttgta aacctctttt     420
   agcagggaag aagcgaaagt gacggtacct gcagaaaaag caccggctaa ctacgtgcca     480
   gcagccgcgg taatacgtag ggtgcaagcg ttatccggaa ttattgggcg taaagagctc     540
   gtaggcggtt tgtcgcgtct gctgtgaaac cccgaggctc aacctcgggc ctgcagtggg      600
   tacgggcaga ctagagtgcg gtaggggaga ttggaattcc tggtgtagcg gtggaatgcg     660
   cagatatcag gaggaacacc gatggcgaag gcagatctct gggccgtaac tgacgctgag     720
   gagcgaaagg gtggggagca aacaggctta gataccctgg tagtccaccc cgtaaacgtt     780
   gggaactagt tgtggggtcc attccacgga ttccgtgacg cagctaacgc attaagttcc     840
   ccgcctgggg agtacggccg caaggctaaa actcaaagga attgacgggg acccgcacaa     900
   gcggcggagc atgcggatta attcgatgca acgcgaagaa ccttaccaag gcttgacata     960
   tacgagaacg ggccagaaat ggtcaactct ttggacactc gtaaacaggt ggtgcatggt    1020
   tgtcgtcagc tcgtgtcgtg agatgttggg ttaagtcccg caacgagcgc aaccctcgtt    1080
   ctatgttgcc agcacgtaat ggtgggaact catgggatac tgccggggtc aactcggagg    1140
   aaggtgggga tgacgtcaaa tcatcatgcc ccttatgtct tgggcttcac gcatgctaca    1200
   atggccggta caaagggctg caataccgta aggtggagcg aatcccaaaa agccggtccc    1260
   agttcggatt gaggtctgca actcgacctc atgaagtcgg agtcgctagt aatcgcagat    1320
   cagcaacgct gcggtgaata cgttcccggg tcttgtacac accgcccgtc aagtcatgaa    1380
   agtcggtaac acctgaagtc cggtggccca acccttgtgg a                        1421
<210> 46
   <211> 1515
   <212> RNA
   <213> Microbacterium_sp._DQ304806.1
<400> 46
   agagtttgat ccgggctcag gatgaacgct ggcggcgtgc ttaacacatg caagtcgaac 60
   ggtgaagccc agcttgctgg gtggatcagt ggcgaacggg tgagtaacac gtgagcaacc 120
   tgcccctgac tctgggataa gcgctggaaa cggcgtctaa tactggatat gaatcatggc 180
   cgcatggtcg acgtctggaa agatttttcg gttggggatg ggctcgcggc ctatcagctt 240
   gttggtgagg taatggctca ccaaggcgtc gacgggtagc cggcctgaga gggtgaccgg 300
   ccacactggg actgagacac ggcccagact cctacgggag gcagcagtgg ggaatattgc 360
   acaatgggcg caagcctgat gcagcaacgc cgcgtgaggg atgacggcga aagttgtaaa 420
   cctcttttgg caaggaagaa gccttcgggt gacggtactt gcagaaaaag cgccggctaa 480
   ctacgtgcca gcagccgcgg taatacgtag ggcgcaagcg ttatccggaa ttattgggcg 540
   taaagagctc gtaggcggtt cgtcgcgtct gctgtgaaat cccgaggctc aacctcgggc 600
   ctgcagtggg tacgggcaga ctagagtgcg gtaggggaga ttggaattcc tggtgtagcg 660
   gtggaatgcg cagatatcag gaggaacacc gatggcgaag cagatctctg ggccgtaact 720
   gacgctgagg agcgaaaggg tggggagcaa acaggcttag ataccctggt agtccacccc 780
   gtaaacgttg ggaactagtt gtggggtcct ttccacggat tccgtgacgc agctaacgca 840
   ttaagttccc cgcctgggga gtacggccgc aaggctaaaa ctcaaaggaa ttgacgggga 900
   cccgcacaag cggcggagca tgcggattaa ttcgatgcaa cgcgaagaac cttaccaagg 960
   cttgacatac accggaacgc cctagaaata gggaactctt tggacactgg tgtacaggtg 1020
   gtgcatggtt gtcgtcagct cgtgtcgtga gatgttgggt taagtcccgc aacgagcgca 1080
   accctcgttc tatgttgcca gcacgttatg gtgggaactc atgggatact gccggggtca 1140
   actcggagga aggtggggat gacgtcaaat catcatgccc cttatgtctc gggcttcacg 1200
   catgctacaa tggccggtac aaagggctgc aataccgtga ggtggagcga atcccaaaaa 1260
   gccggtccca gttcggattg aggtctgcaa ctcgacctca tgaagtcgga gtcgctagta 1320
   atcgcaaatc agcaacgctg cggtgaatac gttcccgggt cttgtacaca ccgcccgtca 1380
   agtcatgaaa gtcggtaaca cctgaagccg gtggcccaac ccttgtggag ggagccgtcg 1440
   aaggtgggat cggtaattag gactaagtcg taacaaggta gccgtaccgg aaagtgcggc 1500
   tggatcacct ccttt 1515
<210> 47
   <211> 1483
   <212> RNA
   <213> Microbacterium_sp._DQ337545.1
<400> 47
   agagtttgat catggctcag gatgaacgct ggcggcgtgc ttaacacatg caagtcgaac 60
   ggtgaagccc agcttgctgg gtggatcagt ggcgaacggg tgagtaacac gtgagcaacc 120
   tgcccctgac tctgggataa gcgctggaaa cggcgtctaa tactggatat gtgacgtgac 180
   cgcatggtct gcgtctggaa agaatttcgg ttggggatgg gctcgcggcc tatcagcttg 240
   ttggtgaggt aatggctcac caaggcgtcg acgggtagcc ggcctgagag ggtgaccggc 300
   cacactggga ctgagacacg gcccagactc ctacgggagg cagcagtggg gaatattgca 360
   caatgggcgc aagcctgatg cagcaacgcc gcgtgaggga tgacggcctt cgggttgtaa 420
   acctctttta gcagggaaga agcgaaagtg acggtacctg cagaaaaagc gccggctaac 480
   tacgtgccag cagccgcggt aatacgtagg gcgcaagcgt tatccggaat tattgggcgt 540
   aaagagctcg taggcggttt gtcgcgtctg ctgtgaaatc cggaggctca acctccggcc 600
   tgcagtgggt acgggcagac tagagtgcgg taggggagat tggaattcct ggtgtagcgg 660
   tggaatgcgc agatatcagg aggaacaccg atggcgaagg cagatctctg ggccgtaact 720
   gacgctgagg agcgaaaggg tggggagcaa acaggcttag ataccctggt agtccacccc 780
   gtaaacgttg ggaactagtt gtggggtcca ttccacggat tccgtgacgc agctaacgca 840
   ttaagttccc cgcctgggga gtacggccgc aaggctaaaa ctcaaaggaa ttgacgggga 900
   cccgcacaag cggcggagca tgcggattaa ttcgatgcaa cgcgaagaac cttaccaagg 960
   cttgacatat acgagaacgg gccagaaatg gtcaactctt tggacactcg taaacaggtg 1020
   gtgcacggtt gtcgtcagct cgtgtcgtga gatgttgggt taagtcccgc aacgagcgca 1080
   accctcgttc tatgttgcca gcacgtaatg gtgggaactc atgggatact gccggggtca 1140
   actcggagga aggtggggat gacgtcaaat catcatgccc cttatgtctt gggcttcacg 1200
   catgctacaa tggccggtac aaagggctgc aataccgcga ggtggagcga atcccaaaaa 1260
   gccggtccca gttcggattg aggtctgcaa ctcgacctca tgaagtcgga gtcgctagta 1320
   atcgcagatc agcaacgctg cggtgaatac gttcccgggt cttgtacaca ccgcccgtca 1380
   agtcatgaaa gtcggtaaca cctgaagccg gtggcctaac ccttgtggag ggagctgtcg 1440
   aaggtgggat cggtaattag gactaagtcg taacaaggta acc 1483
<210> 48
   <211> 1489
   <212> RNA
   <213> Microbacterium_sp._DQ279383.1
<400> 48
   agagtttgat cctggctcag gatgaacgct ggcggcgtgc ttaacacatg caagtcgaac 60
   ggtgaagccc agcttgctgg gtggatcagt ggcgaacggg tgagtaacac gtgagcaacc 120
   tgcccctgac tctgggataa gcgctggaaa cggcgtctaa tactggatac gagtagcgac 180
   cgcatggtca gttactggaa agatttattg gttggggatg ggctcgcggc ctatcagctt 240
   gttggtgagg taatggctca ccaaggcgtc gacgggtagc cggcctgaga gggtgaccgg 300
   ccacactggg actgagacac ggcccagact cctacgggag gcagcagtgg ggaatattgc 360
   acaatgggcg caagcctgat gcagcaacgc cgcgtgaggg atgacggcct tcgggttgta 420
   aacctctttt agcagggaag aagcgaaagt gacggtacct gcagaaaaag cggcccgctt 480
   actacgtgcc agcagccgcg ggtatacgta gggcgcaagc gttatccgga attattgggc 540
   gtaaaagagc tcgtaggcgg tttgtcgcgt ctgctgtgaa aatccggagg ctcaacctcc 600
   ggcctgcagt gggtacgggc agactagagt gcggtagggg agattggaat tcctggtgta 660
   gcggtgggat gcgcagatat catgaggaac accgattgcg aaggcagatc tctgggccgt 720
   aactgacgct gagagcgaaa gggtggggag caacagtctt agataccctg gtagtccacc 780
   ccgtaaacgt tgggaactag gtgtggggtc cattccacgg attccgtgac gcagctaacg 840
   cattaagttc cccgcactgg ggagtacggc cgcaagtcta aaactcaaag gaattgacgg 900
   ggacccgcac aagcggcgga gcatgcggat tatttcgatg caacgcgaag acccttacca 960
   aggctttgac atatacgaga acgggcccag aaatggtcaa actctttggg acactcgtaa 1020
   acaggtggtg catggttgtc gtcagctcgt gtcgtgagat gtttggttaa gtcccgcaac 1080
   gagcgcaacc ctcgttctat gttgccagca cgtaatggtg ggaactcatg ggatactgcc 1140
   ggggtcaact cggaggaagg tggggatgac gtcaaatcat catgcccctt atgtctttgg 1200
   cttcacgcat gctaccatgg ccggtacaaa gggctgccat accgcgaggt ggagcgaatc 1260
   ccacaaagcc ggtcccagtt ctgattgagg tctgcaactc gacctcatga agtcggagtc 1320
   gctagttatc gcagatcagc aacgctgcgg tggatacgtt cccgggtctt gtacacaccg 1380
   cccgtcaagt catgaaagtc ggtaacacct gaagccggtg gcctaaccct tgtggaggga 1440
   gccgtcgaag gtgggatcgg taattaggac taagtcgtaa caaggtaac 1489
<210> 49
   <211> 1490
   <212> RNA
   <213> Microbacterium_arabinogalactanolyticum_AY509224.1
<400> 49
   atcctggctc aggatgaacg ctggcggcgt gcttaacaca tgcaagtcga acgatgaagc 60
   ccagcttgct gggtggatta gtggcgaacg ggtgagtaac acgtgagcaa cctgcccctg 120
   actctgggat aagcgctgga aacggcgtct aatactggat atgtcccatc accgcatggt 180
   gtgtgggtgg aaagattttt cggttgggga tgggctcgcg gcctatcagc ttgttggtga 240
   ggtaatggct caccaaggcg tcgacgggta gccggcctga gagggtgacc ggccacactg 300
   cggactgaga cacggcccag actcctacgg gaggcagcag tggggaatat tgcacaatgg 360
   gcggaagcct gatgcagcaa cgccgcgtga gggatgacgg ccttcgggtt gtaaacctct 420
   tttagcaggg aagaagcgaa agtgacggtc ctctgagaaa aagcaccggc taactacgtg 480
   ccagcagccc gcggtaatac gtagggtgca agcgttatcc ggaattattg ggcgtaaaga 540
   gctcgtaggc ggtttgtcgc gtctgctgtg aaatcccgag gctcaacttc gggcttgcag 600
   tgggtacggg cagactagag tgcggtaggg gagattggaa ttcctggtgt agcggtggaa 660
   tgcgcagata tcaggaggaa caccgatggc gaaggcagat ctctgggccg taactgacgc 720
   tgaggagcga aagggtgggg agcaaacagg cttagatacc ctggtagtcc accccgtaaa 780
   cgttgggaac tagttgtggg gtcctttcca cggattccgt gacgcagcta acgcattaag 840
   ttcccgcggg gagtacggcc gcaaggctaa aactcaaagg aattgacggg gacccgcaca 900
   agcggcggag catgcggatt aattcgatgc aacgcgaaga accttaccaa ggcttgacat 960
   acacgagaac gggccagaaa tggtcaactc tttggacact cgtgaacagg tggtgcatgg 1020
   ttgtcgtcag ctcgtgtcgt gagatgttgg gttaagtccc gcaacgagcg caaccctcgt 1080
   tctatgttgc cagcacgtaa tggtgggaac tcatgggata ctgccggggt caactcggag 1140
   gaaggtgggg atgacgtcaa atcatcatgc cccttatgtc ttgggcttca cgcatgctac 1200
   aatggccggt acaatgggct gcgataccgt aaggtggagc gaatcccaaa aagccggtcc 1260
   cagttcggat tgaggtctgc aactcgacct catgaagtcg gagtcgctag taatcgcaga 1320
   tcagcaacgc tgcggtgaat acgttcccgg gtcttgtaca caccgcccgt caagtcatga 1380
   aagtcggtaa cacctgaagc cggtggccta acccttgtgg agggagccgt cgaaggtggg 1440
   attggtaatt aggactaagt cgtaacaagg tagccgtacc ggaaggtgcg 1490
<210> 50
   <211> 1446
   <212> RNA
   <213> Microbacterium_sp._AJ576398.1
<400> 50
   gatgaacgct ggcggcgtgc ttaacacatg caagtcgaac ggtgaaagcg gagcttgctc 60
   tgctggatca gtggcgaacg ggtgagtaac acgtgagcaa cctgccccgg actctgggat 120
   aacagctgga aacagctgct aataccggat acgagctgcg aaggcatctt cagcagctgg 180
   aaagaacttc ggtccgggat gggctcgcgg cctatcagct agttggtaag gtaacggctc 240
   accaaggcgt cgacgggtag ccggcctgag agggtgaccg gccacactgg gactgagaca 300
   cggcccagac tcctacggga ggcagcagtg gggaatattg cacaatgggc gcaagcctga 360
   tgcagcaacg ccgcgtgagg gacgacggcc ttcgggttgt aaacctcttt tagcagggaa 420
   gaagcgaaag tgacggtacc tgcagaaaaa gcaccggcta actacgtgcc agcagccgcg 480
   gtaatacgta gggtgcaagc gttatccgga attattgggc gtaaagagct cgtaggcggt 540
   ctgtcgcgtc tgctgtgaaa acccgaggct caacctcggg cctgcagtgg gtacgggcag 600
   actagagtgc ggtaggggag attggaattc ctggtgtagc ggtggaatgc gcagatatca 660
   ggaggaacac cgatggcgaa ggcagatctc tgggccgtaa ctgacgctga ggagcgaaag 720
   ggtggggagc aaacaggctt agataccctg gtagtccacc ccgtaaacgt tgggaactag 780
   ttgtggggac cattccacgg tttccgtgac gcagctaacg cattaagttc cccgcctggg 840
   gagtacggcc gcaaggctaa aactcaaagg aattgacggg gacccgcaca agcggcggag 900
   catgcggatt aattcgatgc aacgcgaaga accttaccaa ggcttgacat atacgagaac 960
   gggccagaaa tggtcaactc tttggacact cgtaaacagg tggtgcatgg ttgtcgtcag 1020
   ctcgtgtcgt gagatgttgg gttaagtccc gcaacgagcg caaccctcgt tctatgttgc 1080
   cagcacgtaa tggtgggaac tcatgggata ctgccggggt caactcggag gaaggtgggg 1140
   atgacgtcaa atcatcatgc cccttatgtc ttgggcttca cgcatgctac aatggccggt 1200
   acaaagggct gcaataccgt aaggtggagc gaatcccaaa aagccggtcc cagttcggat 1260
   tgaggtctgc aactcgacct catgaagtcg gagtcgctag taatcgcaga tcagcaacgc 1320
   tgcggtgaat acgttcccgg gtcttgtaca caccgcccgt caagtcatga aagtcggtaa 1380
   cacctgaagc cggtggccca acccttgtgg agggagccgt cgaaggtggg atcggtaatt 1440
   aggact 1446
<210> 51
   <211> 1478
   <212> RNA
   <213> Microbacterium_sp._AY635877.1
<400> 51
   gatgaacgct ggcggcgtgc ttaacacatg caagtcgaac ggtgaagccc ggcttgctgg 60
   gtggatcagt ggcgaacggg tgagtaacac gtgagcaacc tgcccctgac tctgggataa 120
   gcgctggaaa cggcgtctaa tactggatac gagtagcgac cgcatggtca gttactggaa 180
   agatttattg gttggggatg ggctcgcggc ctatcagctt gttggtgagg taatggctca 240
   ccaaggcgtc gacgggtagc cggcctgaga gggtgaccgg ccacactggg actgagacac 300
   ggcccagact cctacgggag gcagcagtgg ggaatattgc acaatgggcg caagcctgat 360
   gcagcaacgc cgcgtgaggg atgacggcct tcgggttgta aacctctttt agcagggaag 420
   aagcgaaagt gacggtacct gcagaaaaag cgccggctaa ctacgtgcca gcagccgcgg 480
   taatacgtag ggcgcaagcg ttatccggaa ttattgggcg taaagagctc gtaggcggtt 540
   tgtcgcgtct gctgtgaaat ccggaggctc aacctccggc ctgcagtggg tacgggcaga 600
   ctagagtgcg gtaggggaga ttggaattcc tggtgtagcg gtggaatgcg cagatatcag 660
   gaggaacacc gatggcgaag gcagatctct gggccgtaac tgacgctgag gagcgaaagg 720
   gtggggagca aacaggctta gataccctgg tagtccaccc cgtaaacgtt gggaactagt 780
   tgtggggtcc attccacgga ttccgtgacg cagctaacgc attaagttcc ccgcctgggg 840
   agtacggccg caaggctaaa actcaaagga attgacgggg acccgcacaa gcggcggagc 900
   atgcggatta attcgatgca acgcgaagaa ccttaccaag gcttgacata tacgagaacg 960
   ggccagaaat ggtcaactct ttggacactc gtaaacaggt ggtgcatggt tgtcgtcagc 1020
   tcgtgtcgtg agatgttggg ttaagtcccg caacgagcgc aaccctcgtt ctatgttgcc 1080
   agcacgtaat ggtgggaact catgggatac tgccagggtc aactcggagg aaggtgggga 1140
   tgacgtcaaa tcatcatgcc ccttatgtct tgggcttcac gcatgctaca atggccggta 1200
   caaagggctg caataccgcg aggtggagcg aatcccaaaa agccggtccc agttcggatt 1260
   gaggtctgca actcgacctc atgaagtcgg agtcgctagt aatcgcagat cagcaacgct 1320
   gcggtgaata cgttcccggg tcttgtacac accgcccgtc aagtcatgaa agtcggtaac 1380
   acctgaagcc ggtggcctaa cccttgtgga gggagccgtc gaaggtggga tcggtaatta 1440
   ggactaagtc gtaacaaggt agccgtaccg gaaggtgc 1478
<210> 52
   <211> 1322
   <212> RNA
   <213> Microbacterium_sp._AY038632.1
<400> 52
   ggcgtgctta acacatgcaa gtcgaacggt gaacacggag cttgctctgt gggatcagtg 60
   gcgaacgggt gagtaacacg cgagcaacct gcccctgact ctgggataag cgctggaaac 120
   ggcgtctaat actggatatg tgacgcgacc gcatggtctg tgtctggaaa gaatttcggt 180
   tggggatggg ctcgcggcct atcagcttgt tggtgaggta atggctcacc aaggcgtcga 240
   cgggtagccg gcctgaaagg gtgaccggcc acactgggac tgagacacgg cccagactcc 300
   tacgggaggc agcagtgggg aatattgcac aatgggcgca agcctgatgc agcaacgccg 360
   cgtgagggac gacggccttc gggttgtaaa cctcttttag cagggaagaa gcgaaagtga 420
   cggtacctgc agaaaaagcg ccggctaact acgtgccagc agccgcggta atacgtaggg 480
   cgcaagcgtt atccggaatt attgggcgta aagagctcgt aggcggtttg tcgcgtctgc 540
   tgtgaaatcc cgaggctcaa cctcgggcct gcagtgggta cgggcagact agagtgcggt 600
   aggggagatt ggaattcctg gtgtagcggt ggaatgcgca gatatcagga ggaacaccga 660
   tggcgaaggc agatctctgg gccgtaactg acgctgagga gcgaaagggt ggggagcaaa 720
   caggcttagg taccctggta gtccaccccg taaacgttgg gaactggttg tggggtccat 780
   tccacggatt ccgtgacgca gctaacgcat taagttcccc gcctggggag tacggccgca 840
   aggctaaaac tcaaaggaat tgacggggac ccgcacaagc ggcggagcat gcggattaat 900
   tcgatgcaac acgaagaacc ttaccaaggc ttgacatata cgagaacggg ccagaaatgg 960
   tcaactcttt ggacactcgt aaacaggtgg tgcatggttg tcgtcagctc gtgtcgtgag 1020
   atgttgggtt aagtcccgca acgagcgcaa ccctcgttct atgttgccag cacgtaatgg 1080
   tgggaactca tgggatactg ccggggtcaa ctcggaggaa ggtggggatg acgtcaaatc 1140
   atcatgcccc ttatgtcttg ggcttcacgc atgctacaat ggccggtaca aagggctgca 1200
   ataccgcgag gtggagcgaa tcccaaaaag ccggtcccag ttcggattga ggtctgcaac 1260
   tcgacctcat gaagtcggag tcgctagtaa tcgcagatca gcaacgctgc ggtgaatacg 1320
   tt 1322
<210> 53
   <211> 1354
   <212> RNA
   <213> Microbacterium_sp._AF388031.1
<400> 53
   tgcacgtcga acggtgaagc aggagcttgc tcttgtggat cagtggcgaa cgggtgagta      60
   acacgtgagc aacctgcccc ggactctggg ataagcgctg gaaacggcgt ctaatactgg     120
   atatgagacg tgaccgcatg gtcaacgttt ggaaagattt ttcggtctgg gatagggctc     180
   gcggcctatc agcttgttgg tgaggtaatg gctcatccaa ggcgttgacg ggtagccggc     240
   ctgagagggt gaccggccac actgggactg agacacggcc cagactccta cgggaggcag     300
   cagtggggaa tattgcacaa tgggcgaaag cctgatgcag caacgccgcg tgagggatga     360
   cggccttcgg gttgtaaacc tcttttagca gggaagaagc gagagtgacg gtacctgcag     420
   aaaaagcgcc ggctaactac gtgccagcag tcgcggtaat acgtagggcg caagcgttat     480
   ccggaattat tgggcgtaaa gagctcgtag gcggtctgtc gcgtctgctg tgaaatctgg     540
   aggctcaacc tccagcctgc agtgggtacg ggcagactag agtgcggtag gggagattgg     600
   aattcctggt gtagcggtgg aatgcgcaga tatcaggagg aacaccgatg gcgaaggcag     660
   atctctgggc cgtaactgac gctgaggagc gaaagggtgg ggagcaaaca ggcttagata     720
   ccctggtagt ccaccccgta aacgttggga actagttgtg gggtcctttc cacggattcc     780
   gtgacgcagc taacgcatta agttccccgc ctggggagta cggccgcaag gctaaaactc     840
   aaaggaattg acggggaccc gcacaagcgg cggagcatgc ggattaattc gatgcaacgc     900
   gaagaacctt accaaggctt gacatacacg atgaacgggc cagaaatggt caactctttg     960
   gacactcgtg aacaggtggt gcatggttgt cgtcagctcg tgtcgtgaga tgttgggtta    1020
   agtcccgcaa cgagcgcaac cctcgttcta tgttgccagc acgtaatggt gggaactcat    1080
   gggatactgc cggggtcaac tcggaggaag gtggggatga cgtcaaatca tcatgcccct    1140
   tatgtcttgg gcttcacgca tgctacaatg gccggtacaa agggctgcga taccgtaagg    1200
   tggagcgaat cccaaaaagc cggtcccagt tcggattgag gtctgcaact cgacctcatg    1260
   aagtcggagt cgctagtaat cgcagatcag caacgctgcg gtgaatacgt tcccgggtct    1320
   tgtacacacc gcccgtcaag tcatgaaagt cggt                                1354
<210> 54
   <211> 1322
   <212> RNA
   <213> Microbacterium_sp._AY038630.1
<400> 54
   ggcgtgctta acacatgcaa gtcgaacggt gaacacggag cttgctctgt gggatcagtg      60
   gcgaacgggt gagtaacacg tgagcaacct gcccctgact ctgggataag cgctggaaac     120
   ggcgtctaat actggatatg tgacgcgacc gcatggtctg tgtctggaaa gaatttcggt     180
   tggggatggg ctcgcggcct atcagcttgt tggtgaggta atggctcacc aaggcgtcga     240
   cgggtagccg gcctgagagg gtgaccggcc acactgggac tgagacacgg cccagactcc     300
   tacgggaggc agcagtgggg aatattgcac aatgggcgca agcctgatgc agcaacgccg     360
   cgtgagggac gacggccttc gggttgtaaa cctcttttag cagggaagaa gcgaaagtga     420
   cggtacctgc agaaaaagcg ccggctaact acgtgccagc agccgcggta atacgtaggg     480
   cgcaagcgtt atccggaatt attgggcgta aagagctcgt aggcggtttg tcgcgtctgc     540
   tgtgaaatcc cgaggctcaa cctcgggcct gcagtgggta cgggcagact agagtacggt     600
   aggggagatt ggaattcctg gtgtagcggt ggaatgcgca gatatcagga ggaacaccga     660
   tggcgaaggc agatctctgg gccgtaactg acgctgagga gcgaaagggt ggggagcaaa     720
   caggcttaga taccctggta gtccaccccg taaacgttgg gaactagttg tggggtccat     780
   tccacggatt ccgtgacgca gctaacgcat taagttcccc gcctggggag tacggccgca     840
   aggctaaaac tcaaaggaat tgacggggac ccgcacaagc ggcggagcat gcggattaat     900
   tcgatgcaac gcgaagaacc ttaccaaggc ttgacatata cgagaacggg ccagaaatgg     960
   tcaactcttt ggacactcgt aaacaggtgg tgcatggttg tcgtcagctc gtgtcgtgag    1020
   atgttgggtt aagtcccgca acgagcgcaa ccctcgttct atgttgccag cacgtaatgg    1080
   tgggaactca tgggatactg ccggggtcaa ctcggaggaa ggtggggatg acgtcaaatc    1140
   atcatgcccc ttatgtcttg ggcttcacgc atgctacaat ggccggtaca aagggctgca    1200
   ataccgcgag gtggagcgaa tcccaaaaag ccggtcccag ttcggattga ggtctgcaac    1260
   tcgacctcat gaagtcggag tcgctagtaa tcgtagatca gcaacgctgc ggtgaatacg    1320
   tt                                                                    1322
<210> 55
   <211> 1479
   <212> RNA
   <213> Microbacterium_sp._AJ575543.1
<400> 55
   agagtttgat catggctcag gacgaacgct ggcggcgtgc ttaacacatg caagtcgaac 60
   gatgaagctg gagcttgctc tctggatcag tggcgaacgg gtgagtaaca cgtgagcaat 120
   ctgcccctga ctctgggata acagctggaa acagctgcta ataccggata cgagttgcga 180
   aggcatcttc agcagctgga aagaatttcg gtcagggatg agctcgcggc ctatcagctt 240
   gttggtgagg taatggctca ccaaggcgtc gacgggtagc cggcctgaga gggtgaccgg 300
   ccacactggg actgagacac ggccctgact cctacgggag gcagcagtgg ggaatattgc 360
   acaatgggcg aaagcctgat gcagcaacgc cgcgtgaggg acgacggcct tcgggttgta 420
   aacctctttt agcaaggaag aagcgaaagt gacggtactt gcagaaaaag cgccggctaa 480
   ctacgtgcca gcagccgcgg taatacgtag ggcgcaagcg ttatccggaa ttattgggcg 540
   taaagagctc gtaggcggtt tgtcgcgtct gctgtgaaaa cccgaggctc aacctcgggc 600
   ctgcagtggg tacgggcaga ctagagtgcg gtaggggaga ttggaactcc tggtgtagcg 660
   gtggaatgcg cagatatcag gaagaacacc gatggcgaag gcagatctct gggccgtaac 720
   tgacgctgag gagcgaaagg gtggggagca aacaggctta gataccctgg tagtccaccc 780
   cgtaaacgtt gggaactagt tgtggggtcc attccacgga ttccgtgacg cagctaacgc 840
   attaagttcc ccgcctgggg agtacggccg caaggctaaa actcaaagga attgacgggg 900
   acccgcacaa gcggcggagc atgcggatta attcgatgca acgcgaagaa ccttaccaag 960
   gcttgacata tagaggaaac gtctggaaac agtcgccccg caaggtctct atacaggtgg 1020
   tgcatggttg tcgtcagctc gtgtcgtgag atgttgggtt aagtcccgca acgagcgcaa 1080
   ccctcgttct atgttgccag cacgtaatgg tgggaactca tgggatactg ccggggtcaa 1140
   ctcggaggaa ggtggggatg acgtcaaatc atcatgcccc ttatgtcttg ggcttcacgc 1200
   atgctacaat ggccggtaca aagggctgca ataccgtaag gtggagcgaa tcccaaaaag 1260
   ccggtcccag ttcggattga ggtctgcaac tcgacctcat gaagtcggag tcgctagtaa 1320
   tcgcagatca gcaacgctgc ggtgaatacg ttcccgggtc ttgtacacac cgcccgtcaa 1380
   gtcatgaaag tcggtaacac ctgaagccgg tggcccaacc cttgtggagg gagccgtcga 1440
   aggtgggatc ggtaattagg actaagtcgt aacaaggta 1479
<210> 56
   <211> 1402
   <212> RNA
   <213> Microbacterium aerolatum AJ309929.1
<400> 56
   aacacatgca agttgaacga tgaagcccag bttgctggtg gattagtggc gaacgggtga      60
   gtaacacgtg agcaacctgc ccctgactct tggataagcg ctggaaacgg cgtctaatac     120
   tggatacgag tagcgatcgc atggtcagtt actggaaaga ttttttagtt ggggatgggc     180
   tcgcagccta tcagcttgtt ggtgaggtaa tggctcacca aggcgtcgac gggtagccgg     240
   cctgagaggg tgaccggcca cactgggact gagacacggc ccagactcct acgggaggca     300
   gcagtgggga atattgcaca atgggcggaa gcctgatgca gcaacgccgc gtgadggatg     360
   acggccttcg ggttgtaaac ctcttttagc agggaagaag cgagagtgac ggtacctgca     420
   gaaaaagcgc cggctaacta cgtgccagca gccgcggtaa tacgtagggc gcaagcgtta     480
   tccggaatta ttgggcgtaa agagctcgta ggcggtttgt cgcgtctgct gtgaaatccc     540
   gaggctcaac ctcgggcctg cagtgggtac gggcagacta gagtgcggta ggggagattg     600
   gaattcctgg tgtagcggtg gaatgcgcag atatcaggag gaacaccgat ggcgaaggca     660
   gatctctggg ccgtaactga cgctgaggag cgaaagggtg gggagcaaac aggcttagat     720
   accctggtag tccaccccgt aaacgttggg aactagttgt ggggtccatt ccacggattc     780
   cgtgacgcag ctaacgcatt aagttccccg cctggggagt acggccgcaa ggctaaaact     840
   caaaggaatt gacggggacc cgcacaagcg gcggagcatg cggattaatt cgatgcaacg     900
   cgaagaacct taccaaggct tgacatatac gagaacgggc cagaaatggt caactctttg     960
   gacactcgta aacaggtggt gcatggttgt cgtcagctcg tgtcgtgaga tgttgggtta    1020
   agtcccgcaa cgagcgcaac cctcgttcta tgttgccagc acgtaatggt gggaactcat    1080
   gggatactgc cggggtcaac tcggaggaag gtggggatga cgtcaaatca tcatgcccct    1140
   tatgtcttgg gcttcacgca tgctacaatg gccggtacaa tgggcagcaa taccgtgagg    1200
   tggagcgaat cccaaaaagc cggtcccagt tcggattgag gtctgcaact cgacctcatg    1260
   aagtcggagt cgctagtaat cgcagatcag caacgctgcg gtgaatacgt tcccgggtct    1320
   tgtacacacc gcccgtcaag tcatgaaagt cggtaacacc tgaagccggt ggcctaaccc    1380
   cttgtgggag ggagctgtcg aa                                             1402
<210> 57
   <211> 1462
   <212> RNA
   <213> Microbacterium arabinogalactanolyticum Y17228.1
<400> 57
   tggcggcgtg cttaacacat gcaagtcgaa cgatgaagcc cagcttgctg ggtggattag 60
   tggcgaacgg gtgagtaaca cgtgagcaac ctgcccctga ctctgggata agcgctggaa 120
   acggcgtcta atactggata tgacccatca ccgcatggtg tgtgggtgga aagatttttc 180
   ggttggggat gggctcgcgg cctatcagct tgttggtgag gtaatggctc accaaggcga 240
   cgacgggtag ccggcctgag agggtgaccg gccacactgg gactgagaca cggcccagac 300
   tcctacggga ggcagcagtg gggaatattg cacaatgggc ggaagcctga tgcagcaacg 360
   ccgcgtgagg gatgacggcc ttcgggttgt aaacctcttt tagcagggaa gaagcgaaag 420
   tgacggtacc tgcagaaaaa gcaccggcta actacgtgcc agcagccgcg gtaatacgta 480
   gggtgcaagc gttatccgga attattgggc gtaaagagct cgtaggcggt ttgtcgcgtc 540
   tgctgtgaaa tcccgaggct caacttcggg cttgcagtgg gtacgggcag actagagtgc 600
   ggtaggggag attggaattc ctggtgtagc ggtggaatgc gcagatatca ggaggaacac 660
   cgatggcgaa ggcagatctc tgggccgtaa ctgacgctga ggagcgaaag ggtggggagc 720
   aaacaggctt agataccctg gtagtccacc ccgtaaacgt tgggaactag ttgtggggtc 780
   ctttccacgg attccgtgac gcagctaacg cattaagttc cccgcctggg gagtacggcc 840
   gcaaggctaa aactcaaagg aattgacggg gacccgcaca agcggcggag catgcggatt 900
   aattcgatgc aacgcgaaga accttaccaa ggcttgacat acacgagaac gggccagaaa 960
   tggtcaactc tttggacact cgtgaacagg tggtgcatgg ttgtcgtcag ctcgtgtcgt 1020
   gagatgttgg gttaagtccc gcaacgagcg caaccctcgt tctatgttgc cagcacgtaa 1080
   tggtgggaac tcatgggata ctgccggggt caactcggag gaaggtgggg atgacgtcaa 1140
   atcatcatgc cccttatgtc ttgggcttca cgcatgctac aatggccggt acaatgggct 1200
   gcgataccgt aaggtggagc gaatcccaaa aagccggtcc cagttcggat tgaggtctgc 1260
   aactcgacct catgaagtcg gagtcgctag taatcgcaga tcagcaacgc tgcggtgaat 1320
   acgttcccgg gtcttgtaca caccgcccgt caagtcatga aagtcggtaa cacctgaagc 1380
   cggtggccta acccttgtgg agggagccgt cgaaggtggg attggtaatt aggactaagt 1440
   cgtaacaagg tagccgtacc ga 1462
<210> 58
   <211> 1463
   <212> RNA
   <213> Microbacterium esteraromaticum Y17231.1
<400> 58
   tggcggcgtg cttaacacat gcaagtcgaa cgatgaagcc cagcttgctg ggtggattag 60
   tggcgaacgg gtgagtaaca cgtgagcaac ctgcccctga ctctgggata agcgctggaa 120
   acggcgtcta atactggata tgtcccgtca ccgcatggtg tgcgggtgga aagatttttc 180
   ggttggggat gggctcgcgg cctatcagct tgttggtgag gtaatggctc accaaggcgt 240
   cgacgggtag ccggcctgag agggtgaccg gccacactgg gactgagaca cggcccagac 300
   tcctacggga ggcagcagtg gggaatattg cacaatgggc ggaagcctga tgcagcaacg 360
   ccgcgtgagg gatgacggcc ttcgggttgt aaacctcttt tagcagggaa gaagcgaaag 420
   tgacggtacc tgcagaaaaa gcaccggcta actacgtgcc agcagccgcg gtaatacgta 480
   gggtgcaagc gttatccgga attattgggc gtaaagagct cgtaggcggt ctgtcgcgtc 540
   tgctgtgaaa ttccgaggct caacctcggg cttgcagtgg gtacgggcag actagagtgc 600
   ggtaggggag attggaattc ctggtgtagc ggtggaatgc gcagatatca ggaggaacac 660
   cgatggcgaa ggcagatctc tgggccgtaa ctgacgctga ggagcgaaag ggtggggagc 720
   aaacaggctt agataccctg gtagtccacc ccgtaaacgt tgggaactag ttgtggggtc 780
   ctttccacgg attccgtgac gcagctaacg cattaagttc cccgcctggg gagtacggcc 840
   gcaaggctaa aactcaaagg aattgacggg gacccgcaca agcggcggag catgcggatt 900
   aattcgatgc aacgcgaaga accttaccaa ggcttgacat acacgagaac gggccagaaa 960
   tggtcaactc tttggacact cgtgaacagg tggtgcatgg ttgtcgtcag ctcgtgtcgt 1020
   gagatgttgg gttaagtccc gcaacgagcg caaccctcgt tctatgttgc cagcacgtaa 1080
   tggtgggaac tcatgggata ctgccggggt caactcggag gaaggtgggg atgacgtcaa 1140
   atcatcatgc cccttatgtc ttgggcttca cgcatgctac aatggccggt acaatgggct 1200
   gcaataccgt aaggtggagc gaatcccaaa aagccggtcc cagttcggat tgaggtctgc 1260
   aactcgacct catgaagtcg gagtcgctag taatcgcaga tcagcaacgc tgcggtgaat 1320
   acgttcccgg gtcttgtaca caccgcccgt caagtcatga aagtcggtaa cacctgaagc 1380
   cggtggccta accccttgtg ggagggagct gtcgaaggtg ggatcggtaa ttaggactaa 1440
   gtcgtaacaa ggtagccgta ccg 1463
<210> 59
   <211> 1458
   <212> RNA
   <213> Microbacterium ginsengisoli AB271048.1
<400> 59
   tggctcagga tgaacgctgg cggcgtgctt aacacatgca agtcgaacgg tgaaagagag 60
   cttgctctct ggatcagtgg cgaacgggtg agtaacacgt gagcaatctg cccctgactc 120
   tgggataaca gctggaaaca gctgctaata ccggatacga gctgcgaagg catcttcagc 180
   agctggaaag aatttcggtc agggatgagc tcgcggccta tcagcttgtt ggtgaggtaa 240
   tggctcacca aggcgtcgac gggtagccgg cctgagaggg tgaccggcca cactgggact 300
   gagacacggc ccagactcct acgggaggca gcagtgggga atattgcaca atgggcgaaa 360
   gcctgatgca gcaacgccgc gtgagggacg acggccttcg ggttgtaaac ctcttttagc 420
   aaggaagaag cgaaagtgac ggtacttgca gaaaaagcgc cggctaacta cgtgccagca 480
   gccgcggtaa tacgtagggc gcaagcgtta tccggaatta ttgggcgtaa agagctcgta 540
   ggcggtttgt cgcgtctgct gtgaaaaccc gaggctcaac ctcgggcctg cagtgggtac 600
   gggcagacta gagtgcggta ggggagattg gaactcctgg tgtagcggtg gaatgcgcag 660
   atatcaggaa gaacaccgat ggcgaaggca gatctctggg ccgtaactga cgctgaggag 720
   cgaaagggtg gggagcaaac aggcttagat accctggtag tccaccccgt aaacgttggg 780
   aactagttgt ggggtccatt ccacggattc cgtgacgcag ctaacgcatt aagttccccg 840
   cctggggagt acggccgcaa ggctaaaact caaaggaatt gacggggacc cgcacaagcg 900
   gcggagcatg cggattaatt cgatgcaacg cgaagaacct taccaaggct tgacatatag 960
   aggaaacgtc tggaaacagt cgccccgcaa ggtctctata caggtggtgc atggttgtcg 1020
   tcagctcgtg tcgtgagatg ttgggttaag tcccgcaacg agcgcaaccc tcgttctatg 1080
   ttgccagcac gtaatggtgg gaactcatgg gatactgccg gggtcaactc ggaggaaggt 1140
   ggggatgacg tcaaatcatc atgcccctta tgtcttgggc ttcacgcatg ctacaatggc 1200
   cggtacaaag ggctgcaata ccgtaaggtg gagcgaatcc caaaaagccg gtcccagttc 1260
   ggattgaggt ctgcaactcg acctcatgaa gtcggagtcg ctagtaatcg cagatcagca 1320
   acgctgcggt gaatacgttc ccgggtcttg tacacaccgc ccgtcaagtc atgaaagtcg 1380
   gtaacacctg aagccggtgg cccaaccctt gtggagggag ccgtcgaagg tgggatcggt 1440
   aattaggact aagtcgta 1458
<210> 60
   <211> 1486
   <212> RNA
   <213> Microbacterium invictum AM949677.1
<400> 60
   ttgagtttgg attctggctc aggatgaacg ctggcggcgt gcttaacaca tgcaagtcga 60
   acggtgaaag cggagcttgc tctgctggat cagtggcgaa cgggtgagta acacgtgagc 120
   aacctgcccc ggactctggg ataacagttg gaaacagctg ctaataccgg atacgagctg 180
   cgaaggcatc ttcagcagct ggaaagaact tcggtctggg atgggctcac ggcctatcag     240
   ctagttggtg aggtaatggc tcaccaaggc gtcgacgggt agccggcctg agagggtgac     300
   cggccacact gggactgaga cacggcccag actcctacgg gaggcagcag tggggaatat     360
   tgcacaatgg gcgaaagcct gatgcagcaa cgccgcgtga gggacgacgg ccttcgggtt     420
   gtaaacctct tttagcaggg aagaagcgaa agtgacggta cctgcagaaa aagcaccggc     480
   taactacgtg ccagcagccg cggtaatacg tagggtgcaa gcgttatccg gaattattgg     540
   gcgtaaagag ctcgtaggcg gtttgtcgcg tctgctgtga aatctggggg ctcaaccccc     600
   agcctgcagt gggtacgggc agactagagt gcggtagggg agattggaat tcctggtgta     660
   gcggtggaat gcgcagatat caggaggaac accgatggcg aaggcagatc tctgggccgt     720
   aactgacgct gaggagcgaa agggtgggga gcaaacaggc ttagataccc tggtagtcca     780
   ccccgtaaac gttgggaact agttgtgggg tccattccac ggattccgtg acgcagctaa     840
   cgcattaagt tccccgcctg gggagtacgg ccgcaaggct aaaactcaaa ggaattgacg     900
   gggacccgca caagcggcgg agcatgcgga ttaattcgat gcaacgcgaa gaaccttacc     960
   aaggcttgac atatacgaga acgggccaga aatggtcaac tctttggaca ctcgtaaaca    1020
   ggtggtgcat ggttgtcgtc agctcgtgtc gtgagatgtt gggttaagtc ccgcaacgag    1080
   cgcaaccctc gttctatgtt gccagcacgt aatggtggga actcatggga tactgccggg    1140
   gtcaactcgg aggaaggtgg ggatgacgtc aaatcatcat gccccttatg tcttgggctt    1200
   cacgcatgct acaatggccg gtacaatggg ctgcaatacc gtaaggtgga gcgaatccca    1260
   aaaagccggt cccagttcgg attgaggtct gcaactcgac ctcatgaagt cggagtcgct    1320
   agtaatcgca gatcagcaac gctgcggtga atacgttccc gggtcttgta cacaccgccc    1380
   gtcaagtcat gaaagtcggt aacacctgaa gccggtggcc caacccttgt ggagggagcc    1440
   gtcgaaggtg ggatcggtaa ttaggactaa gtcgaaacaa ggtaaa                    1486
<210> 61
   <211> 1437
   <212> RNA
   <213> Microbacterium maritypicum AJ853910.1
<400> 61
   ggactttgag tttgatcctg gctcaggatg aacgctggcg gcgtgcttaa cacatgcaag      60
   tcgaacggtg aacacggagc ttgctctgtg ggatcagtgg cgaacgggtg agtaacacgt     120
   gagcaacctg cccctgactc tgggataagc gctggaaacg gcgtctaata ctggatatgt     180
   gacgtgaccg catggtctgc gtctggaaag aatttcggtt ggggatgggc tcgcggccta     240
   tcagcttgtt ggtgaggtaa tggctcacca aggcgtcgac gggtagccgg cctgagaggg     300
   tgaccggcca cactgggact gagacacggc ccagactcct acgggaggca gcagtgggga     360
   atattgcaca atgggcgcaa gcctgatgca gcaacgccgc gtgagggacg acggccttcg     420
   ggttgtaaac ctcttttagc agggaagaag cgaaagtgac ggtacctgca gaaaaagcgc     480
   cggctaacta cgtgccagca gccgcggtaa tacgtagggc gcaagcgtta tccggaatta     540
   ttgggcgtaa agagctcgta ggcggtttgt cgcgtctgct gtgaaatccg gaggctcaac     600
   ctccggcctg cagtgggtac gggcagacta gagtgcggta ggggagattg gaattcctgg     660
   tgtagcggtg gaatgcgcag atatcaggag gaacaccgat ggcgaaggca gatctctggg     720
   ccgtaactga cgctgaggag cgaaagggtg gggagcaaac aggcttagat accctggtag     780
   tccaccccgt aaacgttggg aactagttgt ggggtccatt ccacggattc cgtgacgcag     840
   ctaacgcatt aagttccccg cctggggagt acggccgcaa ggctaaaact caaaggaatt     900
   gacggggacc cgcacaagcg gcggagcatg cggattaatt cgatgcaacg cgaagaacct     960
   taccaaggct tgacatatac gagaacgggc cagaaatggt caactctttg gacactcgta    1020
   aacaggtggt gcatggtgtc tcagctcgtg tcgtgagatg ttgggttaag tcccgcaacg    1080
   agcgcaaccc tcgttctatg ttgccagcac gtaatggtgg gaactcatgg gatactgccg    1140
   gggtcaactc ggaggaaggt ggggatgacg tcaaatcatc atgcccctta tgtcttgggc    1200
   ttcacgcatg ctacaatggc cggtacaaag ggctgcaata ccgcgaggtg gagcgaatcc    1260
   caaaaagccg gtcccagttc ggattgaggt ctgcaactcg acctcatgaa gtcggagtcg    1320
   ctagtaatcg cagatcagca acgctgcggt gaatacgttc ccgggtcttg tacacaccgc    1380
   ccgtcaagtc atgaaagtcg gtaacacctg aagccggtgg cctaaccctt gtggagg       1437
<210> 62
   <211> 1429
   <212> RNA
   <213> Microbacterium natoriense AY566291.1
<400> 62
   ggcgatgcta acacatgcaa gtcgaacggt gaagcagagc ttgctctgtg gatcagtggc 60
   gaacgggtga gtaacacgtg agcaacctgc ccctgactct gggataagcg ctggaaacgg 120
   cgtctaatac tggatacgag caacggccgc atggccagtt gttggaaaga ttttttggtt 180
   ggggatgggc tcgcggccta tcagcttgtt ggtgaggtaa tggctcacca aggcgtcgac 240
   gggtagccgg cctgagaggg tgaccggcca cactgggact gagacacggc ccagactcct 300
   acgggaggca gcagtgggga atattgcaca atgggcggaa gcctgatgca gcaacgccgc 360
   gtgagggatg acggccttcg ggttgtaaac ctcttttagc agggaagaag cgaaagtgac 420
   ggtacctgca gaaaaagcgc cggctaacta cgtgccagca gccgcggtaa tacgtagggc 480
   gcaagcgtta tccggaatta ttgggcgtaa agagctcgta ggcggtttgt cgcgtctgct 540
   gtgaaatccc gaggctcaac ctcgggcctg cagtgggtac gggcagacta gagtgcggta 600
   ggggagattg gaattcctgg tgtagtcggt ggaatgcgca gatatcagga ggaacaccga 660
   tggcgaaggc agatctctgg gccgtaactg acgctgagga gcgaaagggt ggggagcaaa 720
   caggcttaga taccctggta gtccaccccg taaacgttgg gaactagttg tggggtccat 780
   tccacggatt ccgtgacgca gctaacgcat taagttcccc gcctggggag tacggccgca 840
   aggctaaaac tcaaaggaat tgacggggac ccgcacaagc ggcggagcat gcggattaat 900
   tcgatgcaac gcgaagaacc ttaccaaggc ttgacatata cgagaacggg ccagaaatgg 960
   tcaactcttt ggacactcgt aaacaggtcg tgcatggttg tcgtcagctc gtgtcgtgag 1020
   atatgttggg ttaagtcccg caacgagcgc aaccctcgtt ctatgttgcc agcacgtaat 1080
   ggtgggaact catgggatac tgccggggtc aactcggagg aaggtgggga tgacgtcaaa 1140
   tcatcatgcc ccttatgtct tgggcttcac gcatgctaca atggccggta caaagggctg 1200
   caataccgcg aggtggagcg aatcccaaaa agccggtccc agttcggatt gaggtctgca 1260
   actcgacctc atgaagtcgg agtcgctagt aatcgcagat cagcaacgct gcggtgaata 1320
   cgttcccggg tcttgtacac accgcccgtc aagtcatgaa agtcggtaac acctgaagcc 1380
   ggtggcctaa cccttgtgga gggagccgtc gaaggtggga tcggtaatt 1429
<210> 63
   <211> 1490
   <212> RNA
   <213> Microbacterium paraoxydans AJ491806.1
<400> 63
   tagagtttga tcctggctca ggatgaacgc tggcggcgtg cttaacacat gcaagtcgaa      60
   cggtgaacac ggagcttgct ctgtgggatc agtggcgaac gggtgagtaa cacgtgagca     120
   acctgcccct gactctggga taagcgctgg aaacggcgtc taatactgga tatgtgacgt     180
   gaccgcatgg tctgcgtttg gaaagatttt tcggttgggg aggggctcgc ggcctatcag     240
   cttgttggtg aggtaatggc tcaccaaggc gtcgacgggt agccggcctg agagggtgac     300
   cggccacact gggactgaga cacggcccag actcctacgg gaggcagcag tggggaatat     360
   tgcacaatgg gcgaaagcct gatgcagcaa cgccgcgtga gggatgacgg ccttcgggtt     420
   gtaaacctct tttagcaggg aagaagcgaa agtgacggta cctgcagaaa aagcgccggc     480
   taactacgtg ccagcagccg cggtaatacg tagggcgcaa gcgttatccg gaattattgg     540
   gcgtaaagag ctcgtaggcg gtttgtcgcg tctgctgtga aatcccgagg ctcaacctcg     600
   ggcctgcagt gggtacgggc agactagagt gcggtagggg agattggaat tcctggtgta     660
   gcggtggaat gcgcagatat caggaggaac accgatggcg aaggcagatc tctgggccgt     720
   aactgacgct gaggagcgaa agggtgggga gcaaacaggc ttagataccc tggtagtcca     780
   ccccgtaaac gttgggaact agttgtgggg tccattccac ggattccgtg acgcagctaa     840
   cgcattaagt tccccgcctg gggagtacgg ccgcaaggct aaaactcaaa ggaattgacg     900
   gggacccgca caagcggcgg agcatgcgga ttaattcgat gcaacgcgaa gaaccttacc     960
   aaggcttgac atatacgaga acgggccaga aatggtcaac tctttggaca ctcgtaaaca    1020
   ggtggtgcat ggttgtcgtc agctcgtgtc gtgagatgtt gggttaagtc ccgcaacgag    1080
   cgcaaccctc gttctatgtt gccagcacgt aatggtggga actcatggga tactgccggg    1140
   gtcaactcgg aggaaggtgg ggatgacgtc aaatcatcat gccccttatg tcttgggctt    1200
   cacgcatgct acaatggccg gtacaaaggg ctgcaatacc gtgaggtgga gcgaatccca    1260
   aaaagccggt cccagttcgg attgaggtct gcaactcgac ctcatgaagt cggagtcgct    1320
   agtaatcgca gatcagcaac gctgcggtga atacgttccc gggtcttgta cacaccgccc    1380
   gtcaagtcat gaaagtcggt aacacctgaa gccggtggcc taacccttgt ggagggagct    1440
   gtcgaaggtg ggatcggtaa ttaggactaa gtcgtaacaa ggtagccgta               1490
<210> 64
   <211> 1460
   <212> RNA
   <213> Microbacterium schleiferi Y17237.1
<400> 64
   tggcggcgtg cttaacacat gcaagtcgaa cggtgaagca gagcttgctc tgtggatcag      60
   tggcgaacgg gtgagtaaca cgtgagcaat ctgcccctga ctctgggata agcgctggaa     120
   acggcgtcta ataccggata cgagctgcga aggcatcttc agcagctgga aagaatttcg     180
   gtcagggatg agctcgcggc ctatcagctt gttggtgagg taacggctca ccaagccgtc     240
   gacgggtagc cggcctgaga gggtgaccgg ccacactggg actgagacac ggcccagact     300
   cctacgggag gcagcagtgg ggaatattgc acaatgggcg aaagcctgat gcagcaacgc     360
   cgcgtgaggg acgacggcct tcgggttgta aacctctttt agcaggaaag aagcgaaagt     420
   gacggtacct gcagaaaaag cgccggctaa ctacgtgcca gcagccgcgg taatacgtag     480
   ggcgcaagcg ttatccggaa ttattgggcg taaagagctc gtaggcggtc tgtcgcgtct     540
   gctgtgaaaa cccgaggctc aacctcgggc ctgcagtggg tacgggcaga ctagagtgcg     600
   gtaggggaga ttggaattcc tggtgtagcg gtggaatgcg cagatatcag gaggaacacc     660
   gatggcgaag gcagatctct gggccgtaac tgacgctgag gagcgaaagg gtggggagca     720
   aacaggctta gataccctgg tagtccaccc cgtaaacgtt gggaactagt tgtggggtcc     780
   attccacgga ttccgtgacg cagctaacgc attaagttcc ccgcctgggg agtacggccg     840
   caaggctaaa actcaaagga attgacgggg acccgcacaa gcggcggagc atgcggatta     900
   attcgatgca acgcgaagaa ccttaccaag gcttgacata tacgagaacg ggccagaaat     960
   ggtcaactct ttggacactc gtaaacaggt ggtgcatggt tgtcgtcagc tcgtgtcgtg    1020
   agatgttggg ttaagtcccg caacgagcgc aaccctcgtt ctatgttgcc agcacgtaat    1080
   ggtgggaact catgggatac tgccggggtc aactcggagg aaggtgggga tgacgtcaaa    1140
   tcatcatgcc ccttatgtct tgggcttcac gcatgctaca atggccggta caaagggctg    1200
   caataccgcg aggtggagcg aatcccaaaa agccggtccc agttcggatt gaggtctgca    1260
   actcgacctc atgaagtcgg agtcgctagt aatcgcagat cagcaacgct gcggtgaata    1320
   cgttcccggg tcttgtacac accgcccgtc aagtcatgaa agtcggtaac acctgaagcc    1380
   ggtggcccaa cccttgtgga gggagccgtc gaaggtgggg tcggtaatta ggactaagtc    1440
   gtaacaaggt agccgtaccg                                                1460
<210> 65
   <211> 1469
   <212> RNA
   <213> Microbacterium testaceum X77445.1
<400> 65
   gatgaacgct ggcggcgtgc ttaacacatg caagtcgaac ggtgaagcca agcttgcttg 60
   gtggatcagt ggcgaacggg tgagtaacac gtgagcaacc tgccctggac tctgggataa 120
   gcgctggaaa cggcgtctaa tactggatat gtgacgtgat cgcatggtcg tgtttggaaa 180
   gatttttcgg tctgggatgg gctcgcggcc tatcagcttg ttggtgaggt aatggctcac 240
   caaggcgtcg acgggtagcc ggcctgagag ggtgaccggc cacactggga ctgagacacg 300
   gcccagactc ctacgggagg cagcagtggg gaatattgca caatgggcgg aagcctgatg 360
   cagcaacgcc gcgtgaggga tgacggcctt cgggttgtaa acctctttta gcagggaaga 420
   agcgaaagtg acggtacctg cagaaaaagc gccggctaac tacgtgccag cagccgcggt 480
   aatacgtagg gcgcaagcgt tatccggaat tattgggcgt aaagagctcg taggcggttt 540
   gtcgcgtctg ctgtgaaatc ccgaggctca acctcgggcc tgcagtgggt acgggcagac 600
   tagagtgcgg taggggagat tggaattcct ggtgtagcgg tggaatgcgc agatatcagg 660
   aggaacaccg atggcgaagg cagatctctg ggccgtaact gacgctgagg agcgaaaggg 720
   tggggagcaa acaggcttag ataccctggt agtccacccc gtaaacgttg ggaactagtt 780
   gtggggacca ttccacggtt tccgtgacgc agctaacgca ttaagttccc cgcctgggga 840
   gtacggccgc aaggctaaaa ctcaaaggaa ttgacgggga cccgcacaag cggcggagca 900
   tgcggattaa ttcgatgcaa cgcgaagaac cttaccaagg cttgacatat acgagaacgg 960
   gccagaaatg gtcaactctt tggacactcg taaacaggtg gtgcatggtt gtcgtcagct 1020
   cgtgtcgtga gatgttgggt taagtcccgc aacgagcgca accctcgttc tatgttgcca 1080
   gcacgtaatg gtgggaactc atgggatact gccggggtca actcggagga aggtggggat 1140
   gacgtcaaat catcatgccc cttatgtctt gggcttcacg catgctacaa tggccggtac 1200
   aaagggctgc aataccgtga ggtggagcga atcccaaaaa gccggtccca gttcggattg 1260
   aggtctgcaa ctcgacctca tgaagtcgga gtcgctagta atcgcagatc agcaacgctg 1320
   cggtgaatac gttcccgggt cttgtacaca ccgcccgtca agtcatgaaa gtcggtaaca 1380
   cctgaagccg gtggcccaac ccttgtggag ggagccgtcg aaggtgggat cggtaattag 1440
   gactaagtcg taacaaggta gccgtaccg 1469
<210> 66
   <211> 56
   <212> RNA
   <213> Microbacterium
<220>
   <223> X1 string
<400> 66
   agcaacctgc ccctgactct gggataagcg ctggaaacgg cgtctaatac tggata 56
<210> 67
   <211> 56
   <212> RNA
   <213> Microbacterium
<220>
   <223> analysis string in description
<400> 67
   agcaacctgc ccctgactct tggataagcg ctggaaacgg cgtctaatac tggata 56
<210> 68
   <211> 56
   <212> RNA
   <213> Microbacterium
<220>
   <223> analysis string defined in description
<400> 68
   agcaacctgc cccggactct gggataacag ctggaaacag ctgctaatac cggata 56
<210> 69
   <211> 56
   <212> RNA
   <213> Microbacterium
<220>
   <223> analysis string defined in the description
<400> 69
   agcaacctgc cccggactct gggataacag ttggaaacag ctgctaatac cggata 56
<210> 70
   <211> 56
   <212> RNA
   <213> Microbacterium
<220>
   <223> analysis string defined in the description
<400> 70
   agcaatctgc ccctgactct gggataacag ttggaaacag ctgctaatac cggata 56
<210> 71
   <211> 56
   <212> RNA
   <213> Microbacterium
<220>
   <223> analysis string defined in description
<400> 71
   agcaatctgc ccctgactct gggataacag ctggaaacag ctgctaatac cggata 56
<210> 72
   <211> 36
   <212> RNA
   <213> Microbacterium
<220>
   <223> analysis string defined in the description
<400> 72
   ggatcagtgg cgaacgggtg agtaacacgt gagcaa 36
<210> 73
   <211> 36
   <212> RNA
   <213> Microbacterium
<220>
   <223> analysis string defined in description
<400> 73
   agatcagtgg cgaacgggtg agtaacacgt gagcaa 36
<210> 74
   <211> 36
   <212> RNA
   <213> Microbacterium
<220>
   <223> analysis string defined in description
<400> 74
   ggattagtgg cgaacgggtg agtaacacgt gagcaa 36
<210> 75
   <211> 28
   <212> RNA
   <213> Microbacterium
<220>
   <223> analysis string defined in description
<400> 75
   ccagaaatgg tcaactcttt ggacactc 28
<210> 76
   <211> 24
   <212> RNA
   <213> Microbacterium
<220>
   <223> analysis string defined in description
<400> 76
   ccagaacggg tgagtaacac gtga 24
<210> 77
   <211> 35
   <212> RNA
   <213> Microbacterium
<220>
   <223> analysis string defined in description
<400> 77
   gggccagaaa tggtcaactc tttggacact cgtaa 35
<210> 78
   <211> 35
   <212> RNA
   <213> Microbacterium
<220>
   <223> analysis string defined in description
<400> 78
   gggccagaaa tggtcaactc tttggacact cgtga 35
<210> 79
   <211> 28
   <212> RNA
   <213> Microbacterium
<220>
   <223> analysis string defined in description
<400> 79
   ccagaacggg tgagtaacac gtgagtaa 28
<210> 80
   <211> 59
   <212> RNA
   <213> Microbacterium
<220>
   <223> analysis string defined in the description
<400> 80
   agcaacctgc ccctgactct gggataagcg ctggaaacgg cgtctaatac tggatacga 59
<210> 81
   <211> 59
   <212> RNA
   <213> Microbacterium
<220>
   <223> analysis string defined in description
<400> 81
   agcaacctgc ccctgactct gggataagcg ctggaaacgg cgtctaatac tggatatgt 59
<210> 82
   <211> 59
   <212> RNA
   <213> Microbacterium
<220>
   <223> analysis string defined in the description
<400> 82
   agcaacctgc ccctgactct tggataagcg ctggaaacgg cgtctaatac tggatacga 59
<210> 83
   <211> 59
   <212> RNA
   <213> Microbacterium
<220>
   <223> analysis string defined in the description
<400> 83
   agcaacctgc cccggactct gggataacag ctggaaacag ctgctaatac cggatacga 59
<210> 84
   <211> 59
   <212> RNA
   <213> Microbacterium
<220>
   <223> analysis string defined in the description
<400> 84
   agcaacctgc cccggactct gggataacag ttggaaacag ctgctaatac cggatacga 59
<210> 85
   <211> 59
   <212> RNA
   <213> Microbacterium
<220>
   <223> analysis string defined in the description
<400> 85
   agcaatctgc ccctgactct gggataacag ttggaaacag ctgctaatac cggatacga 59
<210> 86
   <211> 59
   <212> RNA
   <213> Microbacterium
<220>
   <223> analysis string defined in the description
<400> 86
   agcaatctgc ccctgactct gggataacag ctggaaacag ctgctaatac cggatacga 59
<210> 87
   <211> 43
   <212> RNA
   <213> Microbacterium
<220>
   <223> analysis string defined in the description
<400> 87
   tgtgggatca gtggcgaacg ggtgagtaac acgtgagcaa cct 43
<210> 88
   <211> 43
   <212> RNA
   <213> Microbacterium
<220>
   <223> analysis string defined in the description
<400> 88
   gggtggatca gtggcgaacg ggtgagtaac acgtgagcaa cct 43
<210> 89
   <211> 43
   <212> RNA
   <213> Microbacterium
<220>
   <223> analysis string defined in the description
<400> 89
   tgggggatca gtggcgaacg ggtgagtaac acgtgagcaa cct 43
<210> 90
   <211> 43
   <212> RNA
   <213> Microbacterium
<220>
   <223> analysis string defined in the description
<400> 90
   ctgtggatca gtggcgaacg ggtgagtaac acgtgagcaa cct 43
<210> 91
   <211> 43
   <212> RNA
   <213> Microbacterium
<220>
   <223> analysis string defined in the description
<400> 91
   tggtggatca gtggcgaacg ggtgagtaac acgtgagcaa cct 43
<210> 92
   <211> 43
   <212> RNA
   <213> Microbacterium
<220>
   <223> analysis string defined in description
<400> 92
   tcctggatca gtggcgaacg ggtgagtaac acgtgagcaa cct 43
<210> 93
   <211> 43
   <212> RNA
   <213> Microbacterium
<220>
   <223> analysis string defined in description
<400> 93
   gggtggatca gtggcgaacg ggtgagtaac acgtgagcaa cct 43
<210> 94
   <211> 43
   <212> RNA
   <213> Microbacterium
<220>
   <223> analysis string defined in the description
<400> 94
   cgctggatca gtggcgaacg ggtgagtaac acgtgagcaa tct 43
<210> 95
   <211> 43
   <212> RNA
   <213> Microbacterium
<220>
   <223> analysis string defined in description
<400> 95
   ctctggatca gtggcgaacg ggtgagtaac acgtgagcaa tct 43
<210> 96
   <211> 43
   <212> RNA
   <213> Microbacterium
<220>
   <223> analysis string defined in description
<400> 96
   ctctagatca gtggcgaacg ggtgagtaac acgtgagcaa tct 43
<210> 97
   <211> 43
   <212> RNA
   <213> Microbacterium
<220>
   <223> analysis string defined in description
<400> 97
   caccggatca gtggcgaacg ggtgagtaac acgtgagcaa cct 43
<210> 98
   <211> 43
   <212> RNA
   <213> Microbacterium
<220>
   <223> analysis string defined in description
<400> 98
   caccggatca gtggcgaacg ggtgagtaac acgtgagcaa cct 43
<210> 99
   <211> 43
   <212> RNA
   <213> Microbacterium
<220>
   <223> analysis string defined in the description
<400> 99
   ctctggatca gtggcgaacg ggtgagtaac acgtgagcaa cct 43
<210> 100
   <211> 43
   <212> RNA
   <213> Microbacterium
<220>
   <223> analysis string defined in the description
<400> 100
   ctctggatca gtggcgaacg ggtgagtaac acgtgagcaa tct 43
<210> 101
   <211> 43
   <212> RNA
   <213> Microbacterium
<220>
   <223> analysis string defined in the description
<400> 101
   tgctggatca gtggcgaacg ggtgagtaac acgtgagcaa cct 43
<210> 102
   <211> 43
   <212> RNA
   <213> Microbacterium
<220>
   <223> analysis string defined in the description
<400> 102
   ctttggatca gtggcgaacg ggtgagtaac acgtgagcaa tct 43
<210> 103
   <211> 35
   <212> RNA
   <213> Microbacterium
<220>
   <223> defined in description, found in organisms of table 4
<400> 103
   actctgggat aagcgctgga aacggcgtct aatac 35
<210> 104
   <211> 13
   <212> RNA
   <213> Microbacterium
<220>
   <223> string found in organisms listing in table 4 in description
<400> 104
   tggaaagatt ttt 13
<210> 105
   <211> 11
   <212> RNA
   <213> Microbacterium
<220>
   <223> string found in organisms listed in table 4 of description
<400> 105
   gggatgggct c 11
<210> 106
   <211> 144
   <212> RNA
   <213> Microbacterium
<220>
   <223> string found in organisms listed in table 4 of description
<400> 106
   cggcctatca gcttgttggt gaggtaatgg ctcaccaagg cgtcgacggg tagccggcct 60
   gagagggtga ccggccacac tgggactgag acacggccca gactcctacg ggaggcagca 120
   gtggggaata ttgcacaatg ggcg 144
<210> 107
   <211> 74
   <212> RNA
   <213> Microbacterium
<220>
   <223> string found in organisms listed in table 4 of description
<400> 107
   aagcctgatg cagcaacgcc gcgtgaggga tgacggcctt cgggttgtaa acctctttta 60
   gcagggaaga agcg 74
<210> 108
   <211> 24
   <212> RNA
   <213> Microbacterium
<220>
   <223> string found in organisms listed in table 4 of description
<400> 108
   agtgacggta cctgcagaaa aagc 24
<210> 109
   <211> 40
   <212> RNA
   <213> Microbacterium
<220>
   <223> string found in organisms listed in table 4 of description
<400> 109
   ccggctaact acgtgccagc agccgcggta atacgtaggg 40
<210> 110
   <211> 46
   <212> RNA
   <213> Microbacterium
<220>
   <223> string found in organism listed in table 4 of description
<400> 110
   gcaagcgtta tccggaatta ttgggcgtaa agagctcgta ggcggt 46
<210> 111
   <211> 20
   <212> RNA
   <213> Microbacterium
<220>
   <223> string found in organism listed in table 4 of the description
<400> 111
   tgtcgcgtct gctgtgaaat 20
<210> 112
   <211> 18
   <212> RNA
   <213> Microbacterium
<220>
   <223> string found in organisms listed in table 4 of application
<400> 112
   ccgaggctca acctcggg 18
<210> 113
   <211> 116
   <212> RNA
   <213> Microbacterium
<220>
   <223> string found in organism listed in table 4 of description
<400> 113
   tgcagtgggt acgggcagac tagagtgcgg taggggagat tggaattcct ggtgtagcgg 60
   tggaatgcgc agatatcagg aggaacaccg atggcgaagg cagatctctg ggccgt 116
<210> 114
   <211> 92
   <212> RNA
   <213> Microbacterium
<220>
   <223> string found in organism listed in table 4 of description
<400> 114
   actgacgctg aggagcgaaa gggtggggag caaacaggct tagataccct ggtagtccac 60
   cccgtaaacg ttgggaacta gttgtggggt cc 92
<210> 115
   <211> 83
   <212> RNA
   <213> Microbacterium
<220>
   <223> string found in organisms listed in table 4 of description
<400> 115
   ttccacggat tccgtgacgc agctaacgca ttaagttccc cgcctgggga gtacggccgc 60
   aaggctaaaa ctcaaaggaa ttg 83